# EUROPÄISCHE PATENTSCHRIFT

(11) **EP 2 247 866 B1**
(45) Veröffentlichungstag und Bekanntmachung des Hinweises auf die Patenterteilung: **18.12.2013**
(21) Anmeldenummer: 08873147.6
(22) Anmeldetag: 22.10.2008
(51) Int. Cl.: F16D 21/06, F16D 23/12

(54) **BETÄTIGUNGSEINRICHTUNG FÜR EINE REIBUNGSKUPPLUNGSEINRICHTUNG UND VON DIESEN GEBILDETE DREHMOMENTÜBERTRAGUNGSEINRICHTUNG**
ACTUATING DEVICE FOR A FRICTION CLUTCH DEVICE AND TORQUE TRANSMISSION DEVICE FORMED BY THE SAME
DISPOSITIF DE MAN UVRE D'UN DISPOSITIF D'EMBRAYAGE À FRICTION, ET DISPOSITIF DE TRANSMISSION DE COUPLE FORMÉ PAR CES DERNIERS

(30) Priorität: 06.03.2008 DE 102008012894
(43) Veröffentlichungstag der Anmeldung: 10.11.2010
(73) Patentinhaber: ZF Friedrichshafen AG, 88038 Friedrichshafen (DE)
(72) Erfinder: FENN, Peter, 97534 Waigolshausen (DE); RATTE, Andreas, 97456 Dittelbrunn-Hambach (DE); REUTER, Klaus, 97723 Oberthulba (DE); STEINFELDT, Ralf, 97450 Arnstein (DE); REISCH, Matthias, 88214 Ravensburg (DE); WAFZIG, Jürgen, 88097 Eriskirch (DE)
(86) Internationale Anmeldenummer: PCT/EP2008/064267
(87) Internationale Veröffentlichungsnummer: WO 2009/109242

(56) Entgegenhaltungen:
- DE-A1- 10 238 118
- DE-A1- 19 851 466
- DE-A1-102005 048 737
- DE-A1-102006 010 248

## Beschreibung

### Technisches Gebiet

Die vorliegende Erfindung betrifft nach einem Aspekt allgemein eine Drehmomentübertragungseinrichtung zur Drehmomentübertragung in einem Antriebsstrang eines Kraftfahrzeugs zwischen einer Antriebseinheit und einem Getriebe, umfassend:
- eine Reibungskupplungseinrichtung, umfassend wenigstens eine wahlweise zum Einrücken und Ausrücken betätigbare Reibungskupplungsanordnung;
- eine Betätigungseinrichtung, zum Einleiten von Betätigungskräften, insbesondere Einrück- oder Ausrückkräften, in die Reibungskupplungseinrichtung, um wenigstens eine Reibungskupplungsanordnung der Reibungskupplungseinrichtung im Einrück- oder Ausrücksinn zu betätigen, wobei die Betätigungseinrichtung umfasst:
   -- wenigstens ein der oder einer Reibungskupplungsanordnung zugeordnetes, axial verstellbares Betätigungsglied und wenigstens ein dem Betätigungsglied zugeordnetes, im Wesentlichen axial feststehendes Stützglied, wobei das Betätigungsglied zur Betätigung der zugeordneten Reibungskupplungsanordnung auf Basis einer einem Drehglied der Betätigungseinrichtung erteilten Drehbewegung in eine axiale Translationsbewegung versetzbar ist, wobei als Drehglied das Betätigungsglied oder das Stützglied dient oder ein gegenüber dem Betätigungsglied und dem Stützglied gesondertes, mit diesen zusammenwirkendes Drehglied vorgesehen ist,
   -- wenigstens einen dem Drehglied und der Reibungskupplungsanordnung zugeordneten Aktuator, mittels dem erste Drehkräfte auf das Drehglied ausübbar sind, um die Reibungskupplungsanordnung zu betätigen.

### Stand der Technik

Aus der DE 10 2005 048 737 A1 ist eine Betätigungseinrichtung für eine derartige Drehmomentübertragungseinrichtung bekannt, die zur Betätigung einer Doppel-Reibungskupplungseinrichtung vorgesehen ist, welche eine erste Reibungskupplungsanordnung aufweist, der ein erstes Betätigungsglied der Betätigungseinrichtung zugeordnet ist, und eine zweite Reibungskupplungsanordnung aufweist, der ein zweites Betätigungsglied der Betätigungseinrichtung zugeordnet ist. Eine Besonderheit der bekannten Betätigungseinrichtung ist, dass die beiden Reibungskupplungsanordnungen nicht unabhängig voneinander betätigbar sind, da beide Betätigungsglieder gegenläufig mittels eines gegenüber den Betätigungsgliedern und dem Stützglied gesonderten Drehglieds axial verstellt werden. Zwischen dem Drehglied und dem Stützglied wirken zwei als Druckfedern ausgeführte Kompensationsfedern, die zusammen mit Betätigungs-Gegenkräften bzw. Rückstellkräften von Seiten der Reibungskupplungseinrichtung, genauer der jeweiligen Reibungskupplungsanordnung, auf das jeweilige Betätigungsglied sich je nach Drehwinkel teilweise oder vollständig kompensieren, so dass in einem mittleren Drehwinkelbereich des Drehverstellbereichs des in der Veröffentlichung als Koppelglied und Antriebsglied bezeichneten Drehglieds eine resultierende Drehkraft auf das Drehglied verschwindet und in der Richtung zu den Grenzwinkeln des Drehverstellbereichs betragsmäßig zunimmt und in Richtung einer Annäherung an den Grenzwinkel wirkt. Zentrales Merkmal dieser speziellen Konstruktion ist die zumindest teilweise gegenseitige Kompensation einerseits der Betätigungs-Gegenkräfte bzw. Rückstellkräfte von der einen Reibungskupplungsanordnung und andererseits der Betätigungs-Gegenkräfte bzw. Rückstellkräfte von der anderen Reibungskupplungsanordnung.

Aus der DE 10 2006 010 248 A1 ist es als solches bekannt, einem Kupplungssystem des "Normalerweise-Offen"-Typs ("normally opened" oder NO) durch Verwendung eines Segmentzahnrads mit einem Stößel in einer Übertotpunktkonfiguration den Charakter eines Kupplungssystems des "Normalerweise-Geschlossen"-Typs ("normally closed" oder NC) zu geben. Zur Unterstützung eines als Elektromotor ausgeführten, auf das Segmentzahnrad wirkenden Aktuators ist an dem Zahnradsegment eine als Druckfehler ausgeführte Kompensationsfeder angelenkt, die während des Einrückvorganges in einer einem Einrücken der Kupplungseinrichtung entsprechenden Drehrichtung wirkt. Das Segmentzahnrad weist mindestens zwei Anschläge auf, mit korrespondierenden Anschlägen eines stationären Gehäuses der Betätigungsvorrichtung, wobei der eine Anschlag einer vollständig ausgerückten Kupplungseinrichtung entspricht und der andere Anschlag einer im Wesentlichen vollständig eingerückten Kupplungseinrichtung entspricht. Aufgrund einer Übertotpunktkonfiguration hält die Kompensationsfeder im ausgerückten Zustand der Kupplungseinrichtung die Anordnung in einem stabilen Zustand, bei dem der eine Segmentzahnradanschlag am zugeordneten Anschlag des Gehäuses anliegt. Die Möglichkeit, zwei Betätigungsvorrichtungen in Zuordnung zu einer Doppelkupplungseinrichtung vorzusehen, um zwei Kupplungsanordnungen unabhängig voneinander zu betätigen, ist erwähnt.

Verschiedene Ausgestaltungen von Spindel-Betätigungseinrichtungen für Doppelkupplungen sind aus der DE 102 38 118 A1, EP 1 400 716 A1, DE 10 2004 001 569 A1, DE 103 13 450 A1 und DE 103 48 312 A1 bekannt. Die DE 198 51 466 A1 offenbart ein Stellglied mit einem mittels eines Aktuators verdrehbaren Zahnradsegment, auf welches eine Unterstützungsfeder wirkt zur Unterstützung des Aktuators. Spezialität der vorgeschlagenen Konstruktion ist eine wahlweise Änderbarkeit eines Vorspannzustands der Unterstützungsfeder.

Bekannt sind trockene NO-Doppelkupplungen, bei denen die Betätigung über elektromotorisch angetriebene Ausrückhebel erfolgt, mit Betätigung der jeweiligen Kupplung über einen Rampen- bzw. Wippenmechanismus. Die Kupplungseinrichtung und die Betätigungseinrichtung sind gesonderte, voneinander getrennte Baueinheiten.

Ein Problem bei bisher praktizierten Lösungen ist, dass zusätzliche Bauteile zum Ausgleich von Montagetoleranzen notwendig sind, wodurch die Konstruktion teuerer und komplizierter und damit anfälliger für Fehlfunktionen wird.

Für NO-Kupplungen wurden selbsthemmende Betätigungsmechanismen (mit schlechtem Wirkungsgrad) oder zusätzliche Verriegelungselemente (mit entsprechenden Kosten) vorgeschlagen. Zur Erzeugung einer permanenten Vorlast auf ein Betätigungsglied bzw. ein Ausrücklager eines als Ausrücker dienenden Betätigungsglieds oder ein Einrücklager eines als Einrücker dienenden Betätigungsglieds sind nach herkömmlichen Ansätzen zusätzliche Federn notwendig.

Ein weiterer Nachteil herkömmlicher Ansätze ist, dass für Kupplungen, ggf. Doppelkupplungen, des NO-Typs und Kupplungen, ggf. Doppelkupplungen, des NC-Typs jeweils andersartige Betätigungseinrichtungen vorgesehen sind und dementsprechend von einem beide Kupplungstypen anbietenden Hersteller im Detail konstruiert und angepasst und vorgehalten werden müssen.

### Darstellung der Erfindung

Der Erfindung liegt unter anderem die Aufgabe zugrunde, eine Verbesserung zumindest im Hinblick auf einen der angesprochenen Gesichtspunkte zu erreichen.

Eine weitere Aufgabe der Erfindung ist, eine hinsichtlich des Stützglieds und des Betätigungsglieds und ggf. des Drehglieds einfach herstellbare und kostengünstig herstellbare Lösung zu finden oder/und den von diesen Gliedern eingenommenen radialen Bauraum zu verkleinern.

Konkrete, voneinander unabhängige Aufgaben der Erfindung sind ferner: eine leichte Einstellbarkeit einer Vorlast auf ein Ausrück- oder Einrücklager, eine leichte Einstellbarkeit eines Übertotpunktwinkels für eine Kompensationsfeder, das Vorsehen einer zweckmäßigen Drehverstellbereichbegrenzung bzw. Axialverstellbereichsbegrenzung für das Betätigungsglied bzw. das Drehglied und die Reduzierung des eingenommenen Gesamt-Bauraums. Weitere Aufgabenstellungen ergeben sich aus den vorgeschlagenen allgemeinen und weiterer konkretisierten Lösungen.

Nach einem ersten Aspekt stellt die Erfindung bereit eine Drehmomentübertragungseinrichtung zur Drehmomentübertragung in einem Antriebsstrang eines Kraftfahrzeugs zwischen einer Antriebseinheit und einem Getriebe, umfassend:
- eine Reibungskupplungseinrichtung, umfassend wenigstens eine wahlweise zum Einrücken und Ausrücken betätigbare Reibungskupplungsanordnung;
- eine Betätigungseinrichtung, zum Einleiten von Betätigungskräften, insbesondere Einrück- oder Ausrückkräften, in die Reibungskupplungseinrichtung, um wenigstens eine Reibungskupplungsanordnung der Reibungskupplungseinrichtung im Einrück- oder Ausrücksinn zu betätigen, wobei die Betätigungseinrichtung umfasst:
   -- wenigstens ein der oder einer Reibungskupplungsanordnung zugeordnetes, axial verstellbares Betätigungsglied und wenigstens ein dem Betätigungsglied zugeordnetes, im Wesentlichen axial feststehendes Stützglied, wobei zur Betätigung der zugeordneten Reibungskupplungsanordnung das Betätigungsglied auf Basis einer einem Drehglied der Betätigungseinrichtung erteilten Drehbewegung in eine axiale Translationsbewegung versetzbar ist oder/und vermittels auf das Drehglied ausgeübter Drehkräfte auf das Betätigungsglied axiale Kräfte ausübbar sind, wobei als Drehglied das Betätigungsglied oder das Stützglied dient oder ein gegenüber dem Betätigungsglied und dem Stützglied gesondertes, mit diesen zusammenwirkendes Drehglied vorgesehen ist,
   -- wenigstens einen dem Drehglied und der Reibungskupplungsanordnung zugeordneten Aktuator, mittels dem erste Drehkräfte auf das Drehglied ausübbar sind, um die Reibungskupplungsanordnung zu betätigen,
   -- wenigstens eine Kompensationsfeder, die einerseits an dem Drehglied und andererseits an einem Ausleger eines Körpers der Betätigungseinrichtung derart angelenkt ist, dass auf einer Spannung der Kompensationsfeder beruhende zweite Drehkräfte auf das Drehglied ausübbar sind.

Erfindungsgemäß wird vorgeschlagen, dass
a) die Reibungskupplungsanordnung vom Normalerweise-Offen-Typ (NO) ist und auf Basis der Spannung der Kompensationsfeder eine solche zweite Drehkraft auf das Drehglied ausübbar ist, dass eine ohne die Wirkung einer ersten Drehkraft resultierende, vermittels des Betätigungsglieds in die Reibungskupplungseinrichtung eingeleitete Betätigungskraft die Reibungskupplung im eingerückten Zustand (NC) hält,
   oder
b) die Reibungskupplungsanordnung vom Normalerweise-Geschlossen-Typ (NC) ist und auf Basis der Spannung der Kompensationsfeder eine solche zweite Drehkraft auf das Drehglied ausübbar ist, dass eine ohne die Wirkung einer ersten Drehkraft resultierende, vermittels des Betätigungsglieds in die Reibungskupplungseinrichtung eingeleitete Betätigungskraft die Reibungskupplung im ausgerückten Zustand (NO) hält.

Nach dem Erfindungsvorschlag ist es im Prinzip möglich, eine Reibungskupplungseinrichtung des Normalerweise-Offen-Typs und eine Reibungskupplungseinrichtung des Normalerweise-Geschlossen-Typs mittels einer Betätigungseinrichtung identischen Aufbaus, ggf. sogar einer baugleichen Betätigungseinrichtung zu betätigen. Das Gesamtsystem, also die Drehmomentübertragungseinrichtung, wird durch eine Überkompensation von NO-System zum NC-System oder vom NC-System zum NO-System. Durch die Überkompensation durch die wenigstens eine Kompensationsfeder bedarf es keines selbsthemmenden Getriebes und auch keinen zusätzlichen Verriegelungsmechanismus, um den Aktuator der Betätigungseinrichtung zu entlasten. Die wenigstens eine Reibungskupplungsanordnung der Reibungskupplungseinrichtung kann vom nasslaufenden oder feuchtlaufenden oder auch vom trockenlaufenden Typ sein, unabhängig davon, ob eine Überkompensation von NO zu NC oder von NC zu NO vorgesehen ist.

Verschiedene Weiterbildungsvorschläge beziehen sich auf die eingangs angesprochene Drehmomentübertragungseinrichtung, bei der die Betätigungseinrichtung ferner wenigstens eine Kompensationsfeder umfasst, die einerseits an dem Drehglied und andererseits an einem Ausleger eines Körpers der Betätigungseinrichtung derart angelenkt ist, dass auf einer Spannung der Kompensationsfeder beruhende zweite Drehkräfte auf das Drehglied ausübbar sind.

Weiterbildend wird vorgeschlagen, dass die Kompensationsfeder derart einerseits an dem Drehglied und andererseits an dem Ausleger angelenkt ist, dass in einem ersten Drehstellungsbereich des Drehglieds die zweiten Drehkräfte in einer ersten Drehrichtung und in einem zweiten Drehstellungsbereich des Drehglieds in einer zur ersten Drehrichtung entgegengesetzten zweiten Drehrichtung auf das Drehglied wirken. Es kann also eine Übertotpunktkonfiguration für die Kompensationsfeder vorgesehen sein.

Nach einer bevorzugten Ausgestaltung ist vorgesehen, dass der erste Drehstellungsbereich eine Einrück-Drehstellung des Drehglieds umfasst, in der die zugeordnete Reibungskupplungsanordnung eingerückt ist, und der zweite Drehstellungsbereich eine Ausrück-Drehstellung des Drehglieds umfasst, in der die zugeordnete Reibungskupplungsanordnung ausgerückt ist, und dass im ersten Drehstellungsbereich die zweite Drehkraft in Richtung zur Einrück-Drehstellung wirkt und im zweiten Drehstellungsbereich die zweite Drehkraft in Richtung zur Ausrück-Drehstellung wirkt. Insbesondere kann die Kompensationsfeder stets in Richtung zu einem jeweiligen End-Drehwinkel bzw. End-Anschlag entsprechend den Zuständen "vollständig eingerückt" und "vollständig ausgerückt" wirken. So kann insbesondere auch erreicht werden, dass die Reibungskupplungseinrichtung in beiden diesen Zuständen bleibt, ohne dass vom Aktuator Drehkräfte auf das Drehglied ausgeübt werden müssen. Der Aktuator dient dann also nur noch zur Überführung der Reibungskupplungsanordnung vom ausgerückten in den eingerückten Zustand bzw. vom eingerückten Zustand in den eingerückten Zustand oder ggf. einen gewünschten Zwischenzustand.

Die Erfindung bezieht sich speziell auch auf die Ausführung der Reibungskupplungseinrichtung als Einfach-Reibungskupplungseinrichtung, die genau eine Reibungskupplungsanordnung aufweist, der wenigstens ein Betätigungsglied und wenigstens ein Aktuator (in der Regel genau ein Betätigungsglied und genau ein Aktuator) der Betätigungseinrichtung zugeordnet ist und ggf. wenigstens eine Kompensationsfeder (ggf. genau eine Kompensationsfeder) der Betätigungseinrichtung zugeordnet ist. Die Erfindung stellt eine entsprechende Drehmomentübertragungseinrichtung bereit.

Ferner bezieht sich die Erfindung speziell auf eine als Doppel-Reibungskupplungseinrichtung oder Mehrfach-Reibungskupplungseinrichtung ausgeführte Reibungskupplungseinrichtung, die eine erste Reibungskupplungsanordnung aufweist, der wenigstens ein erstes Betätigungsglied (in der Regel genau ein erstes Betätigungsglied) der Betätigungseinrichtung zugeordnet ist, und eine zweite Reibungskupplungsanordnung aufweist, der wenigstens ein zweites Betätigungsglied (in der Regel genau ein zweites Betätigungsglied) der Betätigungseinrichtung zugeordnet ist. Die Erfindung stellt eine entsprechende Drehmomentübertragungseinrichtung bereit.

Es wird vor allem daran gedacht, dass der ersten Reibungskupplungseinrichtung wenigstens ein erster Aktuator (vorzugsweise genau ein erster Aktuator) und wenigstens ein erstes Drehglied (vorzugsweise genau ein erstes Drehglied) und ggf. wenigstens eine erste Kompensationsfeder (vorzugsweise genau eine erste Kompensationsfeder) der Betätigungseinrichtung zugeordnet ist, und dass der zweiten Reibungskupplungseinrichtung wenigstens ein zweiter Aktuator (vorzugsweise genau ein zweiter Aktuator) und wenigstens ein zweites Drehglied (vorzugsweise genau ein zweites Drehglied) und ggf. wenigstens eine zweite Kompensationsfeder (ggf. genau eine zweite Kompensationsfeder) der Betätigungseinrichtung zugeordnet ist.

Weiterhin wird vor allem daran gedacht, dass das erste Betätigungsglied, einerseits, und das zweite Betätigungsglied, andererseits, unabhängig von einander axial verstellbar sind, oder/und das erste Drehglied, einerseits, und das zweite Drehglied, andererseits, unabhängig von einander verdrehbar sind, oder/und dass die erste Reibungskupplungsanordnung, einerseits, und die zweite Reibungskupplungsanordnung, andererseits, unabhängig von einander ein- und ausrückbar sind.

Vorzugsweise dient als Drehglied das der Reibungskupplungsanordnung bzw. das der jeweiligen Reibungskupplungsanordnung zugeordnete Betätigungsglied oder - alternativ - das diesem zugeordnete Stützglied. Besonders zweckmäßig ist, wenn als Drehglied das relativ zum vorzugsweise stationären Stützglied drehbar gelagerte Betätigungsglied dient. Hierzu wird weiterbildend vorgeschlagen, dass das Stützglied fest mit dem Körper oder/und mit einem Stator des der Reibungskupplungsanordnung zugeordneten Aktuators oder einer diesen haltenden, ggf. zum Körper zugehörigen Aktuatorhalterung verbunden oder mit dieser oder dem Körper einteilig ist.

Es kann durchaus aber auch zweckmäßig sein; wenn als Drehglied das relativ zum Betätigungsglied drehbar gelagerte Stützglied dient. Hierzu wird weiterbildend vorgeschlagen, dass das Stützglied über eine Drehlageranordnung axial fest mit dem Körper oder/und einem Stator des der Reibungskupplungsanordnung zugeordneten Aktuators oder einer diesen haltenden, ggf. zum Körper zugehörigen Aktuatorhalterung verbunden ist.

Vorteilhaft kann das Drehglied bzw. das jeweilige Drehglied mit einer Verzahnung bzw. einer ersten bzw. zweiten Verzahnung ausgeführt sein, welche mit einem Abtrieb des zugeordneten Aktuators bzw. des zugeordneten ersten bzw. zweiten Aktuators direkt oder indirekt in Drehantriebsverbindung steht oder bringbar ist. Die Verzahnung kann zweckmäßig an einem Zahnradsegment bzw. an einem ersten bzw. zweiten Zahnradsegment vorgesehen sein. In diesem Zusammenhang wird vor allem daran gedacht, dass der Aktuator gegenüber einer Achse des Drehglieds radial versetzt angeordnet ist und beispielsweise ein mit einer Außenverzahnung des Zahnradsegments kämmendes Ritzel oder eine mit dieser Außenverzahnung kämmende Schnecke aufweist.

Es wird daran gedacht, dass das die Verzahnung bzw. das Zahnradsegment integraler, ggf. einteiliger Bestandteil des Drehglieds oder zumindest fest mit diesem verbunden ist.

Eine andere, eigenständigen Schutz verdienende Möglichkeit ist, dass ein gegenüber dem Drehglied gesondertes, daran angeordnetes Drehteil die Verzahnung bzw. das das Zahnradsegment umfasst, wobei das Drehteil in einer ersten Relativstellung von dem Drehglied für eine von dem Drehteil unabhängige Drehung des Drehglieds entkoppelt ist und in einer zweiten Relativstellung mit dem Drehglied zur gemeinsamen Drehung gekoppelt ist. Weiterbildend wird vorgeschlagen, dass das Mitnahmeformationen des Drehteils und des Drehglieds durch eine axiale Bewegung des Drehteils relativ zu dem Drehglied von der ersten zur zweiten Relativstellung in Drehmitnahmeeingriff bringbar sind.

Mittels des gesonderten Drehteils kann beispielsweise eine von der Einstellung einer Vorlast auf das Ausrücklager bzw. Einrücklager unabhängige Einstellung eines Übertotpunktwinkels für eine Kompensationsfeder sowie auch eine an die automatische Vorlasteinstellung mittels einer Vorlastfeder erfolgen, die das Betätigungsglied bzw. das Lager im Falle einer Kupplung vom NC-Typ im eingerückten Zustand mit einer axialen Soll-Kraft entsprechend der Soll-Vorlast auf das Ausrücklager bzw. im Falle einer Kupplung des NO-Typs im ausgerückten Zustand mit einer Soll-Kraft entsprechend der Soll-Vorlast auf das Einrücklager gegen Krafteinleitungselemente der Kupplung, beispielsweise Membranfederzungen drückt. In einer dieser axialen Stellung des Betätigungsglieds entsprechenden Drehstellung des Drehglieds kann dann das Zahnradsegment durch Verstellung des Drehteils in die Koppelstellung mit dem Drehglied gekoppelt werden.

Im Zusammenhang mit dem Drehteil wird daran gedacht, dass die dem Drehglied zugeordnete Kompensationsfeder am Drehteil und damit nur in der zweiten Relativstellung unter Vermittlung des Drehteils an dem Drehglied angelenkt ist. Weiterbildend wird vorgeschlagen, dass durch die Kompensationsfeder auf das Drehteil axiale Stellkräfte ausübbar sind, zur Überführung des Drehteils von der ersten in die zweite Relativstellung.

Nach einer besonders vorteilhaften Ausführungsform zeichnet sich die Drehmomentübertragungseinrichtung durch wenigstens eine axiale Vorspannkräfte auf das bzw. wenigstens ein Betätigungsglied oder auf ein Betätigungslager, insbesondere Ausrücklager oder Einrücklager, des Betätigungsglieds ausübende Vorspannfeder aus, auf deren Grundlage eine definierte Vorspannkraft auf das bzw. ein Betätigungslager, insbesondere Ausrücklager oder Einrücklager, des Betätigungsglieds einstellbar ist, im Falle einer Kompensationsfeder vorzugsweise zumindest in wenigstens einem Einstellbetriebsmodus unabhängig von einer direkten oder indirekten Wirkung der Kompensationsfeder auf das Betätigungsglied. Dabei kann die Vorspannfeder zwischen dem Körper oder Stützglied einerseits und dem Betätigungsglied andererseits wirken.

Eine andere, sehr vorteilhafte Möglichkeit ist, dass das Betätigungsglied eine erstes Teilglied, welches mittel der dem Drehglied erteilten Drehbewegung in die axiale Translationsbewegung versetzbar ist, und eine zweites, das Betätigungslager aufweisendes Teilglied umfasst, zwischen denen ein Verschleißausgleichsmechanismus wirksam ist, mittels dem eine relative axiale Stellung der Teilglieder einstellbar ist. Die Ausführung des Betätigungsglieds mit einem Verschleißausgleichsmechanismus ist von allgemeinen Interesse und verdient eigenständigen Schutz. Man kann dann zweckmäßig vorsehen, dass die Vorspannfeder zum Verschleißausgleichsmechanismus gehört, wobei die Vorspannfeder in einem ersten Betriebszustand eine momentane relative axiale Stellung der Teilglieder verriegelt und auf Grundlage der Vorspannfeder in einem zweiten Betriebszustand, der im Falle einer Kompensationsfeder vorzugsweise dem Einstellbetriebsmodus entspricht, eine definierte Vorspannkraft auf das Betätigungslager, insbesondere Ausrücklager oder Einrücklager, des Betätigungsglieds einstellbar ist.

Vorteilhaft kann die Vorspannfeder zwischen einem zum zweiten Teilglied zugehörigen Hülsenteil und einem Klemmkugeln aufweisenden Kugelkäfig, welchen einen in einer axialen Richtung sich verjüngenden Koppelabschnitt des ersten Teilglieds umgibt, wirksam sein.

Weiterbildend wird vorgeschlagen, dass der Kugelkäfig bei einer ein vorgegebenes oder vorgebbares Maß übersteigenden axialen Bewegung des Betätigungsglieds in einer vorgegebenen Axialrichtung gegen einen Entriegelanschlag stößt und bei weiterer axialer Bewegung des Betätigungsglieds in der vorgegebenen Axialrichtung an einer axialen Mitbewegung gehindert wird, entsprechend einer relativen Bewegung des Kugelkäfigs in der Verjüngungsrichtung des Koppelabschnitts, zur Entriegelung der momentanen axiale Stellung der Teilglieder und Einstellung einer neuen momentanen axialen Stellung der Teilglieder unter der Mitwirkung der Vorspannfeder.

Allgemein kann man vorsehen, dass die Drehantriebsverbindung zwischen der Verzahnung bzw. dem Zahnradsegment und dem Abtrieb des Aktuators wenigstens ein eine relative axiale Verstellung erlaubendes Verzahnungspaar aufweist.

Nach einer anderen, ebenfalls eigenständigen Schutz verdienenden Ausgestaltung ist vorgesehen, dass eine relative Drehstellung zwischen wenigstens einem Körperteil und wenigstens einem daran festlegbaren Zusatzteil einstellbar ist, von denen das Zusatzteil einen Drehverstellbereich des bzw. des jeweiligen Drehteils mittels wenigstens eines Anschlags zumindest einseitig begrenzt oder/und den bzw. den jeweiligen Aktuator hält oder/und einen Anlenkpunkt für die bzw. die jeweilige Kompensationsfeder aufweist und das Körperteil über das daran drehfest angeordnete Stützglied eine einer Anschlag-Drehstellung des Drehglieds entsprechende axiale Stellung des Betätigungsglieds definiert. So lassen sich beispielsweise einerseits die Vorlast auf das Ausrück- bzw. Einrücklager und andererseits die Position des Aktuators und damit dessen Antriebsglieds (etwa in Form eines Ritzels) bzw. des Anlenkpunkts in Winkelrichtung in einem Zuge einstellen.

Vorteilhaft können zwischen dem Körperteil und dem Zusatzteil wirksame, vorzugsweise als Drehführung nutzbare Verbindungsmittel zur Fixierung einer eingestellten Soll-Drehstellung vorgesehen sein. Es wird beispielsweise daran gedacht, dass vom Körperteil und dem Zusatzteil wenigstens eines wenigstens ein sich in einer Drehrichtung erstreckendes Langloch und wenigstens das andere wenigstens einen in das Langloch eingreifenden Bolzen aufweist.

Nach einer anderen und eigenständigen Schutz besonders verdienenden Ausgestaltung ist vorgesehen, dass ein Stator und ein Rotor des Aktuators bzw. des jeweiligen Aktuators koaxial zu dem Drehglied oder/und koaxial zu dem Betätigungsglied und dem Stützglied angeordnet sind. Beispielsweise kann man vorsehen, dass der Stator des Aktuators koaxial zu einer Haltehülse eines Körpers der Betätigungseinrichtung angeordnet und vorzugsweise von dieser an deren Innenumfang oder Außenumfang gehalten ist. Zweckmäßig kann die Haltehülse das Stützglied bilden oder dieses halten.

Durch die koaxiale Integration des Aktuators mit der Betätigungsglied-Stützglied-Anordnung wird radialer Bauraum eingespart und das resultierende Betätigungsmodul ist aufgrund seiner Kompaktheit besonders gut handhabbar. Auch wird der axiale Bauraum unter Berücksichtigung üblicher Aktuatorabmessungen nicht vergrößert, sondern tendenziell eher reduziert.

Weiterbildend wird vorgeschlagen, dass der Aktuator einen Rotor mit einer Verzahnung aufweist, welche über wenigstens ein Zwischenrad mit einer Verzahnung des Drehglieds, vorzugsweise einem Zahnradsegment des Drehglieds, gekoppelt ist. Eine andere Möglichkeit ist, dass der Aktuator einen Rotor aufweist, der unmittelbar mit dem Drehglied verbunden oder gekoppelt ist, vorzugsweise durch gegenseitigen Eingriff einer Verzahnung des Rotors und einer Verzahnung des Drehglieds, gewünschtenfalls einem Zahnradsegment des Drehglieds. Diese Weiterbildungsvorschläge kommen auch im Falle einer nicht-koaxialen Anordnung des Aktuators relativ zu dem Drehglied bzw. Betätigungsglied und Stützglied in Betracht.

Vorteilhaft kann man vorsehen, dass wenigstens eines der wirksamen Paare von Verzahnungen eine relative axiale Verstellung der mit einander gekoppelten bzw. verbundenen Komponenten ermöglicht.

Es wird insbesondere daran gedacht, dass der Aktuator als Außenläufer-Aktuator ausgeführt ist. Die Verzahnung des Rotors kann zweckmäßig eine Außenverzahnung sein.

Unabhängig von der Art und Ausgestaltung des Aktuators können das Stützglied und das Betätigungsglied eine Spindel-Gewindemutter-Anordnung, vorzugsweise eine Kugelspindel-Kugelgewindemutter-Anordnung, bilden oder eine solche umfassen. Hierzu wird weiterbildend vorgeschlagen, dass eine hülsenartige Spindel mit einem Außengewinde, ggf. Außen-Kugelgewinde, und einem Innengewinde, ggf. Innen-Kugelgewinde, als gemeinsames Stützglied einer ersten und einer zweiten Reibungskupplungsanordnung zugeordnet ist, und dass eine mit dem Außengewinde bzw. Außen-Kugelgewinde zusammenwirkende äußere Gewindemutter, ggf. äußere Kugelgewindemutter, und eine mit dem Innengewinde bzw. Innen-Kugelgewinde zusammenwirkende innere Gewindemutter, ggf. innere Gewindemutter, als der ersten Reibungskupplungsanordnung zugeordnete erstes Betätigungsglied und er zweiten Reibungskupplungsanordnung zugeordnetes zweites Betätigungsglied dienen.

Nach einer demgegenüber andersartigen und eigenständigen Schutz besonders verdienenden Ausgestaltung ist vorgesehen, dass das Stützglied und das Betätigungsglied eine Kugelkäfig-Gewindemutter-Anordnung bilden oder eine solche umfassen, bei der von einem Kugelkäfig in definierten Positionen gehaltene Kugeln in ein Innengewinde oder Außengewinde einer vermittels des Kugelkäfigs und der Kugeln axial und radial und in Relativverdrehrichtung geführten Gewindemutter eingreifen.

Solch eine Kugelkäfig-Gewindemutter-Anordnung ist einfach herstellbar, speziell auch dann, wenn ein Stützglied und zwei unabhängig voneinander bewegbare, mit dem Stützglied zusammenwirkende Betätigungsglieder vorgesehen sind. Insbesondere kann man ein hülsenartiges, den Kugelkäfig bildendes Stützglied mit einem äußeren hülsenartigen Betätigungsglied und einem inneren hülsenartigen Betätigungsglied vorsehen. Das Stützglied oder die Stützhülse kann über den Umfang verteilt Öffnungen zur Aufnahme bzw. zum Halten der Kugeln aufweisen, wobei man für die Kugeln zweckmäßig Gleitreibung auf Seiten des Stützglieds und Rollreibung auf Seiten des Betätigungsglieds bzw. des jeweiligen Betätigungsglieds vorsehen kann. Dieses lässt sich auch für die Ausführung der Betätigungseinrichtung für die Betätigung einer Doppelkupplung erreichen, indem ein erster Satz von Kugeln von innen und ein zweiter Satz von Kugeln von außen in die gegenüber dem Kugeldurchmesser kleineren Öffnungen eingebracht werden, so dass gewissermaßen zwei gesonderte Kugelebenen erreicht werden.

Gegenüber solchen konkreten Ausgestaltungsmöglichkeiten wird allgemeiner vorgeschlagen, dass ein hülsenartiger Kugelkäfig als gemeinsames Stützglied einer ersten und einer zweiten Reibungskupplungsanordnung zugeordnet ist, und dass eine zumindest mit einer Teilmenge der durch den Kugelkäfig gehaltenen Kugeln zusammenwirkende äußere Gewindemutter und eine zumindest mit einer Teilmenge der durch den Kugelkäfig gehaltenen Kugeln zusammenwirkende innere Gewindemutter als der ersten Reibungskupplungsanordnung zugeordnete erstes Betätigungsglied und er zweiten Reibungskupplungsanordnung zugeordnetes zweites Betätigungsglied dienen. Dabei kann man zweckmäßig vorsehen, dass die äußere Gewindemutter mit einer äußeren Teilmenge der Kugeln, nämlich mit außen am Kugelkäfig gehaltenen Kugeln, zusammenwirkt und die innere Gewindemutter mit einer inneren Teilmenge der Kugeln, nämlich innen am Kugelkäfig gehaltenen Kugeln, zusammenwirkt.

Allgemein wird vorgeschlagen, dass wenigstens eine Anschlagfeder vorgesehen ist, die einen Drehbewegungsbereich des Drehglieds oder/und einen Axialverstellungsbereich des Betätigungsglieds einseitig oder beidseitig begrenzt oder an dieser Begrenzung mitwirkt. In diesem Zusammenhang kann man vorsehen, dass wenigstens ein Anschlag des Drehglieds oder dessen Zahnradsegments in einer oder in beiden Drehrichtungen gegen eine an einem stationären Anschlag abgestützte oder abstützbare Anschlagfeder drehbar ist.

Eine andere Möglichkeit ist, dass das Drehglied oder dessen Zahnradsegment über eine Anschlagfeder mit einem koaxial zum Drehglied drehbaren Drehteil zur gemeinsamen Drehung gekoppelt oder koppelbar ist, wobei das Drehteil in einer oder in beiden Drehrichtungen gegen einen stationären Anschlag drehbar ist. Dabei kann man vorsehen, dass die Anschlagfeder sowohl in ein Federfenster des Drehglieds bzw. dessen Zahnradsegments als auch in ein Federfenster des Drehteils eingreift.

Nach einem von den vorstehend angesprochenen Ausgestaltungen unabhängigen Gesichtspunkts wird ferner allgemein vorgeschlagen, dass die Reibungskupplungseinrichtung eine mit einem Abtrieb der Antriebseinheit gekoppelte oder koppelbare Eingangsseite und wenigstens eine mit einem Eingangselement, ggf. Getriebeeingangswelle, des Getriebes gekoppelte oder koppelbare Ausgangsseite der Reibungskupplungsanordnung, ggf. eine der ersten Reibungskupplungsanordnung zugehörige erste Ausgangsseite und eine der zweiten Reibungskupplungsanordnung zugehörige zweite Ausgangsseite, aufweist, wobei die Eingangsseite über eine Stützdrehlageranordnung mit dem Körper oder/und dem Stützglied oder/und mit einem Stator des der Reibungskupplungsanordnung zugeordneten Aktuators oder einer diesen haltenden Aktuatorhalterung unter Herstellung einer axialen Abstützbeziehung verbunden oder verbindbar ist.

Ferner wird allgemein vorgeschlagen, dass die Drehmomentübertragungseinrichtung zu einer die Reibungskupplungsanordnung und die Betätigungseinrichtung umfassenden Einbau-Baueinheit vormontiert oder vormontierbar ist, wobei die Einbau-Baueinheit als Einheit ohne Notwendigkeit einer zumindest teilweisen erneuten Demontage zwischen einer Antriebseinheit und einem Getriebe in einem Antriebsstrang einbaubar ist.

Ferner wird allgemein vorgeschlagen, dass das Betätigungsglied bzw. das jeweilige Betätigungsglied mit einem als Ausrücklager oder Einrücklager dienenden Drehlager ausgeführt ist, mit dem das Betätigungsglied auf wenigstens ein mit der/einer Eingangsseite der Reibungskupplungseinrichtung sich mitdrehendes Krafteinleitungsglied der zugeordneten Reibungskupplungsanordnung wirkt.

Betreffend die vormontierte Einbau-Baueinheit wird daran gedacht, dass diese wenigstens eine, vorzugsweise wenigstens zwei, höchstvorzugsweise alle der folgenden Bedingungen erfüllt:
a) in der vormontierten Einbau-Baueinheit ist eine auf das Einrücklager bzw. das Ausrücklager des zugeordneten Betätigungsglieds wirkende definierte axiale Vorlast eingestellt, die auf einer auf das Drehglied bzw. das jeweilige Drehglied ausgeübten zweiten Drehkraft oder/und auf einer von dem Krafteinleitungsglied ausgeübten Kraft oder/und auf einer axialen Kraft wenigstens einer Vorspannfeder beruht;
b) in der vormontierten Einbau-Baueinheit ist in Bezug auf die Kompensationsfeder bzw. die Kompensationsfedern eine definierte Übertotpunktkonfiguration eingestellt;
c) in der vormontierten Einbau-Baueinheit ist das Betätigungsglied bzw. das jeweilige Betätigungsglied zum Ausgleich einer axialen Positionstoleranz des Krafteinleitungsglieds der zugeordneten Reibungskupplungsanordnung relativ zur Eingangsseite und zum Körper definiert axial positioniert.

Ferner stellt die Erfindung, nach einem anderen Aspekt, eine Betätigungseinrichtung bereit, zum Einleiten von Betätigungskräften, insbesondere Einrück- oder Ausrückkräften, in eine Reibungskupplungseinrichtung, um wenigstens eine Reibungskupplungsanordnung der Reibungskupplungseinrichtung im Einrück- oder Ausrücksinn zu betätigen, wobei die Betätigungseinrichtung umfasst:
- wenigstens ein der oder einer Reibungskupplungsanordnung zugeordnetes, axial verstellbares Betätigungsglied und wenigstens ein dem Betätigungsglied zugeordnetes, im Wesentlichen axial feststehendes Stützglied, wobei zur Betätigung der zugeordneten Reibungskupplungsanordnung das Betätigungsglied auf Basis einer einem Drehglied der Betätigungseinrichtung erteilten Drehbewegung in eine axiale Translationsbewegung versetzbar ist oder/und vermittels auf das Drehglied ausgeübter Drehkräfte auf das Betätigungsglied axiale Kräfte ausübbar sind, wobei das Drehglied mit einer Verzahnung, gewünschtenfalls an einem Zahnradsegment, ausgeführt ist, welche mit einem Abtrieb eines zugeordneten Aktuators direkt oder indirekt in Drehantriebsverbindung steht oder bringbar ist.

Erfindungsgemäß ist vorgesehen, dass ein gegenüber dem Drehglied gesondertes, daran angeordnetes Drehteil die Verzahnung umfasst, wobei das Drehteil in einer ersten Relativstellung von dem Drehglied für eine von dem Drehteil unabhängige Drehung des Drehglieds entkoppelt ist und in einer zweiten Relativstellung mit dem Drehglied zur gemeinsamten Drehung gekoppelt ist. Auf diese Weise kann einfach eine definierte Betätigungskonfiguration für das Betätigungsglied eingestellt werden, etwa hinsichtlich einem Drehbewegungsbereich oder/und in Bezug auf den Übertotpunktwinkel einer Kompensationsfeder. Ferner kann auf diese Weise einfach eine definierte Vorlast in Bezug auf ein Ausrücklager oder Einrücklager des Betätigungsglieds eingestellt werden.

Weiterbildend wird vorgeschlagen, dass Mitnahmeformationen des Drehteils und des Drehglieds durch eine axiale Bewegung des Drehteils relativ zu dem Drehglied von der ersten zur zweiten Relativstellung in Drehmitnahmeeingriff bringbar sind.

Es wurde schon die Möglichkeit angesprochen, dass eine Kompensationsfeder vorgesehen sein kann, wobei vor allem an eine dem Drehglied zugeordnete Kompensationsfeder gedacht wird. In diesem Zusammenhang wird speziell vorgeschlagen, dass eine dem Drehglied zugeordnete Kompensationsfeder am Drehteil und damit nur in der zweiten Relativstellung unter Vermittlung des Drehteils an dem Drehglied angelenkt ist. Vorteilhaft können durch die Kompensationsfeder auf das Drehteil axiale Stellkräfte ausübbar sein, zur Überführung des Drehteils von der ersten in die zweite Relativstellung.

Die Betätigungseinrichtung nach dem Erfindungsvorschlag kann sich vorteilhaft durch wenigstens eine axiale Vorspannkräfte auf das bzw. wenigstens ein Betätigungsglied oder auf ein Betätigungslager, insbesondere Ausrücklager oder Einrücklager, des Betätigungsglieds ausübende Vorspannfeder auszeichnen, auf deren Grundlage eine definierte Vorspannkraft auf das bzw. ein Betätigungslager, insbesondere Ausrücklager oder Einrücklager, des Betätigungsglieds einstellbar ist, im Falle einer Kompensationsfeder vorzugsweise zumindest in wenigstens einem Einstellbetriebsmodus unabhängig von einer direkten oder indirekten Wirkung der Kompensationsfeder auf das Betätigungsglied. Dabei kann die Vorspannfeder zwischen dem Körper oder Stützglied einerseits und dem Betätigungsglied andererseits wirken. Dies ist aber nicht zwingend.

Vorteilhaft kann man das Betätigungsglied mehrteilig ausführen und mit einem Verschleißausgleichsmechanismus ausstatten. Hierzu wird vorgeschlagen, dass das Betätigungsglied eine erstes Teilglied, welches mittels der dem Drehglied erteilten Drehbewegung in die axiale Translationsbewegung versetzbar ist, und eine zweites, das Betätigungslager aufweisendes Teilglied umfasst, zwischen denen ein Verschleißausgleichsmechanismus wirksam ist, mittels dem eine relative axiale Stellung der Teilglieder einstellbar ist. Dieser Weiterbildungsvorschlag ist auch von grundsätzlichem Interesse und verdient unabhängigen Schutz.

Dementsprechend stellt die Erfindung nach einem weiteren Aspekt auch bereit eine Betätigungseinrichtung, zum Einleiten von Betätigungskräften, insbesondere Einrück- oder Ausrückkräften, in eine Reibungskupplungseinrichtung, um wenigstens eine Reibungskupplungsanordnung der Reibungskupplungseinrichtung im Einrück- oder Ausrücksinn zu betätigen, wobei die Betätigungseinrichtung umfasst:
- wenigstens ein der oder einer Reibungskupplungsanordnung zugeordnetes, axial verstellbares Betätigungsglied und wenigstens ein dem Betätigungsglied zugeordnetes, im Wesentlichen axial feststehendes Stützglied, wobei zur Betätigung der zugeordneten Reibungskupplungsanordnung das Betätigungsglied auf Basis einer einem Drehglied der Betätigungseinrichtung erteilten Drehbewegung in eine axiale Translationsbewegung versetzbar ist oder/und vermittels auf das Drehglied ausgeübter Drehkräfte auf das Betätigungsglied axiale Kräfte ausübbar sind.

Erfindungsgemäß ist vorgesehen, dass das Betätigungsglied ein erstes Teilglied, welches mittels der dem Drehglied erteilten Drehbewegung in die axiale Translationsbewegung versetzbar ist, und eine zweites, das Betätigungslager aufweisendes Teilglied umfasst, zwischen denen ein Verschleißausgleichsmechanismus wirksam ist, mittels dem eine relative axiale Stellung der Teilglieder einstellbar ist.

Nach dem Erfindungsvorschlag kann auf eine in die Kupplung integrierte Verschleißausgleichsmechanik verzichtet werden, was unter Umständen vorteilhaft ist. Ein besonderer Vorteil kann erreicht werden, wenn der Verschleißausgleichsmechanismus zugleich ermöglicht, die Vorlast auf das Ausrücklager bzw. Einrücklager leicht einzustellen.

Sowohl in Bezug auf den Weiterbildungsvorschlag wie auch in Bezug auf den unabhängigen Erfindungsvorschlag wird weiterbildend vorgeschlagen, dass eine/die Vorspannfeder zum Verschleißausgleichsmechanismus gehört, wobei die Vorspannfeder in einem ersten Betriebszustand eine momentane relative axiale Stellung der Teilglieder verriegelt und auf Grundlage der Vorspannfeder in einem zweiten Betriebszustand, der im Falle einer Kompensationsfeder vorzugsweise dem Einstellbetriebsmodus entspricht, eine definierte Vorspannkraft auf das Betätigungslager, insbesondere Ausrücklager oder Einrücklager, des Betätigungsglieds einstellbar ist.

Hinsichtlich der Konstruktion des Verschleißausgleichsmechanismus im Detail bestehen viele Möglichkeiten. Nach einer zweckmäßigen Ausgestaltung ist die Vorspannfeder zwischen einem zum zweiten Teilglied zugehörigen Hülsenteil und einem Klemmkugeln aufweisenden Kugelkäfig, welcher einen in einer axialen Richtung sich verjüngenden Koppelabschnitt des ersten Teilglieds umgibt, wirksam.

Weiterbildend wird vorgeschlagen, dass der Kugelkäfig bei einer ein vorgegebenes oder vorgebbares Maß übersteigenden axialen Bewegung des Betätigungsglieds in einer vorgegebenen Axialrichtung gegen einen Entriegelanschlag stößt und bei weiterer axialer Bewegung des Betätigungsglieds in der vorgegebenen Axialrichtung an einer axialen Mitbewegung gehindert wird, entsprechend einer relativen Bewegung des Kugelkäfigs in der Verjüngungsrichtung des Koppelabschnitts, zur Entriegelung der momentanen axiale Stellung der Teilglieder und Einstellung einer neuen momentanen axialen Stellung der Teilglieder unter der Mitwirkung der Vorspannfeder.

Die Erfindung stellt nach einem anderen Aspekt ferner bereit eine Betätigungseinrichtung, zum zum Einleiten von Betätigungskräften, insbesondere Einrück- oder Ausrückkräften, in eine Reibungskupplungseinrichtung, um wenigstens eine Reibungskupplungsanordnung der Reibungskupplungseinrichtung im Einrück- oder Ausrücksinn zu betätigen, wobei die Betätigungseinrichtung umfasst:
- wenigstens ein der oder einer Reibungskupplungsanordnung zugeordnetes, axial verstellbares Betätigungsglied und wenigstens ein dem Betätigungsglied zugeordnetes, im Wesentlichen axial feststehendes Stützglied, wobei zur Betätigung der zugeordneten Reibungskupplungsanordnung das Betätigungsglied auf Basis einer einem Drehglied der Betätigungseinrichtung erteilten Drehbewegung in eine axiale Translationsbewegung versetzbar ist oder/und vermittels auf das Drehglied ausgeübter Drehkräfte auf das Betätigungsglied axiale Kräfte ausübbar sind.

Erfindungsgemäß ist vorgesehen, dass eine relative Drehstellung zwischen wenigstens einem Körperteil und wenigstens einem daran festlegbaren Zusatzteil einstellbar ist, von denen das Zusatzteil einen Drehverstellbereich des bzw. des jeweiligen Drehteils mittels wenigstens eines Anschlags zumindest einseitig begrenzt oder/und den bzw. den jeweiligen Aktuator hält oder/und einen Anlenkpunkt für die bzw. die jeweilige Kompensationsfeder aufweist und der Körperteil über das daran drehfest angeordnete Stützglied eine einer Anschlag-Drehstellung des Drehglieds entsprechende axiale Stellung des Betätigungsglieds definiert. So lassen sich beispielsweise einerseits die Vorspannung auf das Ausrücklager bzw. Einrücklager und andererseits die Drehwinkelstellung des Aktuators bzw. des Anlenkpunkts für die Kompensationsfeder in einem Zuge einstellen. Zur Fixierung einer eingestellten Soll-Drehstellung können zwischen dem Körperteil und dem Zusatzteil wirksame Verbindungsmittel vorgesehen sein, die vorzugsweise auch als Drehführung nutzbar sind. Zweckmäßig kann vorgesehen sein, dass vom Körperteil und dem Zusatzteil wenigstens eines wenigstens ein sich in einer Drehrichtung erstreckendes Langloch und wenigstens das andere wenigstens einen in das Langloch eingreifenden Bolzen aufweist.

Die Erfindung stellt nach einem anderen Aspekt bereit eine Betätigungseinrichtung, zum Einleiten von Betätigungskräften, insbesondere Einrück- oder Ausrückkräften, in eine Reibungskupplungseinrichtung, um wenigstens eine Reibungskupplungsanordnung der Reibungskupplungseinrichtung im Einrück- oder Ausrücksinn zu betätigen, wobei die Betätigungseinrichtung umfasst:
- wenigstens ein der oder einer Reibungskupplungsanordnung zugeordnetes, axial verstellbares Betätigungsglied und wenigstens ein dem Betätigungsglied zugeordnetes, im Wesentlichen axial feststehendes Stützglied, wobei zur Betätigung der zugeordneten Reibungskupplungsanordnung das Betätigungsglied auf Basis einer einem Drehglied der Betätigungseinrichtung erteilten Drehbewegung in eine axiale Translationsbewegung versetzbar ist oder/und vermittels auf das Drehglied ausgeübter Drehkräfte auf das Betätigungsglied axiale Kräfte ausübbar sind, wobei als Drehglied das Betätigungsglied oder das Stützglied dient.

Erfindungsgemäß ist vorgesehen, dass das Stützglied und das Betätigungsglied eine Kugelkäfig-Kugelmutter-Anordnung bilden oder eine solche umfassen, bei der von einem Kugelkäfig in definierten Positionen gehaltene Kugeln in ein Innengewinde oder Außengewinde einer vermittels des Kugelkäfigs und der Kugeln axial und radial und in Relativverdrehrichtung geführten Gewindemutter eingreifen.

Zu den so erreichbaren Vorteilen und zu möglichen Ausgestaltungen wird auf die vorstehenden Ausführungen im Zusammenhang mit einer entsprechend ausgestalteten Drehmomentübertragungseinrichtung verwiesen. So kann ein hülsenartiger Kugelkäfig als gemeinsames Stützglied einer ersten und einer zweiten Reibungskupplungsanordnung zugeordnet sein. Diesbezüglich wird speziell vorgeschlagen, dass eine zumindest mit einer Teilmenge der durch den Kugelkäfig gehaltenen Kugeln zusammenwirkende äußere Gewindemutter und eine zumindest mit einer Teilmenge der durch den Kugelkäfig gehaltenen Kugeln zusammenwirkende innere Gewindemutter als der ersten Reibungskupplungsanordnung zugeordnete erstes Betätigungsglied und er zweiten Reibungskupplungsanordnung zugeordnetes zweites Betätigungsglied dienen. Dabei kann man vorteilhaft vorsehen, dass die äußere Gewindemutter mit einer äußeren Teilmenge der Kugeln, nämlich mit außen am Kugelkäfig gehaltenen Kugeln, zusammenwirkt und die innere Gewindemutter mit einer inneren Teilmenge der Kugeln, nämlich innen am Kugelkäfig gehaltenen Kugeln, zusammenwirkt.

Nach einem weiteren Aspekt stellt die Erfindung bereit eine Betätigungseinrichtung, zum Einleiten von Betätigungskräften, insbesondere Einrück- oder Ausrückkräften, in eine Reibungskupplungseinrichtung, um wenigstens eine Reibungskupplungsanordnung der Reibungskupplungseinrichtung im Einrück- oder Ausrücksinn zu betätigen, wobei die Betätigungseinrichtung umfasst:
- wenigstens ein der oder einer Reibungskupplungsanordnung zugeordnetes, axial verstellbares Betätigungsglied und wenigstens ein dem Betätigungsglied zugeordnetes, im Wesentlichen axial feststehendes Stützglied, wobei zur Betätigung der zugeordneten Reibungskupplungsanordnung das Betätigungsglied auf Basis einer einem Drehglied der Betätigungseinrichtung erteilten Drehbewegung in eine axiale Translationsbewegung versetzbar ist oder/und vermittels auf das Drehglied ausgeübter Drehkräfte auf das Betätigungsglied axiale Kräfte ausübbar sind, wobei als Drehglied das Betätigungsglied oder das Stützglied dient oder ein gegenüber dem Betätigungsglied und dem Stützglied gesondertes, mit diesen zusammenwirkendes Drehglied vorgesehen ist.

Erfindungsgemäß ist vorgesehen, dass ein Stator und ein Rotor des Aktuators bzw. des jeweiligen Aktuators koaxial zu dem Drehglied oder/und koaxial zu dem Betätigungsglied und dem Stützglied angeordnet sind.

Zu erreichbaren Vorteilen und in Frage kommenden Ausgestaltungen wird auf die vorstehenden Ausführungen im Zusammenhang mit einer entsprechend ausgeführten Drehmomentübertragungseinrichtung verwiesen. So kann der Stator des Aktuators koaxial zu einer Haltehülse eines Körpers der Betätigungseinrichtung angeordnet sein und ist vorzugsweise von dieser Haltehülse an deren Innenumfang oder Außenumfang gehalten. Zweckmäßig kann die Haltehülse das Stützglied bilden oder dieses halten.

Man kann vorsehen, dass der Aktuator einen Rotor mit einer Verzahnung aufweist, welche über wenigstens ein Zwischenrad mit einer Verzahnung des Drehglieds, vorzugsweise einem Zahnradsegment des Drehglieds, gekoppelt ist. Ferner kann man vorsehen, dass der Aktuator einen Rotor aufweist, der unmittelbar mit dem Drehglied verbunden oder gekoppelt ist, vorzugsweise durch gegenseitigen Eingriff einer Verzahnung des Rotors und einer Verzahnung des Drehglieds, gewünschtenfalls einem Zahnradsegment des Drehglieds.

Vorteilhaft kann man vorsehen, dass wenigstens eines der wirksamen Paare von Verzahnungen eine relative axiale Verstellung der mit einander gekoppelten bzw. verbundenen Komponenten ermöglicht.

Vorteilhaft kann der Aktuator als Außenläufer-Aktuator ausgeführt sein. Die Verzahnung des Rotors kann eine Außenverzahnung sein.

Betreffend die erfindungsgemäße Betätigungseinrichtung nach den angesprochenen Aspekten wird darauf hingewiesen, dass diese entsprechend der Betätigungseinrichtung der erfindungsgemäßen Drehmomentübertragungseinrichtung ausgestaltet sein kann.

Nach einem weiteren Aspekt stellt die Erfindung ein Verfahren zur Montage einer Drehmomentübertragungseinrichtung zur Drehmomentübertragung in einem Antriebsstrang eines Kraftfahrzeugs zwischen einer Antriebseinheit und einem Getriebe zu einer Baueinheit bereit. Die Drehmomentübertragungseinrichtung, auf die sich das Montageverfahren bezieht, umfasst:
- eine Reibungskupplungseinrichtung, umfassend wenigstens eine wahlweise zum Einrücken und Ausrücken betätigbare Reibungskupplungsanordnung;
- eine Betätigungseinrichtung, zum Einleiten von Betätigungskräften, insbesondere Einrück- oder Ausrückkräften, in die Reibungskupplungseinrichtung, um wenigstens eine Reibungskupplungsanordnung der Reibungskupplungseinrichtung im Einrück- oder Ausrücksinn zu betätigen, wobei die Betätigungseinrichtung umfasst:
   -- wenigstens ein der oder einer Reibungskupplungsanordnung zugeordnetes, axial verstellbares Betätigungsglied und wenigstens ein dem Betätigungsglied zugeordnetes, im Wesentlichen axial feststehendes Stützglied, wobei zur Betätigung der zugeordneten Reibungskupplungsanordnung das Betätigungsglied auf Basis einer einem Drehglied der Betätigungseinrichtung erteilten Drehbewegung in eine axiale Translationsbewegung versetzbar ist oder/und vermittels auf das Drehglied ausgeübter Drehkräfte auf das Betätigungsglied axiale Kräfte ausübbar sind, wobei als Drehglied das Betätigungsglied oder das Stützglied dient oder ein gegenüber dem Betätigungsglied und dem Stützglied gesondertes, mit diesen zusammenwirkendes Drehglied vorgesehen ist,
   -- wenigstens einen dem Drehglied und der Reibungskupplungsanordnung zugeordneten Aktuator, mittels dem erste Drehkräfte auf das Drehglied ausübbar sind, um die Reibungskupplungsanordnung zu betätigen,
   -- gewünschtenfalls wenigstens eine Kompensationsfeder, die einerseits an dem Drehglied und andererseits an einem Ausleger eines Körpers der Betätigungseinrichtung derart angelenkt ist, dass auf einer Spannung der Kompensationsfeder beruhende zweite Drehkräfte auf das Drehglied ausübbar sind.

Erfindungsgemäß umfasst das Verfahren die folgenden Schritte:
A) Bereitstellen der Reibungskupplungseinrichtung und der Betätigungseinrichtung als gesonderte, zumindest teilweise vormontierte Baueinheiten;
B) Verbinden einer mit einem Abtrieb der Antriebseinheit koppelbaren Eingangsseite der Kupplungseinrichtung mittels einer Stützdrehlageranordnung mit dem Körper oder/und dem Stützglied oder/und mit einem Stator des der Reibungskupplungsanordnung zugeordneten Aktuators oder einer diesen haltenden Aktuatorhalterung unter Herstellung einer axialen Abstützbeziehung;
C) unter Verdrehen des Drehglieds bzw. der Drehglieder Anlegen des Betätigungsglieds bzw. der Betätigungsglieder an wenigstens ein mit der Eingangsseite der Reibungskupplungseinrichtung sich mitdrehendes Krafteinleitungsglied der zugeordneten Reibungskupplungsanordnung,
   i) unter Einstellung einer auf ein Ausrücklager oder Einrücklager des Betätigungsglieds wirkenden definierten Vorlast, die auf einer auf das Drehglied bzw. das jeweilige Drehglied ausgeübten zweiten Drehkraft der Kompensationsfeder bzw. Kompensationsfedern oder/und auf einer auf das Drehglied bzw. das jeweilige Drehglied oder das Betätigungsglied bzw. das jeweilige Betätigungsglied von wenigstens einer Vorspannfeder ausgeübten Kraft beruht oder/und auf einer von dem Krafteinleitungsglied ausgeübten Kraft beruht,
      oder/und
   ii) unter Ausgleich einer axialen Positionstoleranz des Krafteinleitungsglieds der zugeordneten Reibungskupplungsanordnung relativ zur Eingangsseite.

Im Falle einer Kompensationsfeder kann das Verfahren ferner den folgenden Schritt umfassen:
D) Einstellen wenigstens eines von i) einer definierten Übertotpunktkonfiguration für die Kompensationsfeder bzw. die Kompensationsfedern und ii) eines axialen Bewegungsbereichs des Betätigungsglieds bzw. eines jeweiligen axialen Bewegungsbereichs der Betätigungsglieder durch Einstellen wenigstens eines den axialen Bewegungsbereich direkt oder indirekt zumindest einseitig begrenzenden Bewegungsanschlags.

Nach dem Erfindungsvorschlag können Produktionstoleranzen etwa hinsichtlich der Position von Membranfederzungenenden oder dergleichen im eingerückten oder ausgerückten Zustand ausgeglichen werden, indem das Betätigungsglied bzw. jedes Betätigungsglied im Falle einer Doppelkupplung während der Montage der Betätigungseinrichtung an der Reibungskupplungseinrichtung entsprechend eingestellt wird, wobei zweckmäßig eine Mindestvorlast auf das Ausrücklager bzw. Einrücklager eingestellt und gewissermaßen im System gespeichert werden kann.

Man kann also beispielsweise einen Spindelausrücker oder Spindeleinrücker über ein Stützlager oder allgemein eine Stützdrehlageranordnung mit der Kupplungseinrichtung fest verbinden und im Falle einer Betätigungsgliedausführung mit Zahnradsegment kann dieses so weit verdreht werden, bis das Ausrücklager bzw. Einrücklager das Krafteinleitungsglied (ggf. die Membranfederzunge bzw. die Membranfederzungen) berührt. Um eine definierte Vorlast einzustellen, kann über die den Kontakt zwischen dem Lager und dem Krafteinleitungsglied herstellende Drehstellung weiter gedreht werden, bis die gewünschte Vorlast erreicht ist, worauf dann wenigstens ein Anschlag für das Zahnradsegment eingestellt oder festgelegt wird. Je nach Ausgestaltung kann sich ein Anlenkungspunkt für die Kompensationsfeder mitverdrehen und damit miteingestellt werden, um eine definierte Kompensationsfederkennlinie und ggf. eine definierte Übertotpunktcharakteristik zu erreichen. Man kann so beispielsweise erreichen, dass eine resultierende Kompensationsfederkennlinie auf eine Ausrückkraftkennlinie oder Einrückkraftkennlinie abgestimmt ist. Um eine solche Abstimmung zu erhalten, kann die Kupplungseinrichtung bzw. die betreffende Kupplungsanordnung mit einer integrierten Verschleißausgleicheinrichtung ausgestattet sein. Alternativ kann auch die Betätigungseinrichtung, speziell etwa das der Kupplungsanordnung zugeordnete Betätigungsglied, mit einer Verschleißausgleichseinrichtung, ausgestattet sein.

Gegenüber den angesprochenen Ausgestaltungsmöglichkeiten des Verfahrens und der zugrunde liegenden Drehmomentübertragungseinrichtung kommen auch andere Ausgestaltungen in Betracht. Allgemein wird vorgeschlagen, dass in Schritt C) ein definiertes Drehmoment auf das Drehglied ausgeübt wird, um das Betätigungsglied an dem Krafteinleitungsglied definiert anzulegen. Dabei kann die Vorlast auf einer von dem Krafteinleitungsglied ausgeübten Kraft beruhen und durch Einstellen, insbesondere Positionieren und ggf. Festlegen, eines axialen Endanschlags für das Betätigungsglied oder eines Dreh-Endanschlags für das Drehglied eingestellt werden.

Es wird vor allem daran gedacht, dass der axiale Endanschlag bzw. Dreh-Endschlag im Falle einer Reibungskupplungsanordnung vom Normalerweise-Offen-Typ (NO) einem ausgerückten Zustand der Reibungskupplungsanordnung und im Falle einer einer Reibungskupplungsanordnung vom Normalerweise-Geschlossen-Typ (NC) einem eingerückten Zustand der Reibungskupplungsanordnung entspricht. Weiterbildend wird vorgeschlagen, dass ein weiterer axialer Endanschlag für das Betätigungsglied oder ein weiterer Dreh-Endanschlag für das Drehglied eingestellt, insbesondere positioniert und ggf. festgelegt, wird, wobei der weitere axiale Endanschlag bzw. der weitere Dreh-Endanschlag im Falle einer Reibungskupplungsanordnung vom Normalerweise-Offen-Typ (NO) einem eingerückten Zustand der Reibungskupplungsanordnung und im Falle einer einer Reibungskupplungsanordnung vom Normalerweise-Geschlossen-Typ (NC) einem ausgerückten Zustand der Reibungskupplungsanordnung entspricht.

Besonders zweckmäßig kann man vorsehen, dass der axiale Dreh-Endanschlag einerseits und der weitere Dreh-Endanschlag andererseits in einem Zuge durch Einstellen und Fixieren einer relativen Soll-Drehstellung zwischen dem Drehglied in einer einer definierten Axialposition des Betätigungsglieds entsprechenden Drehstellung einerseits und dem Körper oder einem zugeordneten Körperteil einschließlich den Dreh-Endanschlägen andererseits eingestellt werden. Der Montageaufwand und Einstellaufwand ist dementsprechend reduziert.

Besonders vorteilhaft kann sich das Verfahren dadurch auszeichnen, dass eine relative Drehstellung zwischen wenigstens einem Körperteil und wenigstens einem daran festlegbaren Zusatzteil eingestellt wird, von denen das Zusatzteil einen Drehverstellbereich des bzw. des jeweiligen Drehteils mittels wenigstens eines Anschlags zumindest einseitig begrenzt oder/und den bzw. den jeweiligen Aktuator hält oder/und einen Anlenkpunkt für die bzw. die jeweilige Kompensationsfeder aufweist und das Körperteil über das daran drehfest angeordnete Stützglied eine einer Anschlag-Drehstellung des Drehglieds entsprechende axiale Stellung des Betätigungsglieds definiert. So lassen sich einfach beispielsweise einerseits eine Vorlast auf das Ausrücklager bzw. Einrücklager und andererseits eine Drehwinkelstellung des Aktuators bzw. des Anlenkpunkts in einem Zuge einstellen. Eine eingestellte Soll-Drehstellung kann zweckmäßig durch zwischen dem Körperteil und dem Zusatzteil wirksame Verbindungsmittel fixiert werden, gewünschtenfalls nach Nutzung der entsprechend ausgeführten Verbindungsmittel als Drehführung. Es wird beispielsweise daran gedacht, dass vom Körperteil und dem Zusatzteil wenigstens eines wenigstens ein sich in einer Drehrichtung erstreckendes Langloch und wenigstens das andere wenigstens einen Bolzen aufweist, die in gegenseitigen Eingriff gebracht und fixiert werden.

Es soll nicht ausgeschlossen werden, dass die Übertotpunktkonfiguration auf Basis der zuvor erfolgten Einstellung der Vorlast bzw. des zuvor erfolgten Ausgleichs der axialen Positionstoleranz eingestellt wird durch Festlegen eines äußeren Anlenkpunkts der Kompensationsfeder an dem Ausleger. In solch einem Fall kann man vorsehen, dass der äußere Anlenkpunkt im Zustand des Anschlags des Betätigungsglieds am axialen Endanschlag oder am weiteren axialen Endanschlag oder im Zustand des Anschlags des Drehglieds am Dreh-Endanschlag oder am weiteren Dreh-Endanschlag an einer definierten Winkel- und Radialposition am Ausleger festgelegt wird.

Demgegenüber ist es aber bevorzugt, dass der axiale Endanschlag bzw. der axiale Dreh-Endanschlag oder/und der weitere axiale Endanschlag bzw. der weitere Dreh-Endanschlag einerseits und die Übertotpunktkonfiguration andererseits in einem Zuge durch Einstellen und Fixieren einer relativen Soll-Drehstellung zwischen dem Drehglied in einer einer definierten Axialposition des Betätigungsglieds entsprechenden Drehstellung einerseits und dem Körper oder einem zugeordneten Körperteil einschließlich dem einen äußeren Anlenkpunkt für den Kompensationsfeder aufweisenden Ausleger andererseits eingestellt werden. Der Montage- und Einstellaufwand ist dementsprechend reduziert.

Nach einem ganz anderen Ansatz wird daran gedacht, dass die Übertotpunktkonfiguration auf Basis der zuvor erfolgten Einstellung der Vorlast bzw. des zuvor erfolgten Ausgleichs der axialen Positionstoleranz eingestellt wird durch Festlegen eines inneren Anlenkpunkts der Kompensationsfeder am oder in Bezug auf das Drehglied.

Alternativ oder weiterbildend wird daran gedacht, dass die Übertotpunktkonfiguration durch axiale Verstellung eines am Drehglied angeordneten Drehteils in Drehmitnahmeeingriff mit dem Drehglied in einer definierten relativen Drehstellung zwischen dem Drehglied und dem Drehteil hergestellt wird. Eine Möglichkeit in diesem Zusammenhang ist, dass die dem Drehglied zugeordnete Kompensationsfeder am Drehteil angelenkt ist und damit nur nach Herstellung des Drehmitnahmeeingriffs unter Vermittlung des Drehteils am Drehglied angelenkt ist, so dass durch Herstellung des Drehmitnahmeeingriffs der innere Anlenkpunkt in Bezug auf das Drehglied festgelegt wird. Dabei können axiale Stellkräfte der Kompensationsfeder das Drehteil in den Drehmitnahmeeingriff verstellen.

Es wird allgemein daran gedacht, dass ein Drehverstellungsbereich des Drehglieds oder/und ein Axialverstellungsbereich des Betätigungsglieds eingestellt wird. Eine besonders vorteilhafte Möglichkeit in diesem Zusammenhang zeichnet sich dadurch aus, dass der Drehverstellungsbereich durch axiale Verstellung eines am Drehglied angeordneten, gegen wenigstens einen stationären Anschlag drehbaren Drehteils in Drehmitnahmeeingriff mit dem Drehglied eingestellt wird.

Man kann vorsehen, dass eine Drehantriebsverbindung zwischen dem Aktuator und dem Drehglied hergestellt wird, vorzugsweise nach Durchführung des Schritts C) oder im Zuge der Durchführung des Schritts D) oder nach Durchführung des Schritts D). In diesem Fall kann es zweckmäßig sein, wenn die Drehantriebsverbindung im Zustand des Anschlags des Betätigungsglieds am axialen Endanschlag oder am weiteren axialen Endanschlag oder im Zustand des Anschlags des Drehglieds am Dreh-Endanschlag oder am weiteren Dreh-Anschlag eingestellt wird.

Alternativ wird daran gedacht, dass eine Drehantriebsverbindung zwischen dem Aktuator und dem Drehglied vor Durchführung des Schritts C) oder vor Durchführung des Schritts B) hergestellt wird oder dass die Betätigungseinrichtung als Baueinheit mit schon hergestellter Drehantriebsverbindung zwischen dem Aktuator und dem Drehglied bereitgestellt wird. Man kann dann den Aktuator als Positionsgeber oder/und Drehantrieb für die Durchführung des Schritts C) nutzen, wenn dies zweckmäßig erscheint.

Eine andere, sehr zweckmäßige Möglichkeit ist, dass die Drehantriebsverbindung durch axiale Verstellung eines am Drehglied angeordneten, durch den Aktuator drehantreibbaren Drehteils in Drehmitnahmeeingriff mit dem Drehglied hergestellt wird.

Allgemein wird daran gedacht, dass eine Drehantriebsverbindung zwischen dem Drehglied und einem Abtrieb des Aktuators hergestellt ist oder hergestellt wird, ggf. ein direkter oder indirekter Kämm- oder Formschlusseingriff zwischen dem Abtrieb und einer Verzahnung (ggf. an einem Zahnradsegment) des Drehglieds.

Das erfindungsgemäße Verfahren kann im Zuge des Einbaus der Drehmomentübertragungseinrichtung zwischen einer Antriebseinheit und einem Getriebe durchgeführt werden. Vorzugsweise wird der Körper oder wenigstens ein Körperteil der Betätigungseinheit am Getriebegehäuse montiert.

Demgegenüber ist es aber bevorzugt, dass die Drehmomentübertragungseinrichtung zu einer Einbau-Baueinheit montiert wird, die als Einheit ohne Notwendigkeit einer zumindest teilweisen erneuten Demontage zwischen einer Antriebseinheit und einem Getriebe in einem Antriebsstrang einbaubar ist.

### Kurze Beschreibung der Zeichnungen

Die Erfindung in ihren verschiedenen Aspekten wird im Folgenden anhand von in den Figuren gezeigten, rein exemplarischen Ausführungsbeispielen näher erläutert.
- Fig. 1: zeigt ein Ausführungsbeispiel einer Betätigungseinrichtung für eine Doppelkupplung in einer Querschnittsansicht nach Linie I-I in Fig. 4, die mit einer Doppelkupplung zu einer Einbau-Baueinheit kombinierbar ist.
- Fig. 2: zeigt in den Teilfiguren 2a und 2b eine Explosionsansicht der Betätigungseinrichtung der Fig. 1 und in Fig. 2c eine Gesamtdarstellung der Explosionsansicht.
- Fig. 3: zeigt die Betätigungseinrichtung der Fig. 1 in einem zu einer Teileinheit der Einbau-Baueinheit weitgehend zusammengebauten Zustand in einer seitlichen Ansicht.
- Fig. 4: zeigt eine axiale Ansicht auf die zusammengebaute Betätigungseinrichtung in Sichtrichtung von einem Getriebe in Richtung zu einer Antriebseinheit, zwischen denen die mit der Doppelkupplung zu der Einbau-Baueinheit kombinierte Betätigungseinrichtung einzubauen ist.
- Fig. 5: zeigt in einer Fig. 1 entsprechenden Darstellung eine Ausführungsvariante einer derartigen Betätigungseinrichtung.
- Fig. 6: zeigt eine axiale Ansicht auf die Betätigungseinrichtung der Fig. 5 in Sichtrichtung von der Antriebseinheit zum Getriebe, zwischen denen die mit einer Doppelkupplung zu der Einbau-Baueinheit kombinierte Betätigungseinrichtung einzubauen ist.
- Fig. 7: zeigt in einer seitlichen Ansicht ein Ausführungsbeispiel für eine EinbauBaueinheit gebildet von einer nasslaufenden Lamellen-Doppelkupplung und einer Betätigungseinrichtung in einer zur Betätigungseinrichtung der Fig. 1 und 5 sehr ähnlichen Ausführung.
- Fig. 8: zeigt die Einbau-Baueinheit der Fig. 7 aufgenommen in eine Getriebegehäuseglocke zwischen einer Antriebseinheit (insbesondere Verbrennungsmotor) und einem Doppelkupplungs- oder Lastschaltgetriebe eines Kraftfahrzeug-Antriebsstrangs.
- Fig. 9: zeigt in einer seitlichen Ansicht ein Ausführungsbeispiel für eine EinbauBaueinheit gebildet von einer trockenlaufenden ReibscheibenDoppelkupplung und einer Betätigungseinrichtung in einer zur Betätigungseinrichtung der Fig. 1 und 5 sehr ähnlichen Ausführung.
- Fig. 10: zeigt in einer geschnittenen Darstellung die Einbau-Baueinheit der Fig. 9 aufgenommen in eine Getriebegehäuseglocke zwischen einer Antriebseinheit (insbesondere Verbrennungsmotor) und einem Doppelkupplungs- oder Lastschaltgetriebe eines Kraftfahrzeug-Antriebsstrangs.
- Fig. 11: zeigt eine Ausführungsvariante der Betätigungseinrichtung, bei der anstelle eines spindelartigen Stützglieds ein Kugelkäfig als Stützglied vorgesehen ist.
- Fig. 12: zeigt den Kugelkäfig gemäß Fig. 11 in verschiedenen Ansichten.
- Fig. 13: zeigt eine weitere Ausführungsvariante der Betätigungseinrichtung, bei der anstelle eines spindelartigen Stützglieds ein Kugelkäfig als Stützglied vorgesehen ist.
- Fig. 14: zeigt den Kugelkäfig gemäß Fig. 13 in verschiedenen Ansichten.
- Fig. 15: zeigt eine Ausführungsform einer für eine Einfachkupplung vorgesehenen Betätigungseinrichtung in einer Querschnittsansicht.
- Fig. 16: zeigt die Betätigungseinrichtung gemäß Fig. 15 in einer axialen Draufsicht.
- Fig. 17: zeigt die Betätigungseinrichtung gemäß Fig. 15 in einer perspektivischen seitlichen Ansicht.
- Fig. 18: zeigt eine Ausführungsvariante der Betätigungseinrichtung für die Einfachkupplung in einer Querschnittsansicht.
- Fig. 19: zeigt die Betätigungseinrichtung gemäß Fig. 18 in einer axialen Draufsicht.
- Fig. 20: zeigt die Betätigungseinrichtung gemäß Fig. 18 in einer perspektivischen Schrägansicht.
- Fig. 21: zeigt ein weiteres Ausführungsbeispiel einer für eine Einfachkupplung vorgesehenen Betätigungseinrichtung.
- Fig. 22: zeigt die Betätigungseinrichtung gemäß Fig. 21 in einer axialen Draufsicht.
- Fig. 23: zeigt die Betätigungseinrichtung gemäß Fig. 21 in einer seitlichen perspektivischen Ansicht.
- Fig. 24: zeigt ein weiteres Ausführungsbeispiel einer für eine Einfachkupplung vorgesehenen Betätigungseinrichtung.
- Fig. 25: zeigt die Betätigungseinrichtung gemäß Fig. 24 in einer axialen Draufsicht.
- Fig. 26: zeigt die Betätigungseinrichtung gemäß Fig. 24 in einer seitlichen perspektivischen Ansicht.
- Fig. 27: zeigt ein Ausführungsbeispiel einer Betätigungseinrichtung für eine Einfachkupplung, bei der das Betätigungsglied einen integrierten Verschleißausgleichsmechanismus aufweist.
- Fig. 28: zeigt die Betätigungseinrichtung gemäß Fig. 27 in einer axialen Draufsicht.
- Fig. 29: zeigt die Betätigungseinrichtung gemäß Fig. 27 in einer seitlichen perspektivischen Ansicht.
- Fig. 30: zeigt ein Ausführungsbeispiel einer einen koaxial integrierten Aktuator aufweisenden Betätigungseinrichtung für eine Einfachkupplung in einer Querschnittsansicht gemäß der in Fig. 31 angedeuteten Schnittlinie.
- Fig. 31: zeigt die Betätigungseinrichtung gemäß Fig. 30 in einer axialen Draufsicht.
- Fig. 32: zeigt die Betätigungseinrichtung gemäß Fig. 30 in einer seitlichen perspektivischen Ansicht.
- Fig. 33: zeigt ein weiteres Ausführungsbeispiel einer einen koaxial integrierten Aktuator aufweisenden Betätigungseinrichtung für eine Einfachkupplung in einer Querschnittsansicht.
- Fig. 34: zeigt die Betätigungseinrichtung gemäß Fig. 33 in einer axialen Draufsicht.
- Fig. 35: zeigt die Betätigungseinrichtung gemäß Fig. 33 in einer seitlichen perspektivischen Ansicht.

### Bester Weg zur Ausführung der Erfindung

Als erstes vorgestellt wird eine auch als Spindel-Betätigungsmodul bezeichenbare Betätigungseinrichtung, die zur Betätigung einer nasslaufenden oder trochenlaufenden Doppelkupplung dient und mit solch einer Doppelkupplung zu einer Einbau-Baueinheit montierbar ist, welche ohne erneute Demontage als Baueinheit zwischen einer Antriebseinheit, in der Regel ein Verbrennungsmotor, und einem Getriebe eines Kraftfahrzeug-Antriebsstrangs einbaubar ist, in der Regel zumindest teilweise aufgenommen in eine Getriebegehäuseglocke des Getriebes. Das Betätigungsmodul weist ein einer ersten Kupplungsanordnung der Doppelkupplung zugeordnetes erstes Betätigungsglied und ein einer zweiten Kupplungsanordnung der Doppelkupplung zugeordnetes zweites Betätigungsglied auf, die - je nach Ausführung der betreffenden Kupplungsanordnung - als Einrücker oder Ausrücker dienen. Das Betätigungsmodul ist speziell dafür geeignet, mit einer Doppelkupplung vom Betätigungstyp NORMALERWEISE-OFFEN (NO, "normally opened") kombiniert zu werden, um gewünschtenfalls - in Verbindung mit einer Kompensationsfederanordnung - ein Gesamtsystem vom Betätigungstyp NORMALERWEISE-GESCHLOSSEN (NC, "normally closed") zu realisieren, oder - in der Regel von größerem Interesse - mit einer Doppelkupplung vom Betätigungstyp NORMALERWEISE-GESCHLOSSEN (NC, "normally closed") kombiniert zu werden, um gewünschtenfalls - in Verbindung mit einer Kompensationsfederanordnung - ein Gesamtsystem vom Betätigungstyp NORMALERWEISE-OFFEN (NO, "normally opened") zu realisieren. Dies wird durch wenigstens eine einem jeweiligen Betätigungsglied zugeordnete Kompensationsfeder erreicht, die Rückstellkräfte der jeweiligen Kupplungsanordnung überkompensiert. Vorzugsweise ist die dem ersten Betätigungsglied zugeordnete wenigstens eine Kompensationsfeder und ist die dem zweiten Betätigungsglied zugeordnete wenigstens eine Kompensationsfeder in einer Übertotpunkt-Konfiguration angeordnet, so dass das Betätigungsglied stabil sowohl in einer einem eingerückten als auch in einer einem ausgerückten Zustand der jeweiligen Kupplungsanordnung entsprechenden Stellung gehalten wird, ohne dass ein zugeordneter Aktuator aktiv sein muss.

Ein selbsthemmendes Getriebe, welches eine jeweilige Kupplungsanordnung in einem momentan gewählten Betätigungszustand hält, oder ein hierzu dienender zusätzlicher Verriegelungsmechanismus ist nicht erforderlich.

Im Folgenden wird ohne Beschränkung der Allgemeinheit davon ausgegangen, dass die Betätigungseinrichtung zur Betätigung einer Doppelkupplung mit zwei nasslaufenden oder trockenlaufenden Kupplungsanordnungen des NC-Typs vorgesehen ist und mit einer derartigen Doppelkupplung zu einer Einbau-Baueinheit montiert bzw. zu montierten ist. Das Betätigungsmodul kann dementsprechend auch als Ausrückermodul bezeichnet werden, welches zwei Betätigungs- oder Ausrückglieder aufweist, welche zum Ausrücken einer jeweiligen zugeordneten der Kupplungsanordnungen der Doppelkupplung dienen. Vorteilhaft können - wie schon angesprochen - die Kompensationsfedern derart in einer Übertotpunktanordnung angeordnet sein, dass die jeweilige wenigstens eine Kompensationsfeder die zugeordnete Kupplungsanordnung nicht nur im offenen bzw. ausgerückten Zustand halten kann, sondern auch im geschlossenen bzw. eingerückten Zustand. Ein vorzugsweise elektromotorischer Aktuator, der dem jeweiligen Betätigungsglied bzw. Ausrückerglied zugeordnet ist, wird dann nur zur Verstellung der jeweiligen Kupplungsanordnung zwischen dem eingerückten und dem ausgerückten Zustand bzw. zur Einstellung und ggf. zum Halten eines Zwischenzustands benötigt.

Anzumerken ist, dass sich für den Fachmann aus den im Folgenden beschriebenen Ausführungsformen und Ausführungsvarianten entsprechende Betätigungseinrichtungen zur Betätigung einer Doppelkupplung mit zwei Kupplungsanordnungen des NO-Typs ergeben, wobei mittels einer Kompensationsfeder eine Gesamt-Systemcharakteristik vom NC-Typ realisiert sein kann. Betreffend die im Folgenden behandelten Betätigungseinrichtungen für Doppelkupplungen mit Kupplungsanordnungen des NC-Typs ist ebenfalls darauf hinzuweisen, dass eine durch Überkompensation erzielbare NO-Gesamtcharakteristik zweckmäßig vorgesehen sein kann, aber nicht zwingend ist.

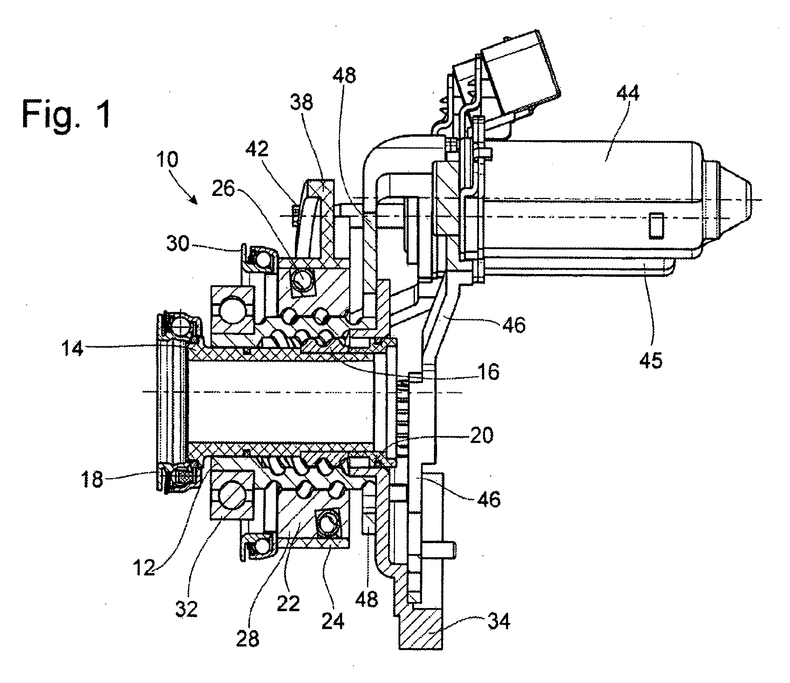

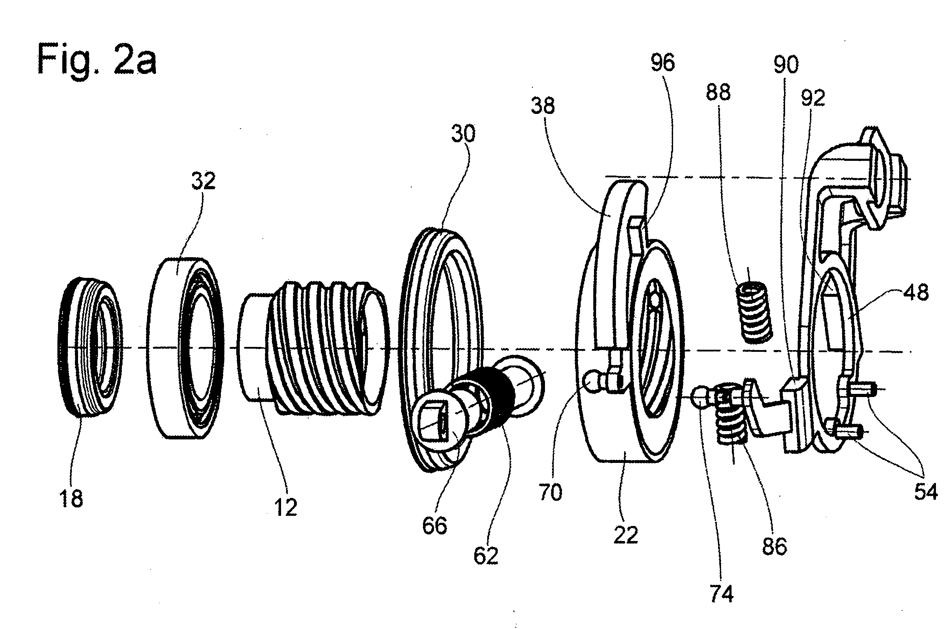

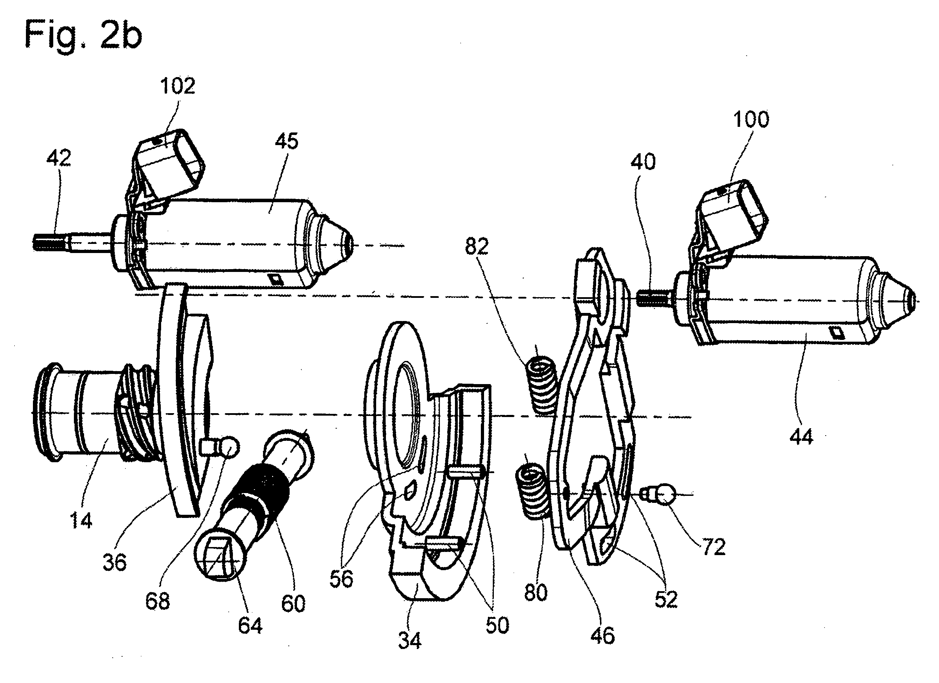

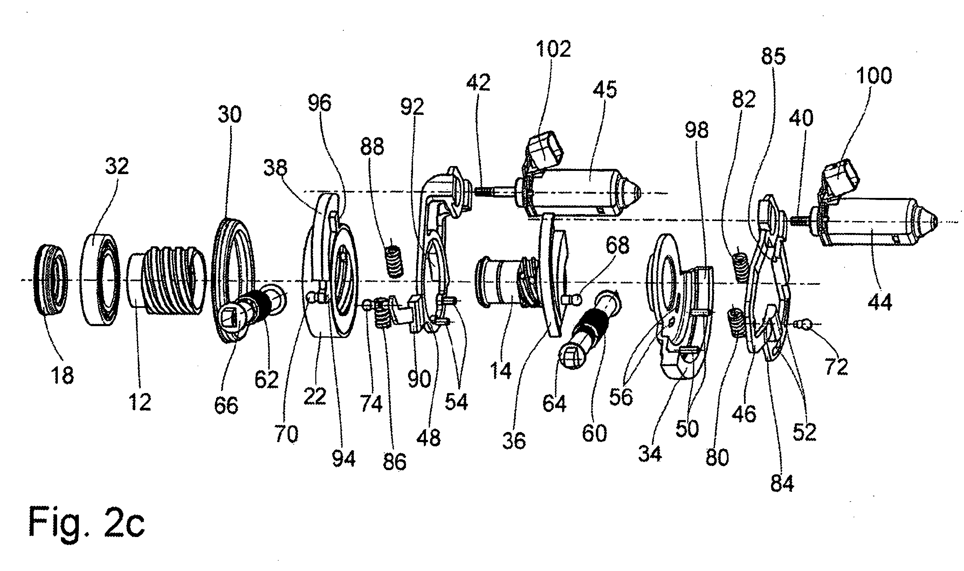

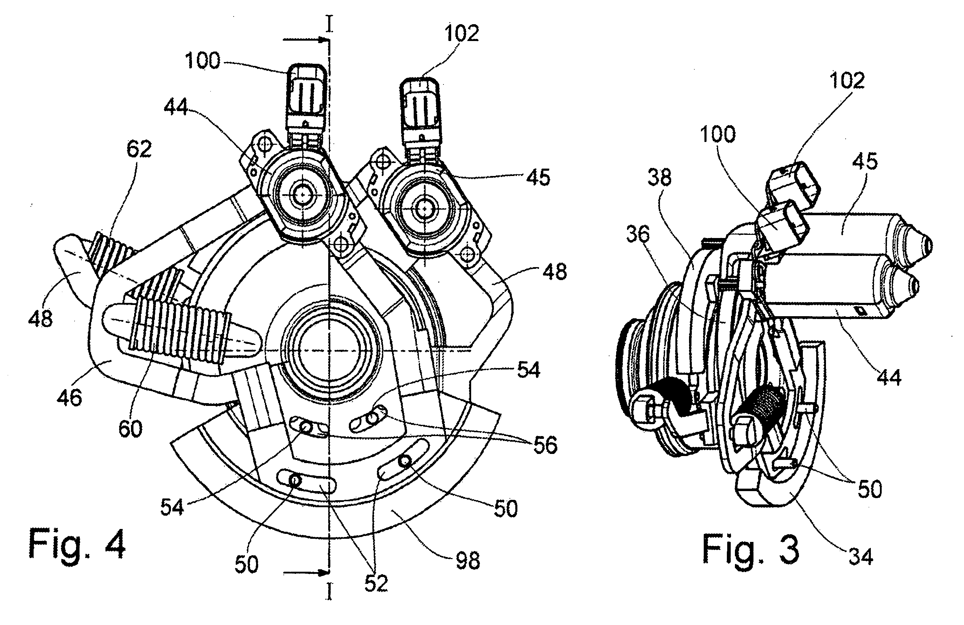

Der Aufbau des Betätigungsmoduls nach dem Ausführungsbeispiel der Fig. 1 bis 4 ist am besten den Fig. 1 und 2 zu entnehmen. Das Betätigungsmodul 10 weist ein stationäres spindelartiges Stützglied 12 auf, welches mit einem Innengewinde und einem Außengewinde zur Bildung eines jeweiligen Kugelumlaufs oder Kugel-Gewindegangs ausgeführt ist. Innen ist ein hülsenartiges erstes Betätigungs- oder Ausrückglied 14 angeordnet, welches außen eine Spindelmutter 16 mit einem Kugelgewindegang am Außenumfang trägt, welcher unter Vermittlung von Kugeln mit dem Innengewinde des Stützglieds 12 kämmt, so dass eine dem ersten Betätigungsglied 14 erteilte Drehbewegung in eine axiale Bewegung des ersten Betätigungsglieds 14 relativ zum stationären Stützglied 12 umgesetzt wird. An einem freien Ende trägt das erste Stützglied 14 ein erstes Ausrücklager 18, welches dafür vorgesehen ist, auf wenigstens ein Krafteinleitungsglied, ggf. eine Mehrzahl von Membranfederzungenenden, der zugeordneten Reibungskupplungsanordnung der Doppelkupplung zu wirken. Mit 20 ist eine Staubschutzabdeckung bezeichnet, die vorteilhaft vorgesehen sein kann, um den Kugellaufbereich vor Staub zu schützen. Außen trägt das Stützglied 12 ein zweites Betätigungs- oder Ausrückglied 22, welches von einem äußeren Hülsenteil 24 und einem einen Kugelrücklauf 26 aufweisenden Körperteil 28 gebildet ist. Das Körperteil 28 weist an einem Innenumfang einen Kugelgewindegang auf, der vermittels Kugeln mit dem äußeren Kugelgewindegang des Stützglieds 12 kämmt, so dass eine dem zweiten Betätigungsglied 22 erteilte Drehbewegung in eine axiale Bewegung des zweiten Betätigungsglieds relativ zum stationären Stützglied 12 umgesetzt wird. Das zweite Betätigungsglied 22 trägt an einem freien Ende ein zweites Ausrücklager 30, welches dafür vorgesehen ist, auf wenigstens ein Krafteinleitungsglied, ggf. eine Mehrzahl von Membranfederzungenenden, der zugeordneten Reibungskupplungsanordnung der Doppelkupplung zu wirken.

Das Stützglied 12 trägt ein als Stützlager bezeichenbares Drehlager 32, welches dazu dient, das Betätigungsmodul mit der Doppelkupplung zu einer Einbau-Baueinheit zu montieren und axiale Abstützkräfte zwischen dem Betätigungsmodul und der Doppelkupplung zu übertragen, so dass für die über die Betätigungsglieder in die Doppelkupplung eingeleiteten Kräfte ein geschlossener Kraftfluss realisiert ist.

Das Stützglied 12 ist fest mit einem Körperteil 34 des Betätigungsmoduls verbunden, beispielsweise mit diesem verschweißt oder an diesem im Presssitz gehalten oder sonst wie daran formschlüssig, stoffschlüssig oder kraftschlüssig gehalten. In Abweichung von der Darstellung in Fig. 1 könnten das Stützglied 12 und das Körperteil 34 auch einteilig ausgeführt sein. Um Drehkräfte auf die Betätigungsglieder ausüben und damit die Betätigungsglieder vermittels einer Verdrehung relativ zum Stützglied axial verstellen zu können, weist das erste (innere) Betätigungsglied 14 ein erstes Zahnradsegment 36 auf und weist das zweite (äußere) Betätigungsglied 22 ein zweites Zahnradsegment 38 auf, welches im zusammengebauten Zustand des Moduls mit einem Abtriebsritzel 40 bzw. 42 eines dem ersten Betätigungsglied 14 zugeordneten ersten Aktuators 44 bzw. eines dem zweiten Betätigungsglied 22 zugeordneten zweiten Aktuators 45 kämmt. Die Aktuatoren sind als elektromotorische Aktuatoren ausgeführt und gewünschtenfalls auch als Drehgeber verwendbar, um eine momentane Drehstellung des zugeordneten Betätigungsglieds zu erfassen.

Das Zahnradsegment 38 steht nach radial außen von dem Hülsenteil 24 des zweiten Betätigungsglieds 22 vor. Das Zahnradsegment 36 steht von einem durch eine zentrale Öffnung des Körperteils 34 axial hervorstehenden Ende des Betätigungsglieds 14 nach radial außen vor. Für die beiden Kupplungsanordnungen kann beispielsweise jeweils ein Ausrückweg von etwa 8 mm vorgesehen sein, und die Gewindesteigung der Obergewindegänge bzw. Kugelumläufe kann so gewählt sein, dass dieser Ausrückweg von etwa 8 mm einem Dreh- oder Schwenkwinkel des betreffenden Betätigungsglieds von etwa 80° entspricht. Die Zahnradsegmente 36 und 38 weisen eine solche Außenverzahnung auf, dass eine axiale Verstellung relativ zu den stationären Abtriebsritzeln 40 und 42 möglich ist.

Der erste Aktuator 44 ist vermittels einer ersten Halterung 46 in einer definierten Drehstellung relativ zum Körperteil 34 positioniert und gehalten. Hierzu weist das Körperteil 34 Bolzen 50 auf, die Langlöcher 52 der ersten Halterung 46 durchgreifen. Die Langlöcher ermöglichen eine Einstellung eines relativen Drehwinkels zwischen dem Körperteil 34 und der Halterung 46 und damit eine definierte Position des Abtriebsritzels 40 relativ zum Bewegungsbereich des Zahnradsegments 36 des ersten Betätigungsglieds 14. Im Zuge der Montage wird durch Aufschrauben von Muttern oder dergleichen auf die Bolzen 50 eine gewünschte relative Positionierung fixiert und das Körperteil 34 mit der ersten Halterung 46 verbunden.

Zu definierten Positionierung und Halterung des zweiten Aktuators 45 dient eine zweite Halterung 48, die ebenfalls in einer definierten Drehstellung an dem Körperteil 34 montierbar ist. Hierzu weist die zweite Halterung 48 Bolzen 54 auf, die Langlöcher 56 des Körperteils 34 durchgreifen und zum Aufschrauben von Muttern oder dergleichen dienen, so dass eine definierte Drehstellung der Halterung 48 relativ zum Körperteil 34 und damit eine definierte Position des Abtriebritzels 42 des zweiten Aktuators 45 relativ zum Bewegungsbereich des Zahnradsegments 38 des zweiten Betätigungsglieds 22 einstellbar und fixierbar ist und das Körperteil 34 mit der Halterung 48 fest verbindbar ist.

Da für beide Aktuatoren jeweils eine gesonderte Halterung vorgesehen ist, die aufgrund der Langlöcher 52 und 56 relativ zum Körperteil 34 und relativ zueinander innerhalb eines gewissen Winkelbereichs verstellbar sind, lassen sich die Betriebspositionen der Abtriebsritzel 40 und 42 unabhängig voneinander einstellen.

Wie in Fig. 2 erkennbar, ist die erste Halterung 46 von einem einen Durchgangsbereich umschließenden Ringteil gebildet, welches eine Aufnahmeöffnung für das Gehäuse des Aktuators 44 aufweist. Die zweite Halterung 48 ist ausweislich Fig. 2 von einem ein Ringteil mit einem eine Aufnahmeöffnung für das Gehäuse des Aktuators 45 aufweisenden Ausleger gebildet. Die beiden Halterungen dienen nicht nur zur Halterung und Positionierung der Aktuatoren, sondern auch als Anlenkung für eine dem ersten Betätigungsglied 14 zugeordnete ersten Kompensationsfederanordnung 60 und eine dem zweiten Betätigungsglied 22 zugeordnete zweite Kompensationsfederanordnung 62. Die Kompensationsfederanordnungen sind jeweils von einer Druckfeder und einer zweiteiligen Federführung 64 bzw. 66 gebildet, die mit einem sich nach radial innen erstreckenden Federführungsteil an einem Kugelkopf 68 des ersten Betätigungsglieds 14 bzw. an einem Kugelkopf 70 des zweiten Betätigungsglieds 22 angelenkt ist und mit einem radial äußeren Federführungsteil an einem Kugelkopf 72 der ersten Halterung 46 bzw. an einem Kugelkopf 74 der zweiten Halterung 48 angelenkt ist. Der Kugelkopf 74 der zweiten Halterung 48 ist an einem Ausleger der Halterung angeordnet, und der Kugelkopf 72 ist unmittelbar am Ringteil der ersten Halterung 46 angeordnet. In Fig. 2 ist eine Befestigungsöffnung der Halterung 46 für den gesondert dargestellten Kugelkopf 72 erkennbar.

Die vermittels der Bolzen 50 bzw. 54 und der Langlöcher 72 bzw. 76 einstellbare Drehstellungen der ersten Halterung 46 und der zweiten Halterung 48 betreffen auch die Positionierung des Kugelkopfes 72 relativ zum Drehbewegungsbereich des ersten Betätigungsglieds 14 bzw. die Positionierung des Kugelkopfes 74 relativ zum Drehbewegungsbereich des zweiten Betätigungsglieds 22, so dass durch Wahl der Drehstellung der ersten Halterung 46 und der zweiten Halterung 48 jeweils relativ zum Körperteil 34 eine jeweilige Übertotpunkt-Konfiguration für die beiden Kompensationsfederanordnungen 60 und 62 einstellbar ist. Vorteilhaft ist, dass die Positionen des Abtriebritzels 40 einerseits und des Kugelkopfes 72 andererseits in einem Zug einstellbar sind, und dass entsprechend die Positionen des Abtriebritzels 42 einerseits und des Kugelkopfes 74 andererseits in einem Zuge einstellbar sind. Dies wird vorliegend dadurch erreicht, dass die Aktuatorposition und die Kugelkopfposition nicht voneinander unabhängig sind. Man kann durchaus aber auch vorsehen, dass der Aktuator einerseits und der Kugelkopf andererseits relativ zueinander verstellbar sind oder dass zumindest im Zuge der Montage eine bestimmte relative Positionierung einstellbar und fixierbar ist. Beispielsweise könnte man vorsehen, dass der Kugelkopf in einem Langloch verstellbar oder im Zuge der Montage an einer gewünschten Position an der betreffenden Halterung bzw. einem entsprechend ausgestalteten Ausleger fixierbar, ggf. anschweißbar, ist. Bevorzugt ist aber die Ausgestaltung gemäß den Fig. 1 bis 4, die eine besonders einfache Montage ermöglicht.

Zur Begrenzung des Drehbewegungsbereiches der ersten Betätigungsglieds 14 in beiden Drehrichtungen sind zwei Anschlagfedern 80 und 82 vorgesehen, die zwischen einerseits einem jeweiligen Ende des Zahnradsegments 36 des ersten Betätigungsglieds 14 und andererseits einem Anschlag 84 bzw. einem Anschlag 85 der ersten Halterung 46 angeordnet sind.

In entsprechender Weise sind auch dem zweiten Betätigungsglied 22 zwei Anschlagfedern 86 und 88 zur Begrenzung des Drehbewegungsbereichs zugeordnet, die einerseits zwischen einem Anschlagelement 90 bzw. 92 der zweiten Halterung 48 und andererseits einem Anschlagelement 94 bzw. 96 des zweiten Betätigungsglieds 22 angeordnet sind.

Angemerkt sei, dass durchaus auch eine Ausgestaltung in Betracht kommt, bei der ein Flanschsegment 98 des Körperteils 34 beidseitige Anschläge für ein zugeordnetes Betätigungsglied realisiert. Bezogen auf die den Fig. 1 bis 4 zugrunde liegende Grundkonstruktion ist es aber bevorzugt, auch eine Einstellbarkeit für die Dreh-Endanschläge vorzusehen, gemeinsam mit der schon angesprochenen Einstellbarkeit der Positionierung des Abtriebritzels 40 und des Kugelkopfes 72 in Bezug auf das erste Betätigungsglied 14.

Der Vollständigkeit halber ist zu erwähnen, dass die Aktuatoren 44 und 45 mit einem jeweiligen elektrischen Steckverbinder 100, 102 ausgeführt sind, die zum Anschluss an eine elektronische Steuereinheit dienen. Durch entsprechende Bestromung des betreffenden Aktuators können Drehkräfte in Einrück- bzw. Ausrückrichtung auf das zugeordnete Betätigungsglied 14 bzw. 22 ausgeübt werden. Vorteilhaft kann vorgesehen sein, dass die Aktuatoren auch als Drehgeber nutzbar sind, zumindest als relative Drehgeber, um die Betätigungsglieder definiert verstellen zu können, beispielsweise zur Einstellung einer definierten Vorlast auf die Ausrücklager im Zuge der Montage mit der zugehörigen Doppelkupplung zu einer Einbau-Baueinheit.

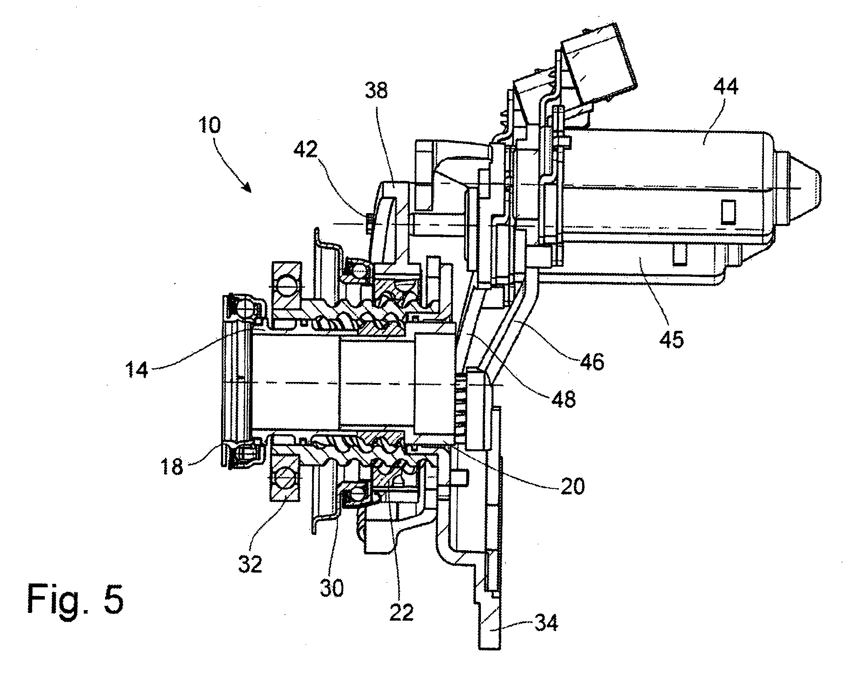

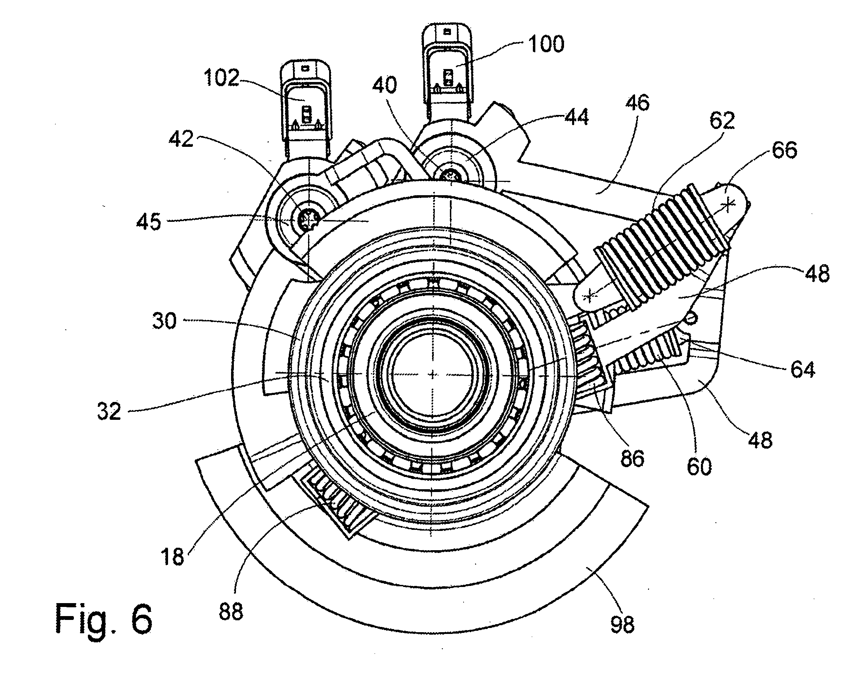

Die Grundkonstruktion des Ausführungsbeispiels der Fig. 5 und 6 entspricht dem Ausführungsbeispiel der Fig. 1 bis 4. Für analoge bzw. entsprechende Komponenten sind die gleichen Bezugszeichen wie in den Fig. 1 bis 4 eingetragen. Die Fig. 5 und 6, speziell die axiale Ansicht gemäß Fig. 6, können auch zum Verständnis des Aufbaus und der Funktionsweise der Ausführungsform gemäß Fig. 1 bis 4 herangezogen werden. So sind in den Fig. 5 und 6 verschiedene der Anschlagfedern erkennbar.

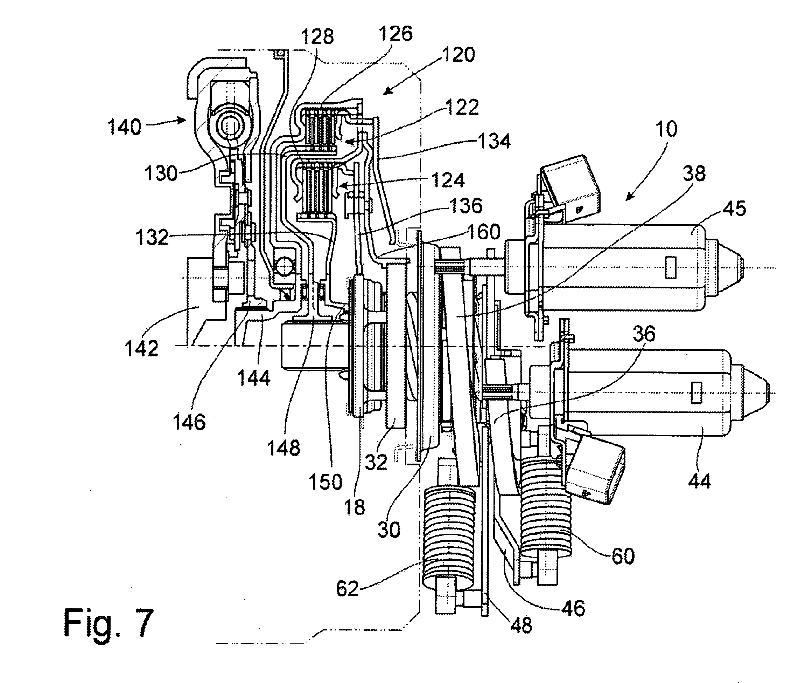

Fig. 7 zeigt ein Betätigungsmodul 10 in einer im Wesentlichen der Konstruktion gemäß Fig. 1 bis 4 sowie der Fig. 5 und 6 entsprechende Bauart in Kombination mit einer Doppelkupplung 120, die zwei nasslaufende Lamellenkupplungsanordnungen 122 und 124 aufweist. Die Lamellenkupplungsanordnungen 122 und 124 sind jeweils von an einem Außenlamellenträger 126 bzw. 128 gehaltenen Außenlamellen und an einem Innenlamellenträger 130 bzw. 132 gehaltenen Innenlamellen gebildet, die mittels einer nur schematisch angedeuteten Membranfeder 134 bzw. 136 zwischen einem Abstützbereich des Außenlamellenträgers und einem Anpressglied in Einrückrichtung gegeneinander vorgespannt sind. Es handelt sich also um Lamellenkupplungsanordnungen vom NC-Typ. Die beiden Innenlamellenträger dienen jeweils als Ausgangsseite der betreffenden Lamellenkupplungsanordnungen. Die Außenlamellenträger sind zur gemeinsamen Drehung verbunden und bilden die Eingangsseite der Doppelkupplung, die über einen Torsionsschwingungsdämpfer oder ein Zwei-Massen-Schwungrad 140 und eine Flexplatte 142 an der Ausgangswelle (nicht dargestellt) eines Verbrennungsmotors angebunden bzw. anbindbar ist. Die Eingangsseite weist eine Nabe 144 auf, die über Steckverzahnungen mit einer Nabe 146 des Torsionsschwingungsdämpfers bzw. Zwei-Massen-Schwungrad 140 drehgekoppelt ist. Die Innenlamellenträger weisen jeweils eine Nabe 148 bzw. 150 auf, die mittels einer Steckverzahnung mit einer zugeordneten Getriebeeingangswelle von zwei radial geschachtelten Getriebeeingangswellen des Getriebes zur gemeinsamen Drehung gekoppelt sind.

Die Doppelkupplung 120 und das Betätigungsmodul 10 sind vermittels des Stützlagers 32 und eines an der Eingangsseite festgelegten, sich mit dieser mitdrehenden Scheibenteils 160 der Doppelkupplung zu einer Einbau-Baueinheit kombiniert, d. h. zusammenmontiert, so dass die Doppelkupplung und das Betätigungsmodul gemeinsam, als Einheit, in einem Kraftfahrzeug-Antriebsstrang zwischen dem Verbrennungsmotor oder allgemein einer Antriebseinheit und dem Doppelkupplungsgetriebe montierbar sind. Die Doppelkupplung 120 und das Betätigungsmodul 10 bzw. deren Bestandteile werden vorzugsweise derart kombiniert und aneinander montiert, dass Projektionstoleranzen hinsichtlich der axialen Lage der Membranfederzungenenden der Membranfedern 134 und 136 ausgeglichen und im eingerückten Zustand der beiden Kupplungsanordnungen eine definierte Vorspannung auf das Ausrücklager 18 bzw. 30 ausgeübt werden, so dass das membranfederzungenseitige Ringteil des jeweiligen Ausrücklagers sich mit der Membranfeder und damit mit der Eingangsseite mitdreht. Abweichend von den vorangehend behandelten Figuren ist das Ausrücklager 18 des inneren Betätigungsglieds mit einem radial vorstehenden Ringteil ausgeführt, welches an den Membranfederzungen der Membranfeder 136 angreift. Das Ausrücklager 30 ist in durchgezogenen Linien in einer dem eingerückten Zustand der Lamellenkupplungsanordnung 122 entsprechenden Stellung gezeigt. Zusätzlich ist dieses Ausrücklager in einer einem ausgerückten Zustand der Lamellenkupplungsanordnung 122 entsprechenden Axialstellung angedeutet, entsprechend dem in Fig. 7 dargestellten Betätigungszustand der Membranfeder 134.

Im Zuge der Montage der Doppelkupplung 120 und des Betätigungsmoduls 10 zu der Einbau-Baueinheit werden auch die Drehstellungen der Aktuator-Halterungen relativ zum das Stützglied haltenden Körperteil und damit die relativen Positionen der Abtriebsritzel der Aktuatoren und der halterungsseitigen Kugelköpfe für die Kompensationsfederanordnungen 60 und 62 eingestellt und fixiert. Es wird eine derartige jeweilige Drehstellung eingestellt und fixiert, dass in dem eingerückten Zustand der betreffenden Lamellenkupplungsanordnung 122 bzw. 124 durch die Membranfeder 134 bzw. 136 eine definierte Vorlast auf das zugeordnete Ausrücklager 18 bzw. 30 wirkt. Dies kann zweckmäßig so eingestellt werden, dass die beiden Betätigungsglieder zuerst mit ihrem Ausrücklager an die Membranfederzungen angelegt und dann durch Verdrehung unter gleichzeitiger axialen Verstellung relativ zum Stützglied entsprechend einem definierten Drehmoment unter leichter Auslenkung der Membranfederzungen weiter verstellt werden, so dass die Membranfederzungen eine entsprechende axiale Kraft auf das betreffende Ausrücklager 18 bzw. 30 ausüben. Zweckmäßig kann die axiale und Drehverstellung der Betätigungsglieder gemeinsam mit einer Drehverstellung der zugeordneten Aktuatorhalterung 46 bzw. 48 erfolgen, beispielsweise in der Weise, dass das Zahnradsegment des betreffenden Betätigungsglieds vermittels der dem eingerückten Zustand entsprechenden Anschlagfeder in der Anlage an der Aktuatorhalterung gehalten wird und die Aktuatorhalterung bei der Einstellung der Vorlast mitverdreht (ggf. wiederholt, zur Eliminierung von Setzvorgängen) und dann in der erreichten Drehstellung an dem das Stützglied haltenden Körperteil fixiert wird. Im Falle einer Konstruktion gemäß Fig. 1 bis 6 erfolgt diese Fixierung durch Aufschrauben von Muttern oder dergleichen auf die betreffenden Bolzen 50 bzw. 54. Im Falle einer Auslegung entsprechend den Fig. 1 bis 6 ist mit der Vorlast zugleich auch der Übertotpunktwinkel der Kompensationsfederanordnung 60 bzw. 62 eingestellt und auch der Aktuator 44 bzw. 45 richtig in Bezug auf das Zahnradsegment 36 bzw. 38 positioniert.

Alternativ - vor allem bei anderer Ausgestaltung des Betätigungsmoduls - kann man aber auch eine voneinander unabhängige Einstellung der Vorlast einerseits und des Übertotpunktwinkels andererseits realisieren. Die Montage kann beispielsweise wie folgt erfolgen:
1. Es werden die Doppelkupplung und das Betätigungsmodul über das Stützlager zusammengebaut.
2. Danach werden beide Betätigungsglieder (auch als Spindelmuttern bezeichenbar) mit definiertem Drehmoment, vorzugsweise automatisiert, an die Membranfederzungen der Doppelkupplung angelegt. Hierbei wird die für die Ausrücklager notwendige Mindestvorlast eingestellt. Gegebenenfalls ist dieser Vorgang mehrfach durchzuführen, mit zwischenzeitlichem Auskuppeln, um Setzvorgänge zu eliminieren. Um eine stabile Einkuppelposition zu gewährleisten, werden danach oder gleichzeitig die jeweils dem eingerückten Zustand entsprechende Dreh-Endanschläge für die beiden Betätigungsglieder eingestellt und dann in der die Mindestvorlast ergebenden Position fixiert, durch Nieten, Schweißen oder - im Falle einer Konstruktion ähnlich den Fig. 1 bis 7 - durch Aufschrauben von Bolzen oder dergleichen auf Verbindungsbolzen.
3. Nachdem der Anschlag auf der "Einkuppelseite" eingestellt ist, würde als Nächstes der äußere Anlenkpunkt für die Kompensationsfederanordnung des betreffenden Betätigungsglieds eingestellt, um den Übertotpunktwinkel zu justieren. Dies kann zweckmäßig in dem einer geöffneten Kupplungsanordnung entsprechenden Drehstellung des betreffenden Betätigungsglieds erfolgen, oder ebenfalls in der dem eingerückten Zustand der Kupplungsanordnung entsprechenden Stellung. Zweckmäßig kann man eine die Einstellung automatisierende Vorrichtung verwenden.
4. Gewünschtenfalls kann man unabhängig einstellbare Drehanschläge für die Betätigungsglieder entsprechend der ausgekuppelten Position vorsehen, die im Prinzip auch von getriebeseitigen Komponenten gebildet sein könnten. Die Einstellung könnte dann durch Verdrehung des Gesamtsystems in Langlöchern erfolgen. Die getriebeseitigen Anschläge können beispielsweise von federbelasteten Hebeln von Getriebe-Bandbremsen gebildet sein, so dass das Betätigungsmodul zusätzlich auch zur Betätigung der Getriebebremsen genutzt werden kann.

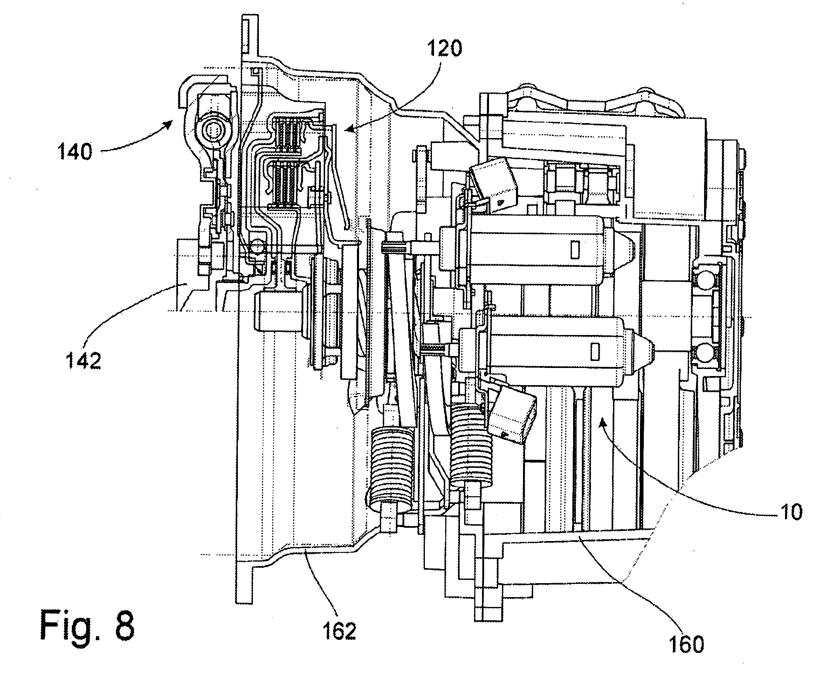

Fig. 8 zeigt die von dem Betätigungsmodul 10 und der Doppelkupplung 120 gebildete Einbau-Baueinheit eingebaut in das Getriebegehäuse 160 und eine daran angeflanschte Getriebegehäuseglocke 162 zwischen dem Getriebe und einer nicht dargestellten Brennkraftmaschine, insbesondere einem Verbrennungsmotor.

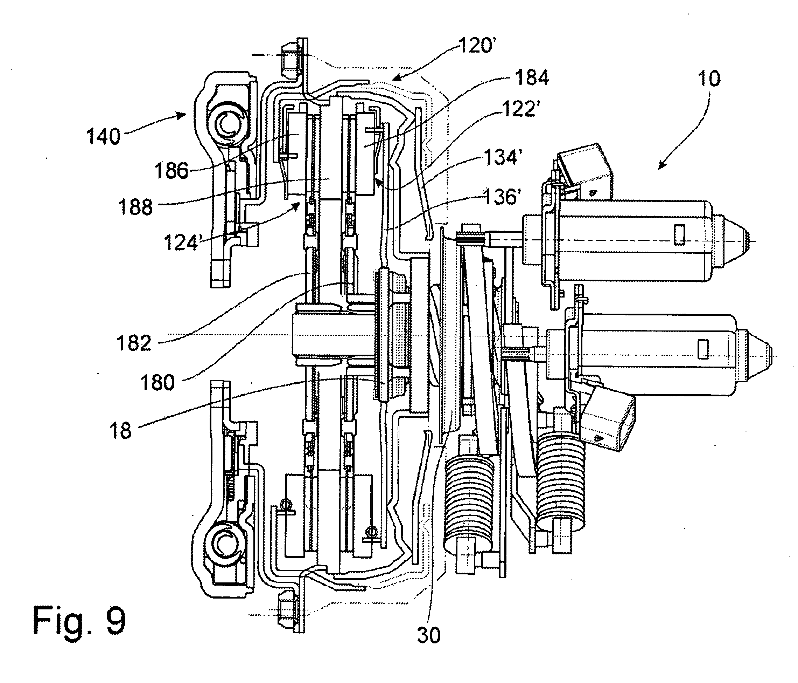

Das zu Fig. 7 Ausgeführte gilt entsprechend auch für Fig. 9. Anstelle einer nasslaufenden Lamellen-Doppelkupplung ist das Betätigungsmodul 10 mit einer trockenlaufenden Reibscheiben-Doppelkupplung 120' zu einer Einbau-Baueinheit kombiniert und zusammenmontiert. Die Doppelkupplung 120' weist eine erste Reibscheibenkupplung 122' und eine zweiten Reibscheibenkupplung 124' auf, die jeweils von einer Kupplungsscheibe 180 bzw. 182 gebildet sind, deren Reibbeläge zwischen einer Anpressplatte 184 bzw. 186 und einer gemeinsamen Gegenplatte 188 einspannbar sind. Die Gegenplatte 188 bildet zusammen mit einem Kupplungsgehäuse eine Eingangsseite der Doppelkupplung, und auch die Anpressplatten 184 und 186, die relativ zur Gegenplatte 188 axial verstellbar und vermittels einer Membranfeder 134' bzw. 136' in Richtung Einspannen der Reibbeläge vorgespannt sind, sind der Eingangsseite zugehörig und in dem Kupplungsgehäuse gehalten. Die Reibscheiben 180 und 182 bilden demgegenüber die jeweilige Ausgangsseite der ersten bzw. zweiten Kupplungsanordnung und weisen eine jeweilige Nabe auf, die über Steckverzahnungen mit einer jeweiligen von zwei radial geschachtelten Getriebeeingangswellen gekoppelt sind.

Zum Ausrücken der Kupplungsanordnungen muss die jeweilige Membranfeder 134' bzw. 136' vermittels des Ausrücklagers 18 bzw. 30 des zugeordneten Betätigungsglieds an den Federzungen axial in Richtung zur Brennkraftmaschine ausgelenkt werden, genauso wie dies für die Membranfedern 134 und 136 zum Ausrücken der Lamellenkupplungsanordnungen 122 und 124 gemäß Fig. 7 der Fall ist. Die Montage und Justage hinsichtlich einer definierten Vorlast kann genau so erfolgen, wie dies vorstehend in Bezug auf die Einbau-Baueinheit der Fig. 7 ausgeführt ist. Die Eingangsseite der Doppelkupplung 120 kann ebenfalls vermittels eines Torsionsschwingungsdämpfers oder eines Zwei-Massen-Schwungrads 140 an einer Abtriebswelle eines Verbrennungsmotors angebunden sein, etwa über eine Flexplatte 142.

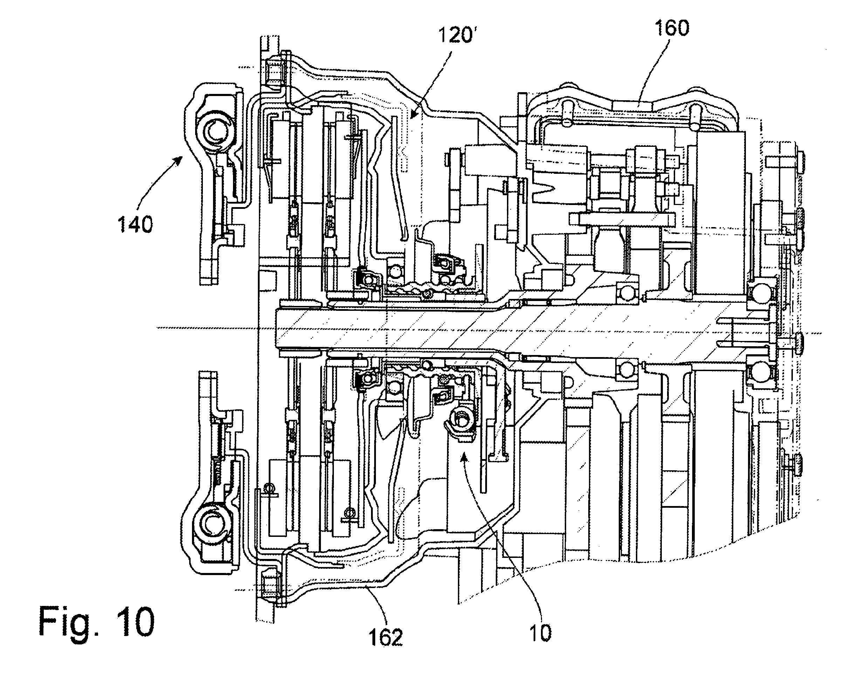

Fig. 10 zeigt die von dem Betätigungsmodul 10 und der Doppelkupplung 120' gebildete Einbau-Baueinheit eingebaut und aufgenommen in ein Getriebegehäuse 160 und eine daran angeflanschte Getriebegehäuseglocke 162.

Bei dem Betätigungsmodul 10 der Fig. 7 und 8 einerseits und der Fig. 9 und 10 andererseits kann es sich um das gleiche Modul oder zumindest um ein Modul identischer Bauart handeln, das also wahlweise entweder mit einer nasslaufenden Lamellen-Doppelkupplung oder einer trockenlaufenden Reibscheiben-Doppelkupplung zum Einsatz kommen kann. Fertigungstoleranzen, speziell Positionstoleranzen betreffend die Membranfederzungenenden im eingerückten Zustand der betreffenden Kupplungsanordnung, können einfach ausgeglichen werden, gewünschtenfalls und sinnvollerweise unter Einstellung einer definierten Vorlast auf das betreffende Ausrücklager. Zugleich oder gesondert wird auch der Übertotpunktwinkel und damit die Kompensationsfederkennlinie eingestellt, so dass die Kompensationsfederkennlinie auf die Ausrückkraftkennlinie der betreffenden Kupplungsanordnung bzw. der diese bestimmende bzw. mitbestimmende Membranfeder abgestimmt ist und insgesamt die gewünschte NO-Charakteristik erreicht wird. Umgekehrt kann im Falle von NO-Kupplungsanordnungen vermittels der Überkompensation durch die Kompensationsfedern eine NC-Gesamtcharakteristik erreicht werden, bei der ebenfalls die Kompensationsfederkennlinie auf die Einrückkraftkennlinie der Kupplungsanordnung bzw. der diese bestimmende bzw. mitbestimmende Membranfeder abgestimmt ist. Um diese Abstimmungen zu erhalten, sollte entweder die Kupplungsanordnung oder das Betätigungsmodul, beispielsweise das betreffende Betätigungsglied, mit einem Verschleißausgleich ausgestattet sein.

Ein großer Vorteil ergibt sich daraus, dass alle Justagen und Montagen der Doppelkupplung einerseits und des Betätigungsmoduls andererseits in Bezug aufeinander schon vor dem Einbau der Einbau-Baueinheit in einem Kraftfahrzeug-Antriebsstrang erfolgen können. Die Montage im Antriebsstrang beim Kraftfahrzeughersteller ist somit wesentlich vereinfacht, und Montage- und Justagefehler können vermieden werden.

Da das gleiche Betätigungsmodul sowohl für nasslaufende als auch für trockenlaufenden Doppelkupplungen einsetzbar ist, ist die Zahl bereitzuhaltender Komponenten reduziert, mit entsprechenden Kosteneinsparungen.

Bei den vorangehend erläuterten Ausführungsbeispielen ist als Stützglied eine hülsenartige Spindel mit einem äußeren und einem inneren Kugelgewindegang verwendet. Eine solche "doppelte" Spindel ist nur vergleichsweise aufwendig herstellbar und dementsprechend kostenaufwendig und nimmt auch vergleichsweise viel radialen Bauraum ein.

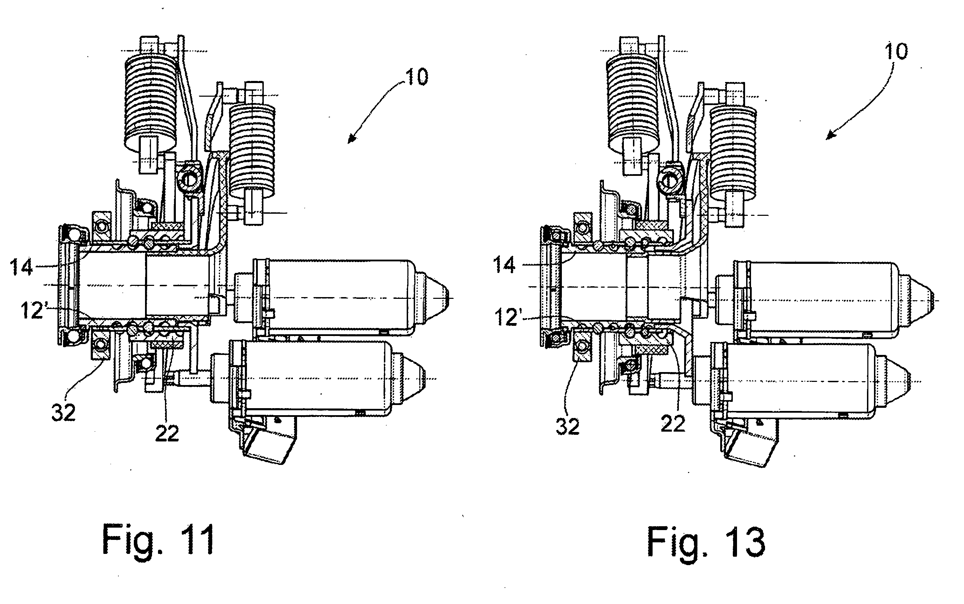

Demgegenüber weisen zwei in den Fig. 11 und 13 gezeigte Ausführungsvarianten des Betätigungsmoduls 10 als Stützglied einen einfachen hülsenartigen Kugelkäfig auf, der zweiseitig, nach radial innen und nach radial außen, wirksam ist, damit Kugeln in den Gewindegängen des äußeren und inneren Betätigungsglieds abrollen können. Es sind also zwei Kugelebenen realisiert, damit die Kugeln bei der Bewegung nur eines Betätigungsglieds im Kugelgewindegang des betreffenden Betätigungsglieds abrollen können. Seitens des Betätigungsglieds tritt also Rollreibung auf, anstelle von einen schlechteren Wirkungsgrad gebender Gleitreibung. Zur Realisierung der zwei Kugelebenen werden dem äußeren Bedienungsglied zugeordnete Kugeln von außen und dem inneren Betätigungsglied zugeordnete Kugeln von innen in den Käfig eingebracht, der die Kugelpositionen durch einen kleineren Durchmesser als die Kugeln aufweisende Öffnungen definiert, die in einer oder zwei den Verlauf der Gewindegänge entsprechenden Spirallinien angeordnet sind. Nimmt man einen schlechteren Wirkungsgrad in Kauf, so könnte auch nur eine Kugelebene realisiert sein, so dass eine jeweilige Kugel einerseits mit dem Gewindegang des äußeren und andererseits mit dem Gewindegang des inneren Betätigungsgliegs eingreift. In diesem Fall hätten die die Kugelpositionen definierenden Öffnungen des Kugelkäfigs einen geringfügig größeren Durchmesser als eine jeweilige Kugel.

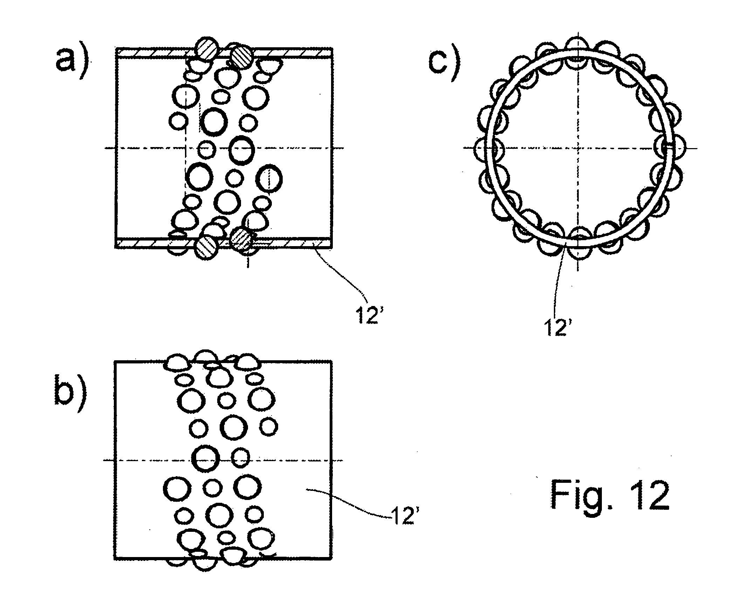

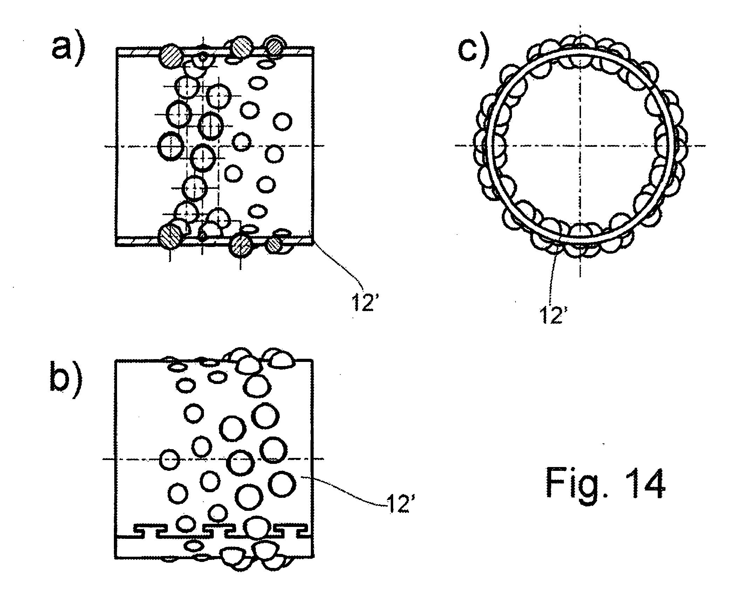

In den Fig. 11 und 13 ist der das Stützglied bildende Kugelkäfig mit 12' bezeichnet und trägt ebenso wie das Stützglied bei den vorangehend beschriebenen Ausführungsbeispielen das Stützlager 32. Fig. 12 zeigt den Kugelkäfig mit den Kugeln gemäß Fig. 11 in einer Querschnittsansicht (Fig. 12a)), in einer seitlichen Draufsicht (Fig. 12b)) und in einer axialen Draufsicht (Fig. 12c)). Fig. 14 zeigt den Kugelkäfig gemäß Fig. 13 ebenfalls in einer Querschnittsansicht (Fig. 14a)), in einer seitlichen Draufsicht (Fig. 14b)) und in einer axialen Draufsicht (Fig. 14c)).

Wie aus den seitlichen Draufsichten ersichtlich, sind bei beiden Ausführungsbeispielen die Kugelhalteöffnungen entlang einer Spirallinie angeordnet, wobei nach Fig. 11 und 12 abwechselnd eine innere und eine äußere Kugel eingesetzt sind und nach Fig. 13 und 14 zuerst der Satz von inneren Kugeln und danach der Satz von äußeren Kugeln eingesetzt sind. Man könnte zweckmäßig auch zwei parallel und gleichläufig verlaufende Spirallinien von Halteöffnungen vorsehen, von denen die Halteöffnungen der einen Spirallinie die inneren und die Halteöffnungen der anderen Spirallinie die äußeren Kugeln aufnehmen.

Ein solcher Kugelkäfig ist sehr einfach und kostengünstig herstellbar. Beispielsweise kann der Käfig aus einem Blech hergestellt werden, in welches die Kugelbohrungen beidseitig eingestanzt und eingeprägt werden. Aus dem Blech kann dann die hülsenartige Kugelkäfigform geformt werden, wobei man einen formschlüssigen Eingriff zwischen den zusammengefügten Blechenden vorsehen kann, wie in Fig. 14b) veranschaulicht.

Man kann auch daran denken, den Kugelkäfig aus zwei gesonderten Blechteilen zu fertigen, vorzugsweise zwei baugleichen Blechteilen, in denen die Kugelbohrungen jeweils nur aus einer Richtung in den Blech gestanzt und geprägt sind. Die beiden Blechteile können dann formschlüssig, stoffschlüssig oder kraftschlüssig miteinander verbunden werden, um den Kugelkäfig mit den nach innen und außen wirksamen Halteöffnungen zu bilden.

Ein einseitiger Kugelkäfig kann ähnlich einer Kugelbuchse ausgeführt sein. Insgesamt ist die Herstellung einfach und kann unter Verwendung üblicher Stanz- und Umformwerkzeuge erfolgen.

Bezogen auf alle vorstehend behandelten Ausführungsformen und Ausführungsvarianten ist darauf hinzuweisen, dass Abwandlungen für den Fachmann ohne weiteres in Betracht kommen. So kann man daran denken, das Stützglied oder für beide Betätigungsglieder jeweils ein gesondertes Stützglied über eine Drehlageranordnung an dem den Aktuator bzw. die Aktuatoren haltenden Körperteil zu lagern und mit dem Zahnradsegment auszuführen oder sonst wie durch den jeweiligen Aktuator drehantreibbar zu machen, um dieses somit als Drehglied ausgeführte Stützglied mittels des Aktuators zur axialen Verstellung des Betätigungsglieds zur Drehung anzutreiben.

Aus den vorstehend behandelten Ausführungsformen, Ausführungsvarianten und Modifikationen ergeben sich für den Fachmann ohne weiteres auch analog ausgeführte Betätigungseinrichtungen bzw. Spindel-Betätigungsmodule für eine nur eine Reibungskupplungsanordnung, etwa eine Lamellenkupplungsanordnung oder Reibscheibenkupplungsanordnung, aufweisende Einfachkupplung, indem einer der Aktuatoren und das diesem zugeordnete Betätigungsglied weggelassen wird.

Weitere Ausführungsbeispiele und Ausführungsvarianten von für Einfachkupplungen vorgesehene Betätigungseinrichtungen werden im Folgenden erläutert. Ohne Beschränkung der Allgemeinheit wird wiederum davon ausgegangen, dass die zugeordnete Einfachkupplung eine Kupplungsanordnung vom NC-Typ aufweist, wobei allerdings mittels einer Kompensationsfeder eine Gesamt-Systemcharakteristik vom NO-Typ realisiert sein kann, wenn dies gewünscht ist. Für den Fachmann ergeben sich hieraus ohne weiteres auch entsprechende Betätigungseinrichtungen, die zur Betätigung einer Einfachkupplung mit einer Kupplungsanordnung des NO-Typs vorgesehen ist, wobei ebenfalls durch Überkompensation mittels einer Kompensationsfeder eine NC-Gesamtcharakteristik erreicht sein kann, wenn dies gewünscht ist.

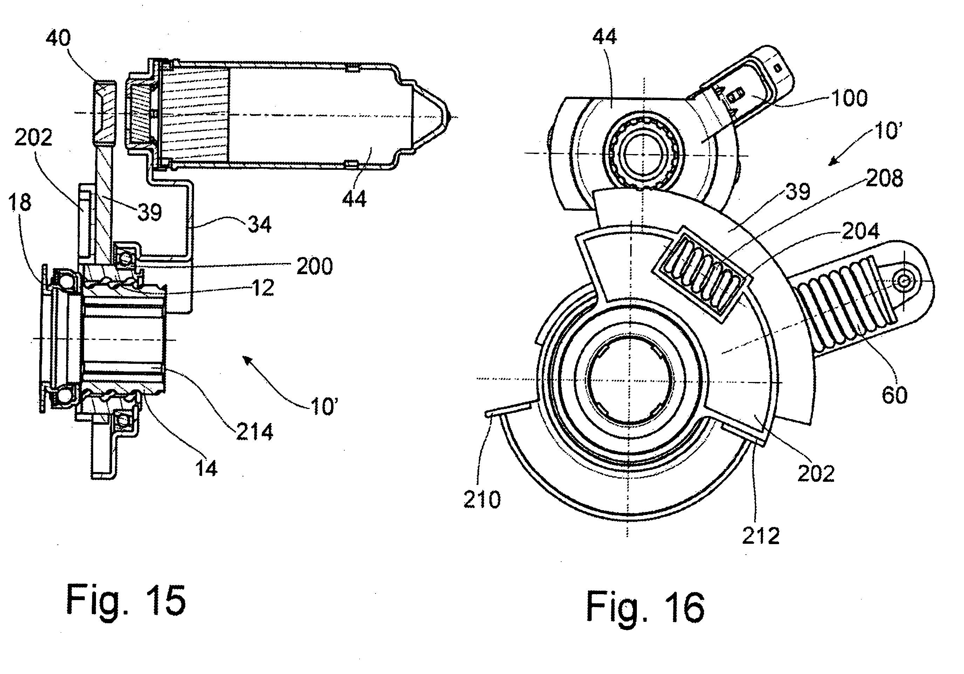

Die auch als Spindel-Betätigungsmodul bezeichenbare Betätigungseinrichtung 10' gemäß Fig. 15 bis 17 ist zur Betätigung einer Einfachkupplung mit nur einer Reibungskupplungsanordnung, beispielsweise einer Lamellenkupplungsanordnung oder einer Reibscheibenkupplungsanordnung, vorgesehen und weist dementsprechend nur ein Betätigungsglied 14 auf, welches ein Ausrücklager 18 trägt. Eine Besonderheit ist, dass das radial außerhalb des Betätigungsglieds vorgesehene Stützglied 12 über ein Drehlager 200 an dem den Aktuator 44 haltenden Körperteil 34 angeordnet ist. Dieses als Drehteil ausgeführte Stützglied 22 ist vermittels des Drehlagers axial stationär gehalten und weist fest damit verbunden ein Zahnradsegment 39 auf, welches mit dem Abtriebsritzel 40 des Aktuators 44 kämmt. Die außen an einem Ausleger des Körperteils angelenkte Kompensationsfederanordnung 60 ist radial innen am Stützglied 12 oder - vorzugsweise - am Zahnradsegment 39 angelenkt.

Um den Drehverstellbereich für das Stützglied 12 und damit den axialen Verstellbereich für das über in den Kugelgewindegängen laufende Kugeln gemäß der Steigerung der Kugelgewindegänge mit dem Stützglied gekoppelte Betätigungsglied 14 elastisch zu begrenzen, ist am Außenumfang des Stützglieds 12 angrenzend zum Zahnradsegment 29 ein Anschlagscheibenteil 202 angeordnet. Sowohl das Anschlagscheibenteil 202 wie auch das Zahnradsegment 39 weisen jeweils ein Federfenster 204 bzw. 206 auf. In die Federfenster 204 und 206 ist eine gemeinsame Anschlagfeder 208 eingesetzt, derart, dass die Anschlagfeder in beide Fenster eingreift. Das Körperteil 32 weist an einem radial vorstehenden Abschnitt Anschläge 210 und 212 auf, gegen die das Anschlagscheibenteil 202 drehbar ist und die unter Vermittlung der Anschlagfeder 208 auch als abgefederte Anschläge für das Zahnradsegment 39 wirken.

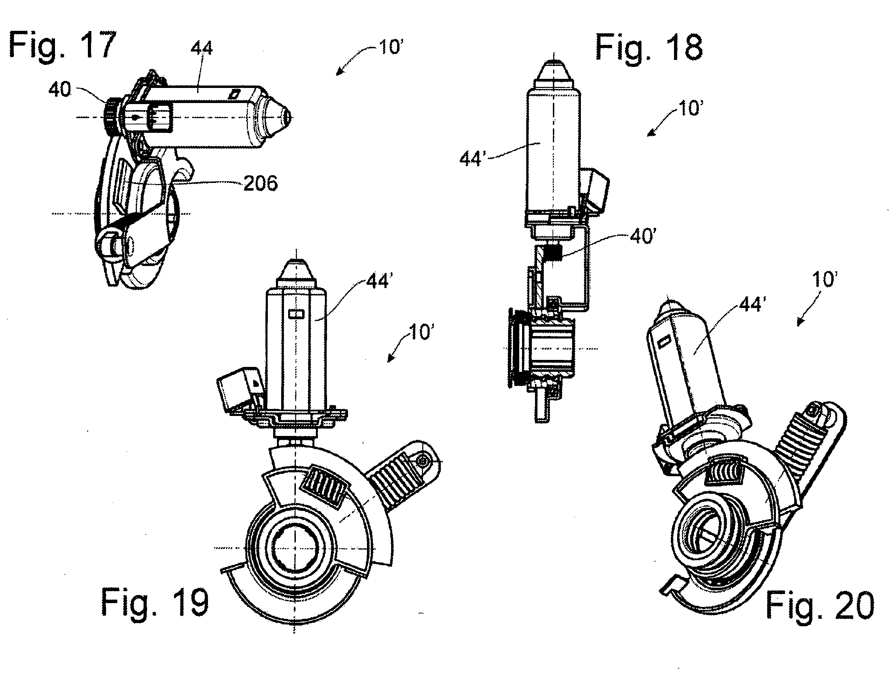

Die Ausführungsvariante der Betätigungseinrichtung 10' gemäß Fig. 18 bis 20 unterscheidet sich nur durch eine andere Anordnung und Orientierung des Aktuators 44', wobei anstelle eines von dem Abtriebsritzel und dem am Außenumfang des Zahnradsektors vorgesehenen Zahnkranzsegment gebildeten Zahnradgetriebes eine Art Kronenradgetriebe gebildet ist, bei dem das Zahnradsegment in einem radial äußeren Randbereich ein axial gerichtetes Zahnkranzsegment aufweist, welches mit dem Abtriebsritzel 40' kämmt.

Bei beiden Ausführungsformen mit dem als Drehglied ausgeführten Stützglied 12 ist eine Abstützung des Betätigungsglieds 14 gegen eine Verdrehung nicht zwingend, aber im Prinzip möglich, beispielsweise auf Basis von Eingriffsformationen 214 am Innenumfang, die in stationäre Gegenformationen etwa eines die Getriebeeingangswelle umgebenden Hülsenteils eingreifen, wobei die Formationen und Gegenformationen derart ausgeführt sind, dass eine ungehinderte axiale Verstellung des Betätigungsglieds 14 möglich ist. Eine andere Möglichkeit ist, eine radiale Führung des Betätigungsglieds 14 am Außenumfang der Getriebeeingangswelle vorzusehen.

Eine definierte Einstellung einer Vorlast auf das Ausrücklager 18 kann dadurch erfolgen, dass das Zahnradsegment 39 in einer definierten, diese Vorlast auf das Ausrücklager und ggf. auch - wenn gewünscht - eine definierte Übertotpunktkonfiguration der Kompensationsfeder 60 ergebenden relativen Drehposition am Stützglied 12 befestigt wird.

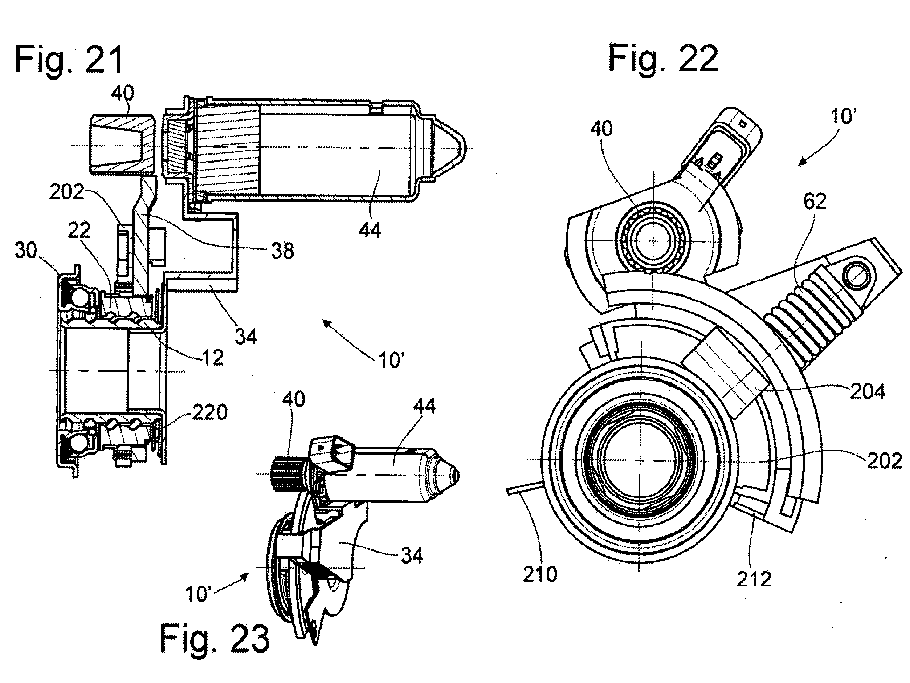

Bei der Ausführungsform der Fig. 21 bis 23 ist - wie bei den in den Figuren gezeigten Ausführungsformen für die Doppelkupplung - ein stationäres, also auch sich nicht drehendes Stützglied 12 vorgesehen, welches fest mit dem den Aktuator 44 haltenden Körperteil 34 verbunden ist. Das axial verstellbare und zur Drehung antreibbare (also als Drehglied ausgeführte) Betätigungsglied 22 umschließt radial außen das Stützglied 12, und es ist wie bei den Ausführungsformen der Fig. 15 bis 19 und den sich auf die Doppelkupplung beziehenden Ausführungsformen gemäß Fig. 1 bis 10 ein durch Kugeln vermittelter Eingriff zwischen Kugelgewindegängen des Stützglieds einerseits und des Betätigungsglieds andererseits realisiert, der eine mittels dem Aktuator dem Drehglied, hier das Betätigungsglied 22, erteilte Drehbewegung in eine axiale Bewegung des Betätigungsglieds umsetzt. Das Betätigungsglied 22 trägt das Ausrücklager 30.

Wie bei den Ausführungsformen gemäß Fig. 15 bis 20 ist ein Anschlagscheibenteil 202 vorgesehen, das hier drehbar an einem axial vorstehenden Flansch des Zahnradsegments 38 gelagert ist, wobei über eine in ein jeweiliges Federfenster (Federfenster 204 des Anschlagscheibenteils) angreifende Anschlagfeder eine elastische Drehkopplung zwischen dem Zahnradsegment 38 und dem Anschlagscheibenteil 202 realisiert ist, um mittels der körperteilseitigen Anschläge 210 und 212 eine in beide Drehrichtungen wirksame elastische Drehbereichsbegrenzung für das Betätigungsglied 22 und damit eine elastische Axialverstellungsbereichsbegrenzung für das Betätigungsglied 22 zu realisieren.

Eine Besonderheit bei der Ausführungsform der Fig. 21 bis 23 ist, dass zwischen dem Körperteil 34 und dem Betätigungsglied 22 eine Vorlastfeder 220 wirkt, und dass das Zahnradsegment 38 als gegenüber dem Betätigungsglied gesondertes Drehglied ausgeführt ist und in einer ersten axialen Stellung relativ zum Betätigungsglied 22 nicht mit diesem zur gemeinsamen Drehung gekoppelt ist, so dass das Betätigungsglied 22 relativ zum Zahnradsegment 38 verdrehbar ist. Eine solche Verdrehung kann beispielsweise infolge einer axialen Verstellung des Betätigungsglieds 22 durch die axiale Kraft der Vorspannfeder 220 erfolgen, um eine definierte Vorlast für das Ausrücklager 30 einzustellen. Das Ausrücklager 30 drückt dabei auf die Membranfederzungenenden der Membranfeder der zugeordneten Kupplung, mit der die auch als Betätigungsmodul bezeichenbare Betätigungseinrichtung 10' zu einer Baugruppe zusammengebaut ist. In Fig. 21 ist das Zahnradsegment 38 in einer weiter rechts liegenden Stellung dargestellt, in der das Zahnradsegment 38 von dem Betätigungsglied 22 entkoppelt ist. In einer weiter links liegenden relativen Axialstellung greifen Mitnahmeformationen am Innenumfang des Lagerflansches für das Anschlagscheibenteil 202 in Mitnahmeformationen am Außenumfang des Betätigungsglieds 22 ein, so dass das Zahnradsegment 38 und das Betätigungsglied 22 drehfest miteinander verbunden sind. Eine radiale Führung des Zahnradsegments 38 ist durch eine radial innere Führungsfläche des Zahnradsegments und eine den Mitnahmeformationen axial benachbarte Führungsfläche am Außenumfang des Betätigungsglieds 22 realisiert.

Die Kompensationsfeder 62 ist radial innen am Zahnradsegment 38 angelenkt, und das Zahnradsegment 38 kämmt mit einem Zahnkranz am Außenumfang mit dem Abtriebsritzel 40 des Aktuators 44. In der in Fig. 21 dargestellten Stellung des Zahnradsegments 38 wirkt aufgrund der Entkopplung vom Betätigungsglied 22 alleine die Vorspannfeder 220 auf das Betätigungsglied 22, so dass durch Halten des Zahnradsegments 38 in dieser Stellung bzw. Überführen und Halten des Zahnradsegments 38 in dieser Stellung automatisch die Vorlasteinstellung für das Ausrücklager 30 erfolgen kann. In der dann erreichten, ggf. auch eine Positionstoleranz der Membranfederzungenenden ausgleichenden Axialstellung und damit Drehstellung des Betätigungsglieds 22 wird dann das Zahnradsegment 38 in Richtung zur Kupplung (in Fig. 20 nach links) verschoben, um die Mitnahmeformationen in gegenseitigen Eingriff zu bringen und damit das Zahnradsegment 38 drehfest mit dem Betätigungsglied 22 zu verbinden. Diese axiale Verstellung kann auf Basis einer leichten Schrägstellung der als Druckfeder ausgeführten Kompensationsfeder 62 durch von der Kompensationsfeder ausgeübte, in axialer Richtung wirkende Kräfte erfolgen. Ist diese Drehmitnahmekopplung hergestellt, so wird durch die Steigung der Kugelgewindegänge eine durch den Aktuator 44 vermittels des Zahnradsegments 38 dem Betätigungsglied 22 erteilte Drehbewegung in eine axiale Bewegung des Betätigungsglieds zur Betätigung der Kupplung mittels des Ausrücklagers umgesetzt.

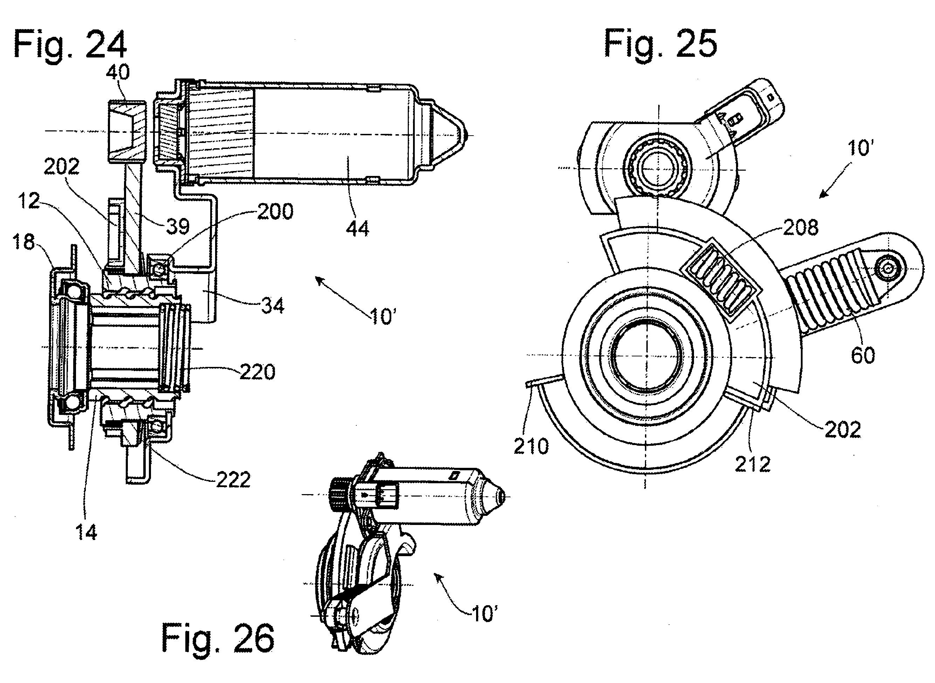

Bei der Ausführungsform der Fig. 24 bis 26 sind die Konstruktionsprinzipien der Ausführungsformen gemäß Fig. 15 bis 20 einerseits und 21 bis 23 andererseits kombiniert. Wie bei den Lösungen gemäß Fig. 15 bis 20 ist das als Drehglied ausgeführte Stützglied 12 vorgesehen. Auf das radial innen angeordnete Betätigungsglied 14 wirkt die Vorspannfeder 220, wobei das gesondert ausgeführte Zahnradsegment 39 in einer ersten, gemäß Fig. 23 weiter rechts liegenden Axialstellung eine Verdrehung des Stützglieds 12 in Folge einer axialen Verstellung des Betätigungsglieds 14 durch die Vorspannkraft der Vorspannfeder 220 ohne Mitdrehen des Zahnradsegments 39 zulässt und in einer zweiten, gemäß Fig. 23 weiter links liegenden, in der Figur dargestellten Stellung über Drehmitnahmeformationen mit dem Stützglied 12 zur gemeinsamen Drehung verbunden ist. Zur axialen Verstellung des Zahnradsegments 39 in den Drehmitnahmeeingriff ist ein zwischen dem Drehlager 200 und dem Zahnradsegment 39 eingespannter Federring 222 vorgesehen. Die Einstellung der Vorlast auf das Ausrücklager 18 kann in entsprechender Weise wie für die Ausführungsform der Fig. 21 bis 23 erläutert erfolgen.

Auch für die Ausführungsform der Fig. 24 bis 27 ist eine radiale Führung des Betätigungsglieds 14 auf der Getriebeeingangswelle sinnvoll. Wird das Zahnradsegment 39 durch den Aktuator 44 verdreht, so resultiert eine entsprechende Verdrehung des Stützglieds (auch als Spindelmutter bezeichenbar) und entsprechend der Steigung der Kugelgewindegänge wird dem Betätigungsglied 14 (auch als Spindelwelle bezeichenbar) eine axiale Bewegung zur Betätigung der Kupplung mittels des fest mit dem Betätigungsglied 14 verbundenen Ausrücklager 18 erteilt.

Die Montage und die Einstellung der Vorlast auf das Ausrücklager kann beispielsweise wie folgt erfolgen. Die vom Zahnradsegment, dem Anschlagscheibenteil, der Anschlagfeder und der Kompensationsfeder gebildete Baugruppe wird axial in der Axialstellung ohne Drehmitnahmeeingriff mit dem Drehglied (Betätigungsglied 22 bzw. Stützglied 12) gehalten, beispielsweise mittels eines Hakens am Körperteil bzw. Gehäuse eingehängt oder mittels eines Bajonettverschlusses gehalten. Beim bzw. nach dem Zusammenbau mit der zugeordneten Kupplung stellt sich durch die Vorspannfeder 220 automatisch die Vorlast auf das Ausrücklager 18 bzw. 30 ein. Danach wird dann, vor einer ersten Kupplungsbetätigung, das Zahnradsegment zur axialen Verstellung in den Drehmitnahmeeingriff mit dem Drehglied freigegeben, unter der Wirkung der Kompensationsfeder oder des Federrings 222. Diese Freigabe kann beispielsweise mittels des Aktuators 44 erfolgen, indem dieser das Zahnradsegment 38 bzw. 39 um einen kleinen Drehwinkel von beispielsweise ein Paar Grad in einer definierten Richtung, insbesondere in die Einkuppelrichtung, gegen die Wirkung der Anschlagfeder dreht, wodurch die angesprochene, das Zahnradsegment aufweisende Einheit sich vom Haken bzw. dem Bajonettverschluss löst, beispielsweise ausschnappt und dann durch die angesprochene axiale Federwirkung auf dem Drehteil axial in den Drehmitnahmeeingriff mit dem Drehteil verschoben wird, sich also mit diesem formschlüssig verbindet. Der Eingriff zwischen dem Abtriebsritzel 40 bzw. 44 und dem Zahnkranzsegment des Zahnradsegments ist derart, dass die zur Herstellung dieses Drehmitnahmeeingriffs sowie im Falle der Ausführungsform gemäß Fig. 20 bis 22 die Axialverstellung des Betätigungsglieds 22 zur Kupplungsbetätigung ohne weiteres möglich ist. Die Drehachse des Aktuators 44 ist hierzu parallel zur Getriebeachse, um eine axiale Verschiebung des Zahnradsegments relativ zum Abtriebsritzel 40 bzw. 44 zu ermöglichen. Das Abtriebsritzel und Zahnradsegment sind für die axiale Verschiebung mit Gradverzahnungen ausgeführt.

Eine andere, beispielsweise für die Ausführungsformen der Fig. 15 bis 20 zweckmäßige Möglichkeit zur Vorlasteinstellung ist, dass die Kupplung und das Betätigungsmodul nacheinander im Antriebsstrang montiert werden, wobei nach Montage der Kupplung die Vorlast durch axiales Verschieben des Ausführungsmoduls 10' einschließlich des Aktuators eingestellt wird. Im Falle eines axial feststehenden Drehteils ermöglicht dies eine zur Getriebeachse nicht-parallele Aktuatordrehachse, etwa entsprechend Fig. 18 bis 20.

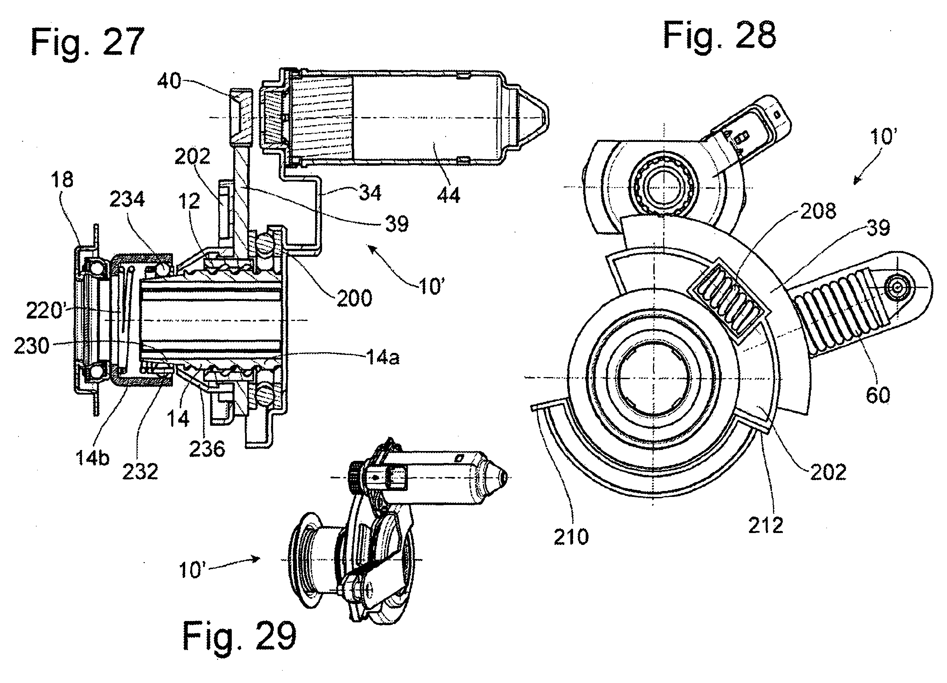

Das Ausführungsbeispiel der Fig. 27 bis 29 beruht auf dem Konstruktionsprinzip der Ausführungsformen der Fig. 15 bis 20 und 24 bis 26. Durch den Aktuator 44 vermittels des Zahnradsegments 39 drehantreibbares Drehglied ist nicht das Betätigungsglied 14, sondern das axial vermittels des Drehlagers 200 am Körperteil 34 festgehaltene Stützglied 12. Das Zahnradsegment 39 ist in Abweichung von der Ausführungsform der Fig. 23 bis 25 allerdings fest am Stützglied 12 angebracht, ähnlich wie bei den Ausführungsformen der Fig. 15 bis 20. Es ist auch das Anschlagscheibenteil 202 vorgesehen, das vermittels der Anschlagfeder 208 mit dem Zahnradsegment 39 gekoppelt ist, um eine elastische Drehverstellbereichbegrenzung an den Anschlägen 210 und 212 vorzusehen.

Besonderheit der Ausführungsform der Fig. 27 bis 29 ist, dass das Betätigungsglied 14 mit einem integrierten Verschleißausgleichsmechanismus ausgeführt ist. Hierzu weist das Betätigungsglied 14 ein erstes, über Kugelgewindegände mit dem Stützglied 12 gekoppeltes Teilglied 14a auf, sowie ein zweites, das Ausrücklager 18 tragendes Teilglied 14b, welches topfartig oder hülsenartig ausgeführt ist. Das erste Teilglied 14a ist mit einem sich in Richtung zum Ausrücklager 18 verjüngenden Eingriffs- oder Koppelabschnitt 230 ausgeführt, welcher von einem Kugelkäfig 232 umgeben ist, der Sperr- oder Klemmkugeln 234 führt. In der in Fig. 27 erkennbaren Relativstellung sind die Sperrkugeln 234 zwischen dem Koppelabschnitt 230 und einer Innenumfangsfläche des zweiten Teilglieds 14b geklemmt, so dass die relative axiale Positionierung der Teilglieder 14a und 14b fixiert ist. Insbesondere kann sich das zweite Teilglied 14b unter der Wirkung von den auf das Ausrücklager 18 drückenden Membranfederzungenenden nicht weiter in Richtung zum Stützglied 12 relativ zum ersten Teilglied 14a verlagern, da der Durchmesser des Koppelabschnitts 230 in dieser Richtung zunimmt.

Zwischen dem Kugelkäfig 232 und dem zweiten Teilglied 14b ist eine Vorspannfeder 220' wirksam, die einerseits eine Funktion ähnlich der Vorspannfeder 220 der Ausführungsform der Fig. 24 bis 26 erfüllt, zur Einstellung einer definierten Vorlast auf das Ausrücklager 18, und andererseits in einer Betriebsstellung entsprechend Fig. 27 die Sperrkugeln 234 in dem Klemmeingriff mit dem Koppelabschnitt 230 und der Innenumfangsfläche des Topfteils 14b des zweiten Teilglieds hält.

Um den Klemmeingriff der Sperrkugeln 134 in einem Einstell-Betriebszustand aufzuheben, ist das Stützglied 12 mit einem als sich verjüngendes Hülsenteil ausgeführtem Entriegelanschlag 236 ausgeführt, an dem der Kugelkäfig 232 am Ende des axialen Verstellwegs des ersten Teilglieds 14a in Richtung einer einem vollständig eingerückten Zustand der zugeordneten Kupplung entsprechenden Stellung anschlägt, so dass der Kugelkäfig mit den Klemmkugeln 234 ein letztes Stellweginkrement bis zum Erreichen der dem vollständig eingerückten Zustand entsprechenden, gemäß Fig. 26 am weitesten rechts liegenden Endposition nicht mitmacht und zusammen mit den Klemmkugeln 234 durch den Entriegelanschlag 236 relativ zu dem sich das letzte Stellweginkrement weiter bewegenden Teilglieds 14a in Richtung zum freien, den kleinsten Durchmesser aufweisenden Ende des Kuppelabschnitts verschoben wird. Nun ist der Klemmeingriff der Klemmkugeln 234 aufgehoben und die Vorlastfeder 220' kann nun im Zusammenspiel mit der Membranfeder eine definierte Vorspannung auf das Ausrücklager 18 einstellen. Es stellt sich zwischen der Membranfeder und der Vorspannfeder 220' ein Kraftgleichgewicht ein, welches einer bestimmten axialen Relativstellung zwischen den Teilgliedern 14a und 14b entspricht.

Diese Einstellung der Vorlast und damit der wirksamen axialen Länge des Betätigungsglieds 14 erfolgt einerseits nach dem Zusammenbau des Betätigungsmoduls 10' mit einer zugeordneten Reibungskupplung zu einem Einbau-Modul oder nach dem Zusammenbau des Betätigungsmoduls 10' mit der zuvor schon im Antriebsstrang montierten Kupplung bei der Eingliederung in den Antriebsstrang. Es braucht hierzu nur das Betätigungsglied in die einem vollständig eingerückten Zustand der Kupplung entsprechende Axialposition verstellt werden, was mittels des Aktuators 44 erfolgen kann. Andererseits erfolgt diese Einstellung immer wieder, wenn das Betätigungsglied 14 diese Axialstellung einnimmt. Hierdurch erfolgt automatisch ein Verschleißausgleich etwa entsprechend einem Abrieb von Reibbelägen der Kupplungsanordnung. Abnehmende Dicke von Reibbelägen etwa einer Reibscheibenanordnung bei einer Kupplung des NC-Typs üblicher Bauart hat zur Folge, dass die Membranfederzungenenden im vollständig eingekuppelten Zustand sich weiter weg vom Kupplungsgehäuse in Richtung zum Getriebe bzw. zum Betätigungsmodul 10' bewegen, was durch eine entsprechende Verkürzung der wirksamen Gesamtlänge des Betätigungsglieds 14 auszugleichen ist. Entsprechend kann auch eine je nach Bauart der Kupplung unter Umständen auftretende Verlagerung der Membranfederzungenenden durch Verschleiß in der entgegengesetzten Richtung, also weg vom Getriebe bzw. weg von dem Betätigungsmodul 10' in Richtung zum Kupplungsgehäuse, ausgeglichen werden, nämlich durch eine entsprechende Verlängerung der wirksamen axialen Länge des Betätigungsglieds 14.

In der dem ausgekuppelten Zustand entsprechenden axialen Endposition des Teilglieds 14a stellt die Vorspannfeder 220' also eine gewisse relative Axialstellung des zweiten Teilglieds 14b in Bezug auf das erste Teilglied 14a ein. Wird dann die Kupplung durch axiale Verstellung des Betätigungsglieds 14 in Richtung zur Kupplung teilweise oder vollständig ausgerückt, nimmt der Koppelabschnitt 230 mittels der Klemmkugeln 234 den Kugelkäfig 232 mit, so dass der Entriegelanschlag 236 nicht mehr auf den Kugelkäfig 232 wirkt und dann die Vorspannfeder 220' wieder den Klemmeingriff der Klemmkugel 234 mit dem Koppelabschnitt 230 und dem Innenumfang des Topfteils 14b herstellt und die auf Basis der Einstellung durch die Vorspannfeder 220' erreichte axiale relative Stellung der Teilglieder 14a und 14b sichert.

Auch bei der Ausführungsform der Fig. 27 bis 29 kann der Aktuator eine im Prinzip beliebige Stellung relativ zu den übrigen Komponenten des Betätigungsmoduls, insbesondere relativ zum Zahnradsegment einnehmen, etwa eine zur Getriebeachse orthogonale Drehachse aufweisen, da das Abtriebsritzel 50 bzw. ein anderes Abtriebselement und das Zahnradsegment 39 bei der Einstellung der Vorlast sowie bei der Kupplungsbetätigung ihre relative Position (abgesehen von der Verdrehung des Abtriebselements und des Zahnradsegments) nicht verändern.

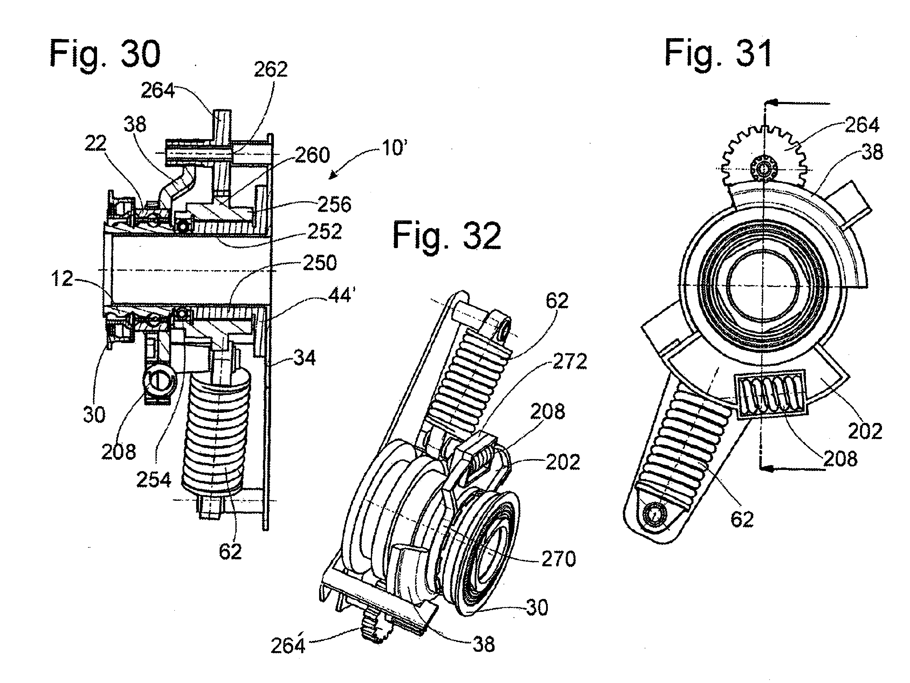

Eine Ausführungsform für ein Betätigungsmodul 10', bei der die eigentliche, von dem Stützglied und dem zu diesem koaxialen Betätigungsglied gebildete Betätigungseinheit mit einem hierzu koaxial angeordneten, einen Rotor und einen Stator aufweisenden Aktuator integriert ist, ist in den Fig. 30 bis 32 gezeigt. Ohne Beschränkung der Allgemeinheit ist ein radial inneres stationäres Stützglied 12 vorgesehen, und das äußere Betätigungsglied 22, welches das Ausrücklager 30 trägt, ist als mittels eines Zahnradsegments 38 von dem Aktuator 44' drehantreibbares Drehglied ausgeführt. Der Aktuator 44' weist einen Stator 250 auf, der koaxial zu dem Stützglied 12 angeordnet ist. Das Stützglied 12 und der Stator 250 sitzen auf dem Außenumfang eines Haltehülsenabschnitts 252 des Körperteils 34 und sind damit axial und gegen Verdrehung fixiert. An der Haltehülse 252 ist mittels eines Drehlager 254 ein den Stator 250 radial außen umgebender Rotor 256 des Aktuators 44' drehbar gelagert. Der Stator und der Rotor bilden einen Elektromotor des Außenläufertyps, wobei vor allem an einen Permanentmagnetmotor gedacht wird, bei dem die Permanentmagneten im Rotor angeordnet sind. Der Stator beinhaltet Spulen zur Erzeugung eines Drehfelds und zugehörige Elektronik.

Anzumerken ist, dass das Lager 254 auch eine axiale Lagerfunktion in Bezug auf den Rotor 256 erfüllen kann, so dass der Rotor 256 bei seiner Drehung eine definierte axiale Stellung einnimmt und behält. Am Außenumfang ist der Rotor 256 mit einem Zahnkranz oder Zahnkranzsegment 260 ausgeführt, welches mit einem an einer Lagerachse 262 des Körperteils 34 gelagerten zweistufigen Ritzel 264, genauer einem einen größeren Durchmesser aufweisenden Ritzelabschnitt dieses Ritzels kämmt. Ein einen kleineren Durchmesser und eine größere axiale Länge aufweisender Abschnitt dieses Ritzels kämmt mit dem Zahnradsegment 38, um das Betätigungsglied 22 entsprechend der Drehbewegung des Rotors 156 zum Drehen anzutreiben. Die Drehbewegung des Betätigungsglieds 22 hat infolge des durch Laufkugeln vermittelten Eingriffs zwischen den Kugelgewindegängen des Stützglieds 12 und des Betätigungsglieds 22 eine axiale Bewegung des Betätigungsglieds 22 samt des Zahnradsegments 38 zur Folge, die durch entsprechende Ausführung der Verzahnungen des zugeordneten Ritzelabschnitts und des Zahnradsegments ermöglicht ist.

Das Zahnradsegment 38 ist von einem Segmentabschnitt eines Scheibenteils 270 gebildet, welches diametral gegenüberliegend einen weiteren Segmentabschnitt 272 aufweist, der mit einem Federfenster für die Anschlagfeder 208 ausgeführt ist und mittels der Anschlagfeder 208 mit einem Anschlagscheibenteil 202 gekoppelt ist.

Der Drehbewegungsbereich und damit der axiale Bewegungsbereich des Betätigungsglieds 22 ist also wiederum elastisch begrenzt durch das am Betätigungsglied 22 gelagertes Anschlagscheibenteil 202, welches gegen körperseitige Anschläge entsprechend einem vollständig eingerückten und einem vollständig ausgerückten Zustand der Kupplung anschlägt und diese Anschlagwirkung durch die Anschlagfeder 208 elastisch auf das Betätigungsglied 22 überträgt.

Eine definierte Vorlast auf das Ausrücklager 30 kann beispielsweise durch Einstellung einer Axialposition des Gesamtsystems 10' relativ zur Kupplung oder durch Einstellen des dem vollständig eingerückten Zustand der Kupplung des NC-Typs entsprechenden Anschlags erfolgen.

Die Vorspannfeder 62 an dem dem Zahnradsegment 38 gegenüberliegenden, das Fenster für die Anschlagfeder 208 aufweisenden Segmentabschnitt 272 des Scheibenteils 270 angelenkt, so dass im Falle einer Einstellung des Drehanschlags keine unabhängige Einstellung der Stellung der Vorspannfeder 62 relativ zum Betätigungsglied, insbesondere keine unabhängige Einstellung des Übertotpunktwinkels möglich ist. Man könnte deswegen daran denken, die Vorspannfeder radial innen am Rotor anzulenken und das Ritzel 264 so auszuführen, dass es erst nach Einstellung der Vorlast montierbar ist, um eine die Soll-Konfiguration der Vorspannfeder 62 ergebende relative Drehstellung zwischen dem Rotor 260 und dem Zahnradsegment 38 zu fixieren und diese damit zur gemeinsamen Drehung miteinander zu verbinden. Es müsste also ein einstufiges, keine Unter- oder Übersetzung ergebendes Ritzel verwendet werden.

Anzumerken ist, dass auch bei den anderen, auf Basis der Fig. 1 bis 29 erläuterten Ausführungsformen und Ausführungsvarianten, ein ein- oder mehrstufiges Zwischenrad zwischen dem Abtriebselement des Aktuators und dem Zahnradsegment vorgesehen sein kann, um eine größere oder kleinere Übersetzung zu erreichen. Die Übersetzung zwischen dem Zahnradsegment und dem Motor hängt vom zu überbrückenden Ausrückweg, der nötigen Ausrückkraft und der Ausrückzeit ab, sowie auch von der wirksamen Steigung des Eingriffs zwischen dem Stützglied und dem Betätigungsglied. Umgekehrt ausgedrückt ist die Steigung etwa der Kugelgewindegänge abhängig vom zu überbrückenden Ausrückweg der Kupplung und dem Ausrückdrehwinkel des Aktuators.

Nach einer anderen möglichen Abwandlung der Ausführungsform ist ein axial vorstehender, den inneren Anlenkpunkt für die Kompensationsfeder 62 aufweisender Bolzen auf der anderen axialen Seite des Scheibenteils 270 vorgesehen, wofür ein den radial äußeren Anlenkpunkt für die Kompensationsfeder 62 bildender Bolzen am Körper 34 entsprechend axial länger ausgeführt ist. Das Anschlagscheibenteil 202 kann dann auf der dem Körperteil 34 näheren Seite des Scheibenteils 270 angeordnet sein.

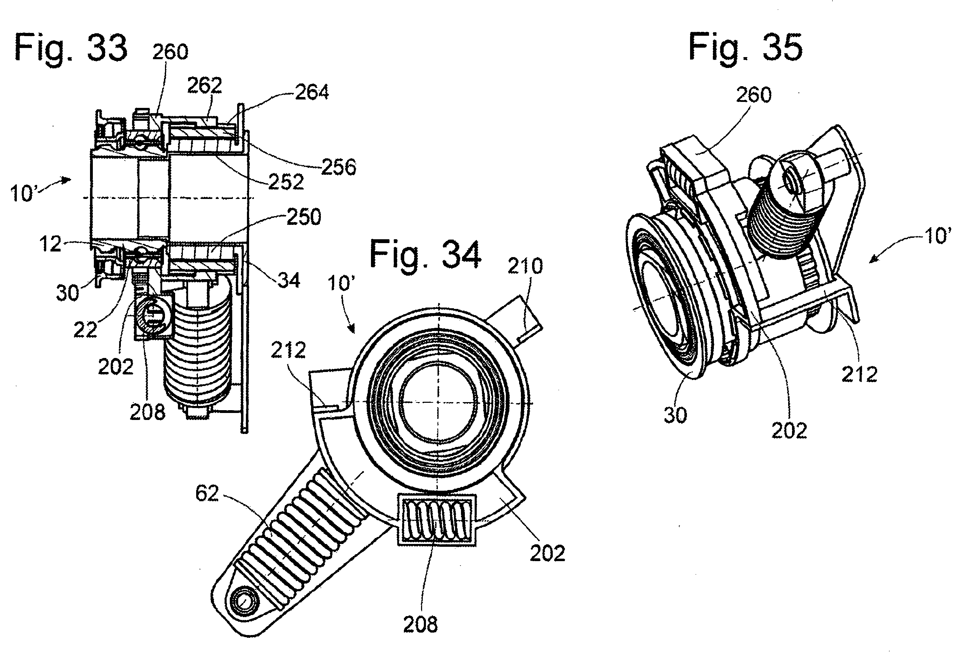

Eine andere, ebenfalls einen koaxial integrierten Aktuator aufweisende Ausführungsform ist in Fig. 33 bis 35 gezeigt. Es ist wiederum eine zentrale, den Stator 205 und das stationäre Stützglied 12 haltende Haltehülse 252 vorgesehen, die zum Körperteil 34 gehört. Der Rotor oder Außenläufer 256 ist allerdings nicht über ein Ritzel und ein Zahnradsegment mit dem das Ausrücklager 30 tragenden Betätigungsglied 22 gekoppelt, sondern durch ein außen am Betätigungsglied 22 festgelegtes hülsenartiges Koppelteil 260, welches an einem Ringabschnitt eine Innenverzahnung 262 aufweist, welche in eine Außenverzahnung 264 am Rotor 256 eingreift. Die Verzahnungen sind als Gradverzahnungen ausgeführt und ermöglichen eine axiale Verstellung der Verzahnung 262 relativ zur Verzahnung 264 entsprechend der axialen Bewegung des Betätigungsglieds 12. Ein radial vorstehendes Scheibensegment des Koppelteils 260 weist ein Federfenster für die Anschlagfeder 208 auf, zur Kopplung mit dem Anschlagscheibenteil 202. Die Kompensationsfeder 62 ist innen an einem axial vorstehenden Anlenkelement des Koppelteils 260 angelenkt.

Eine Einstellung einer Vorlast auf das Ausrücklager 30 kann wiederum durch entsprechende axiale Positionierung des Betätigungsmoduls 10' relativ zur Kupplung erfolgen. Eine andere Möglichkeit ist, etwa die körperseitigen Anschläge relativ zum Körperteil verdrehbar auszuführen, um die dem eingerückten Zustand der Kupplung entsprechende Endstellung des Betätigungsglieds 12 einstellen zu können. Um die Konfiguration der Vorlastfeder 62 hiervon unabhängig einstellen zu können, kann man vorsehen, dass das Koppelteil 260 anfänglich relativ zum Betätigungsglied 22 verdrehbar ist und dass dann erst nach Einstellung einer die gewünschte Konfiguration ergebenden relativen Drehstellung des Koppelteils 260 und des Betätigungsglieds 22 diese aneinander fixiert werden, beispielsweise durch irgendein Verbindungsmittel, durch Festschweißen oder auch ggf. durch eine axiale Verstellung des Koppelteils 260 zur Überführung in einen formschlüssigen Drehmitnahmeeingriff mit dem Betätigungsteil 22, etwa unter der axialen Kraftwirkung einer entsprechend angeordneten Federanordnung, ggf. der Kompensationsfeder 62.

Auch die für die Einfachkupplung vorgesehenen Ausführungsformen des Betätigungsmoduls sind zur Integration in eine Kupplungsglocke vorgesehen und ggf. mit einer Kupplung zu einer Einbau-Baueinheit kombinierbar. Soweit kein in das Betätigungsmodul bzw. das jeweilige Betätigungsglied integrierte Verschleißausgleichsmechanik vorgesehen ist, ist die Kupplung bzw. die Kupplungsanordnung vorzugsweise mit einem Verschleißausgleichsmechanismus ausgeführt.

Aus den vorstehend beschriebenen und angesprochenen Ausführungsformen und Ausführungsvarianten für die Betätigung einer Einfachkupplung ergeben sich für den Fachmann auch entsprechende Ausführungsformen und Ausführungsvarianten für die Betätigung einer Doppelkupplung. Es sind ggf. entsprechende Komponenten doppelt auszuführen, beispielsweise zwei koaxial integrierte Aktuatoren, zwei jeweils einem der Betätigungsglieder bzw. Stützglieder zugeordnete Anschlagscheibenteile mit zugehöriger Anschlagfeder und gewünschtenfalls eine jeweils axial verstellbare Ausführung des Zahnradsegments zur Verstellung zwischen einer mit dem zugeordneten Drehglied gekoppelten und einer hiervon entkoppelten Axialstellung. Ferner können beide Betätigungsglieder eines Betätigungsmoduls für eine Doppelkupplung jeweils mit einem integrierten Verschleißausgleichsmechanismus ausgeführt sein.

Die Erfindung betrifft eine Betätigungseinrichtung zum Einleiten von Betätigungskräften, insbesondere Einrück- oder Ausrückkräften, in eine Reibungskupplungseinrichtung, um wenigstens eine Reibungskupplungsanordnung der Reibungskupplungseinrichtung im Einrück- oder Ausrücksinn zu betätigen, sowie eine eine solche Betätigungseinrichtung aufweisende Drehmomentübertragungseinrichtung zur Drehmomentübertragung in einem Antriebsstrang eines Kraftfahrzeugs zwischen einer Antriebseinheit und einem Getriebe, die zusätzlich die Reibungskupplungseinrichtung umfasst. Die Erfindung betrifft ferner ein Verfahren zur Montage einer derartigen Drehmomentübertragungseinrichtung. Verschiedene Aspekte der Erfindung beziehen sich auf die Einstellung einer Vorlast auf wenigstens ein Einrücklager oder Ausrücklager der Betätigungseinrichtung, auf die Einstellung einer Übertotpunktkonfiguration für wenigstens eine wenigstens einem Drehglied der Betätigungseinrichtung zugeordnete Kompensationsfeder, die Einstellung eines Drehverstellungsbereichs des Drehglieds oder/und eines Axialverstellungsbereichs eines auf Basis einer dem Drehglied erteilten Drehbewegung axial verstellbaren Betätigungsglieds, auf die Erzielung einer NC-Charakteristik im Falle einer NO-Reibungskupplungsanordnung oder einer NO-Charakteristik im Falle einer NC-Reibungskupplungsanordnung durch die Kompensationsfeder sowie auf vorteilhafte konstruktive Lösungen betreffend die Betätigungseinrichtung.

## Patentansprüche

1. Drehmomentübertragungseinrichtung zur Drehmomentübertragung in einem Antriebsstrang eines Kraftfahrzeugs zwischen einer Antriebseinheit und einem Getriebe, umfassend:
- eine Reibungskupplungseinrichtung (120; 120'), umfassend wenigstens eine wahlweise zum Einrücken und Ausrücken betätigbare Reibungskupplungsanordnung (122, 124; 122', 124');
- eine Betätigungseinrichtung (10; 10'), zum Einleiten von Betätigungskräften, insbesondere Einrück- oder Ausrückkräften, in die Reibungskupplungseinrichtung, um wenigstens eine Reibungskupplungsanordnung der Reibungskupplungseinrichtung im Einrück- oder Ausrücksinn zu betätigen, wobei die Betätigungseinrichtung umfasst:
-- wenigstens ein der oder einer Reibungskupplungsanordnung zugeordnetes, axial verstellbares Betätigungsglied (14, 22) und wenigstens ein dem Betätigungsglied zugeordnetes, im Wesentlichen axial feststehendes Stützglied (12), wobei zur Betätigung der zugeordneten Reibungskupplungsanordnung das Betätigungsglied auf Basis einer einem Drehglied (12; 14; 22) der Betätigungseinrichtung erteilten Drehbewegung in eine axiale Translationsbewegung versetzbar ist oder/und vermittels auf das Drehglied (12; 14; 22) ausgeübter Drehkräfte auf das Betätigungsglied axiale Kräfte ausübbar sind, wobei als Drehglied das Betätigungsglied oder das Stützglied dient oder ein gegenüber dem Betätigungsglied und dem Stützglied gesondertes, mit diesen zusammenwirkendes Drehglied vorgesehen ist,
-- wenigstens einen dem Drehglied und der Reibungskupplungsanordnung zugeordneten Aktuator (44, 45; 44'; 45'), mittels dem erste Drehkräfte auf das Drehglied ausübbar sind, um die Reibungskupplungsanordnung zu betätigen, - - wenigstens eine Kompensationsfeder (60, 62), die einerseits an dem Drehglied und andererseits an einem Ausleger eines Körpers der Betätigungseinrichtung derart angelenkt ist, dass auf einer Spannung der Kompensationsfeder beruhende zweite Drehkräfte auf das Drehglied ausübbar sind;
**dadurch gekennzeichnet,**
**dass**
a) die Reibungskupplungsanordnung vom Normalerweise-Offen-Typ (NO) ist und auf Basis der Spannung der Kompensationsfeder eine solche zweite Drehkraft auf das Drehglied ausübbar ist, dass eine ohne die Wirkung einer ersten Drehkraft resultierende, vermittels des Betätigungsglieds in die Reibungskupplungseinrichtung eingeleitete Betätigungskraft die Reibungskupplung im eingerückten Zustand (NC) hält,
oder
b) die Reibungskupplungsanordnung (122; 124; 122', 124') vom Normalerweise-Geschlossen-Typ (NC) ist und auf Basis der Spannung der Kompensationsfeder (60; 62) eine solche zweite Drehkraft auf das Drehglied ausübbar ist, dass eine ohne die Wirkung einer ersten Drehkraft resultierende, vermittels des Betätigungsglieds in die Reibungskupplungseinrichtung eingeleitete Betätigungskraft die Reibungskupplung im ausgerückten Zustand (NO) hält.

2. Drehmomentübertragungseinrichtung nach Anspruch 1,
**dadurch gekennzeichnet, dass** die Kompensationsfeder (60; 62) derart in einer Übertotpunktkonfiguration einerseits an dem Drehglied (12; 14; 22) und andererseits an dem Ausleger angelenkt ist, dass in einem ersten Drehstellungsbereich des Drehglieds die zweiten Drehkräfte in einer ersten Drehrichtung und in einem zweiten Drehstellungsbereich des Drehglieds in einer zur ersten Drehrichtung entgegengesetzten zweiten Drehrichtung auf das Drehglied wirken, wobei vorzugsweise der erste Drehstellungsbereich eine Einrück-Drehstellung des Drehglieds umfasst, in der die zugeordnete Reibungskupplungsanordnung (122; 124; 122'; 124') eingerückt ist, und der zweite Drehstellungsbereich eine Ausrück-Drehstellung des Drehglieds umfasst, in der die zugeordnete Reibungskupplungsanordnung (122; 124; 122'; 124') ausgerückt ist, und wobei vorzugsweise im ersten Drehstellungsbereich die zweite Drehkraft in Richtung zur Einrück-Drehstellung wirkt und im zweiten Drehstellungsbereich die zweite Drehkraft in Richtung zur Ausrück-Drehstellung wirkt.

3. Drehmomentübertragungseinrichtung nach einem der Ansprüche 1 oder 2,
**dadurch gekennzeichnet, dass** die Reibungskupplungseinrichtung als Einfach-Reibungskupplungseinrichtung ausgeführt ist und genau eine Reibungskupplungsanordnung aufweist, der wenigstens ein Betätigungsglied und wenigstens ein Aktuator und ggf. wenigstens eine Kompensationsfeder der Betätigungseinrichtung zugeordnet ist, oder dass die Reibungskupplungseinrichtung als DoppelReibungskupplungseinrichtung (120; 120') oder Mehrfach-Reibungskupplungseinrichtung ausgeführt ist und eine erste Reibungskupplungsanordnung aufweist, der wenigstens ein erstes Betätigungsglied (14) der Betätigungseinrichtung zugeordnet ist, und eine zweite Reibungskupplungsanordnung aufweist, der wenigstens ein zweites Betätigungsglied (22) der Betätigungseinrichtung zugeordnet ist, wobei vorzugsweise der ersten Reibungskupplungseinrichtung wenigstens ein erster Aktuator (44) und wenigstens ein erstes Drehglied (14) und ggf. wenigstens eine erste Kompensationsfeder (60) der Betätigungseinrichtung zugeordnet ist und vorzugsweise der zweiten Reibungskupplungseinrichtung wenigstens ein zweiter Aktuator (45) und wenigstens ein zweites Drehglied (27) und ggf. wenigstens eine zweite Kompensationsfeder (62) der Betätigungseinrichtung zugeordnet ist.

4. Drehmomentübertragungseinrichtung nach einem der Ansprüche 1 bis 3,
**dadurch gekennzeichnet, dass** als Drehglied das der Reibungskupplungsanordnung bzw. das der jeweiligen Reibungskupplungsanordnung zugeordnete Betätigungsglied (14; 22) oder das diesem zugeordnete Stützglied (12) dient.

5. Drehmomentübertragungseinrichtung nach Anspruch 4,
**dadurch gekennzeichnet, dass** als Drehglied das relativ zum vorzugsweise stationären Stützglied (12) drehbar gelagerte Betätigungsglied (14; 22) dient.

6. Drehmomentübertragungseinrichtung nach Anspruch 4,
**dadurch gekennzeichnet, dass** als Drehglied das relativ zum Betätigungsglied (14) drehbar gelagerte Stützglied (12) dient.

7. Drehmomentübertragungseinrichtung nach Anspruch 6,
**dadurch gekennzeichnet, dass** das Stützglied (12) über eine Drehlageranordnung (200) axial fest mit dem Körper (34) oder/und einem Stator des der Reibungskupplungsanordnung zugeordneten Aktuators oder einer diesen haltenden, ggf. zum Körper zugehörigen Aktuatorhalterung verbunden ist.

8. Drehmomentübertragungseinrichtung nach einem der Ansprüche 1 bis 7,
**dadurch gekennzeichnet, dass** das Drehglied (12) bzw. das jeweilige Drehglied (14; 22) mit einer Verzahnung bzw. einer ersten bzw. zweiten Verzahnung ausgeführt ist, welche mit einem Abtrieb (40; 42; 40') des zugeordneten Aktuators bzw. des zugeordneten ersten bzw. zweiten Aktuators direkt oder indirekt in Drehantriebsverbindung steht oder bringbar ist, wobei die Verzahnung vorzugsweise an einem Zahnradsegment bzw. an einem ersten bzw. zweiten Zahnradsegment vorgesehen ist.

9. Drehmomentübertragungseinrichtung nach Anspruch 8,
**dadurch gekennzeichnet, dass** ein gegenüber dem Drehglied gesondertes, daran angeordnetes Drehteil (38; 39) die Verzahnung bzw. das Zahnradsegment umfasst, wobei das Drehteil in einer ersten Relativstellung von dem Drehglied (12; 22) für eine von dem Drehteil unabhängige Drehung des Drehglieds entkoppelt ist und in einer zweiten Relativstellung mit dem Drehglied zur gemeinsamen Drehung gekoppelt ist, wobei - wenn vorgesehen - die dem Drehglied zugeordnete Kompensationsfeder (60; 62) vorzugsweise am Drehteil (38; 39) und damit nur in der zweiten Relativstellung unter Vermittlung des Drehteils an dem Drehglied angelenkt ist.

10. Drehmomentübertragungseinrichtung nach einem der vorhergehenden Ansprüche, insbesondere nach Anspruch 9,
**gekennzeichnet durch** wenigstens eine axiale Vorspannkräfte auf das bzw. wenigstens ein Betätigungsglied oder auf ein Betätigungslager, insbesondere Ausrücklager oder Einrücklager, des Betätigungsglieds ausübende Vorspannfeder (220; 220'), auf deren Grundlage eine definierte Vorspannkraft auf das bzw. ein Betätigungslager, insbesondere Ausrücklager (18; 30) oder Einrücklager, des Betätigungsglieds (12; 14) einstellbar ist, im Falle einer Kompensationsfeder (60; 62) vorzugsweise zumindest in wenigstens einem Einstellbetriebsmodus unabhängig von einer direkten oder indirekten Wirkung der Kompensationsfeder auf das Betätigungsglied.

11. Drehmomentübertragungseinrichtung nach Anspruch 10,
**dadurch gekennzeichnet, dass** das Betätigungsglied (14) ein erstes Teilglied (14a), welches mittels der dem Drehglied erteilten Drehbewegung in die axiale Translationsbewegung versetzbar ist, und ein zweites, das Betätigungslager (18) aufweisendes Teilglied (14b) umfasst, zwischen denen ein Verschleißausgleichsmechanismus (220; 232, 234, 236) wirksam ist, mittels dem eine relative axiale Stellung der Teilglieder einstellbar ist.

12. Drehmomentübertragungseinrichtung nach Anspruch 11,
**dadurch gekennzeichnet, dass** die Vorspannfeder (220') zum Verschleißausgleichsmechanismus gehört, wobei die Vorspannfeder in einem ersten Betriebszustand eine momentane relative axiale Stellung der Teilglieder verriegelt und auf Grundlage der Vorspannfeder in einem zweiten Betriebszustand, der im Falle einer Kompensationsfeder (60) vorzugsweise dem Einstellbetriebsmodus entspricht, eine definierte Vorspannkraft auf das Betätigungslager, insbesondere Ausrücklager (18) oder Einrücklager, des Betätigungsglieds (14) einstellbar ist.

13. Drehmomentübertragungseinrichtung nach einem der Ansprüche 1 bis 12,
**dadurch gekennzeichnet, dass** eine relative Drehstellung zwischen wenigstens einem Körperteil (34) und wenigstens einem daran festlegbaren Zusatzteil (46; 48) einstellbar ist, von denen das Zusatzteil (46; 48) einen Drehverstellbereich des bzw. des jeweiligen Drehglieds mittels wenigstens eines Anschlags zumindest einseitig begrenzt oder/und den bzw. den jeweiligen Aktuator (44; 45) hält oder/und einen Anlenkpunkt für die bzw. die jeweilige Kompensationsfeder (60; 62) aufweist und das Körperteil (34) über das daran drehfest angeordnete Stützglied (12) eine einer Anschlag-Drehstellung des Drehglieds (14; 22) entsprechende axiale Stellung des Betätigungsglieds (14; 22) definiert.

14. Drehmomentübertragungseinrichtung nach einem der Ansprüche 1 bis 13,
**dadurch gekennzeichnet, dass** ein Stator (250) und ein Rotor (256) des Aktuators (44') bzw. des jeweiligen Aktuators koaxial zu dem Drehglied (22) oder/und koaxial zu dem Betätigungsglied (22) und dem Stützglied (12) angeordnet sind.

15. Drehmomentübertragungseinrichtung nach einem der Ansprüche 1 bis 14,
**dadurch gekennzeichnet, dass** das Stützglied (12) und das Betätigungsglied (14; 22) eine Spindel-Gewindemutter-Anordnung, vorzugsweise eine Kugelspindel-Kugelgewindemutter-Anordnung, bilden oder eine solche umfassen.

16. Drehmomentübertragungseinrichtung nach einem der Ansprüche 1 bis 15,
**dadurch gekennzeichnet, dass** das Stützglied (12') und das Betätigungsglied (14; 22) eine Kugelkäfig-Gewindemutter-Anordnung bilden oder eine solche umfassen, bei der von einem Kugelkäfig in definierten Positionen gehaltene Kugeln in ein Innengewinde oder Außengewinde einer vermittels des Kugelkäfigs und der Kugeln axial und radial und in Relativverdrehrichtung geführten Gewindemutter eingreifen.

17. Drehmomentübertragungseinrichtung nach einem der Ansprüche 1 bis 16,
**dadurch gekennzeichnet, dass** wenigstens eine Anschlagfeder (80, 82; 86, 88; 208) vorgesehen ist, die einen Drehbewegungsbereich des Drehglieds oder/und einen Axialverstellungsbereich des Betätigungsglieds einseitig oder beidseitig begrenzt oder an dieser Begrenzung mitwirkt.

18. Drehmomentübertragungseinrichtung nach Anspruch 17,
**dadurch gekennzeichnet, dass** das Drehglied oder dessen Zahnradsegment (38; 39) über eine Anschlagfeder mit einem koaxial zum Drehglied drehbaren Drehteil (202) zur gemeinsamen Drehung gekoppelt oder koppelbar ist, wobei das Drehteil in einer oder in beiden Drehrichtungen gegen einen stationären Anschlag (210, 222) drehbar ist.

19. Drehmomentübertragungseinrichtung nach Anspruch 18,
**dadurch gekennzeichnet, dass** die Anschlagfeder (208) sowohl in ein Federfenster des Drehglieds bzw. dessen Zahnradsegments (38; 39) als auch in ein Federfenster des Drehteils (202) eingreift.

20. Drehmomentübertragungseinrichtung nach einem der Ansprüche 1 bis 19, **dadurch gekennzeichnet, dass** die Reibungskupplungseinrichtung (120; 120') eine mit einem Abtrieb der Antriebseinheit gekoppelte oder koppelbare Eingangsseite (144) und wenigstens eine mit einem Eingangselement, ggf. Getriebeeingangswelle, des Getriebes gekoppelte oder koppelbare Ausgangsseite (148, 150; 180; 182) der Reibungskupplungsanordnung, ggf. eine der ersten Reibungskupplungsanordnung zugehörige erste Ausgangsseite und eine der zweiten Reibungskupplungsanordnung zugehörige zweite Ausgangsseite, aufweist, wobei die Eingangsseite über eine Stützdrehlageranordnung (32) mit dem Körper (34) oder/und dem Stützglied oder/und mit einem Stator des der Reibungskupplungsanordnung zugeordneten Aktuators oder einer diesen haltenden Aktuatorhalterung unter Herstellung einer axialen Abstützbeziehung verbunden oder verbindbar ist, und dass sie als zu einer die Reibungskupplungsanordnung und die Betätigungseinrichtung umfassenden Einbau-Baueinheit vormontiert oder vormontierbar ist, die als Einheit ohne Notwendigkeit einer zumindest teilweisen erneuten Demontage zwischen einer Antriebseinheit und einem Getriebe in einem Antriebsstrang einbaubar ist.

21. Drehmomentübertragungseinrichtung nach Anspruch 20,
**dadurch gekennzeichnet, dass** für die vormontierte Einbau-Baueinheit wenigstens eine, vorzugsweise wenigstens zwei, höchstvorzugsweise alle der folgenden Bedingungen erfüllt ist/sind:
a) in der vormontierten Einbau-Baueinheit ist eine auf ein Einrücklager bzw. ein Ausrücklager (18; 30) des zugeordneten Betätigungsglieds wirkende definierte axiale Vorlast eingestellt, die auf einer auf das Drehglied bzw. das jeweilige Drehglied ausgeübten zweiten Drehkraft oder/und auf einer von einem Krafteinleitungsglied (134; 136; 134'; 136') der zugeordneten Reibungskupplungsanordnung ausgeübten Kraft oder/und auf einer axialen Kraft wenigstens einer Vorspannfeder (220; 220') beruht;
b) in der vormontierten Einbau-Baueinheit ist in Bezug auf die Kompensationsfeder (60; 62) bzw. die Kompensationsfedern (60; 62) eine definierte Übertotpunktkonfiguration eingestellt;
c) in der vormontierten Einbau-Baueinheit ist das Betätigungsglied (14; 22) bzw. das jeweilige Betätigungsglied (14; 22) zum Ausgleich einer axialen Positionstoleranz des Krafteinleitungsglieds der zugeordneten Reibungskupplungsanordnung relativ zur Eingangsseite und zum Körper definiert axial positioniert.

22. Drehmomentübertragungseinrichtung nach einem der vorhergehenden Ansprüche, **dadurch gekennzeichnet, dass** das Drehglied mit einer Verzahnung, gewünschtenfalls an einem Zahnradsegment (38; 39), ausgeführt ist, welche mit einem Abtrieb eines zugeordneten Aktuators (44) direkt oder indirekt in Drehantriebsverbindung steht oder bringbar ist, wobei ein gegenüber dem Drehglied gesondertes, daran angeordnetes Drehteil (38; 39) die Verzahnung umfasst, wobei das Drehteil in einer ersten Relativstellung von dem Drehglied (12; 22) für eine von dem Drehteil unabhängige Drehung des Drehglieds entkoppelt ist und in einer zweiten Relativstellung mit dem Drehglied zur gemeinsamen Drehung gekoppelt ist.

23. Drehmomentübertragungseinrichtung nach Anspruch 22,
**dadurch gekennzeichnet, dass** Mitnahmeformationen des Drehteils (38; 39) und des Drehglieds (12; 22) durch eine axiale Bewegung des Drehteils relativ zu dem Drehglied von der ersten zur zweiten Relativstellung in Drehmitnahmeeingriff bringbar sind.

24. Drehmomentübertragungseinrichtung nach Anspruch 22 oder 23,
**dadurch gekennzeichnet, dass** eine dem Drehglied zugeordnete Kompensationsfeder (60; 62) am Drehteil (38; 39) und damit nur in der zweiten Relativstellung unter Vermittlung des Drehteils an dem Drehglied angelenkt ist.

25. Drehmomentübertragungseinrichtung nach Anspruch 24 sowie nach Anspruch 23,
**dadurch gekennzeichnet, dass** durch die Kompensationsfeder (62) auf das Drehteil (38) axiale Stellkräfte ausübbar sind, zur Überführung des Drehteils von der ersten in die zweite Relativstellung.

26. Drehmomentübertragungseinrichtung nach einem der Ansprüche 22 bis 25, **gekennzeichnet durch** wenigstens eine axiale Vorspannkräfte auf das bzw. wenigstens ein Betätigungsglied oder auf ein Betätigungslager, insbesondere Ausrücklager oder Einrücklager, des Betätigungsglieds ausübende Vorspannfeder (220; 220'), auf deren Grundlage eine definierte Vorspannkraft auf das bzw. ein Betätigungslager, insbesondere Ausrücklager (18, 30) oder Einrücklager, des Betätigungsglieds einstellbar ist, im Falle einer Kompensationsfeder vorzugsweise zumindest in wenigstens einem Einstellbetriebsmodus unabhängig von einer direkten oder indirekten Wirkung der Kompensationsfeder auf das Betätigungsglied.

27. Drehmomentübertragungseinrichtung nach Anspruch 26,
**dadurch gekennzeichnet, dass** die Vorspannfeder (220) zwischen dem Körper (34) oder Stützglied (12) einerseits und dem Betätigungsglied andererseits wirkt.

28. Drehmomentübertragungseinrichtung nach Anspruch 26,
**dadurch gekennzeichnet, dass** das Betätigungsglied (14) ein erstes Teilglied (14a), welches mittels der dem Drehglied erteilten Drehbewegung in die axiale Translationsbewegung versetzbar ist, und eine zweites, das Betätigungslager (18) aufweisendes Teilglied (14b) umfasst, zwischen denen ein Verschleißausgleichsmechanismus (220', 232, 234, 236) wirksam ist, mittels dem eine relative axiale Stellung der Teilglieder einstellbar ist.

29. Drehmomentübertragungseinrichtung nach Anspruch 12,
**dadurch gekennzeichnet, dass** die Vorspannfeder (220') zwischen einem zum zweiten Teilglied (14b) zugehörigen Hülsenteil und einem Klemmkugeln (234) aufweisenden Kugelkäfig (232), welcher einen in einer axialen Richtung sich verjüngenden Koppelabschnitt (230) des ersten Teilglieds (14a) umgibt, wirksam ist.

30. Drehmomentübertragungseinrichtung nach Anspruch 29,
**dadurch gekennzeichnet, dass** der Kugelkäfig (232) bei einer ein vorgegebenes oder vorgebbares Maß übersteigenden axialen Bewegung des Betätigungsglieds in einer vorgegebenen Axialrichtung gegen einen Entriegelanschlag (236) stößt und bei weiterer axialer Bewegung des Betätigungsglieds (14) in der vorgegebenen Axialrichtung an einer axialen Mitbewegung gehindert wird, entsprechend einer relativen Bewegung des Kugelkäfigs (232) in der Verjüngungsrichtung des Koppelabschnitts (230), zur Entriegelung der momentanen axiale Stellung der Teilglieder und Einstellung einer neuen momentanen axialen Stellung der Teilglieder (14a, 14b) unter der Mitwirkung der Vorspannfeder (220').

31. Drehmomentübertragungseinrichtung nach Anspruch 13,
**gekennzeichnet durch** zwischen dem Körperteil und dem Zusatzteil wirksame, vorzugsweise als Drehführung nutzbare Verbindungsmittel (50, 52; 54, 56) zur Fixierung einer eingestellten Soll-Drehstellung.

32. Drehmomentübertragungseinrichtung nach Anspruch 13 oder 31,
**dadurch gekennzeichnet, dass** vom Körperteil und dem Zusatzteil wenigstens eines wenigstens ein sich in einer Drehrichtung erstreckendes Langloch (52; 56) und wenigstens das andere wenigstens einen in das Langloch eingreifenden Bolzen (50; 54) aufweist.

33. Drehmomentübertragungseinrichtung nach Anspruch 16,
**dadurch gekennzeichnet, dass** ein hülsenartiger Kugelkäfig (12') als gemeinsames Stützglied einer ersten und einer zweiten Reibungskupplungsanordnung zugeordnet ist, und dass eine zumindest mit einer Teilmenge der durch den Kugelkäfig gehaltenen Kugeln zusammenwirkende äußere Gewindemutter und eine zumindest mit einer Teilmenge der durch den Kugelkäfig gehaltenen Kugeln zusammenwirkende innere Gewindemutter als der ersten Reibungskupplungsanordnung zugeordnete erstes Betätigungsglied (14) und er zweiten Reibungskupplungsanordnung zugeordnetes zweites Betätigungsglied (22) dienen.

34. Drehmomentübertragungseinrichtung nach Anspruch 33,
**dadurch gekennzeichnet, dass** die äußere Gewindemutter mit einer äußeren Teilmenge der Kugeln, nämlich mit außen am Kugelkäfig (12') gehaltenen Kugeln, zusammenwirkt und die innere Gewindemutter mit einer inneren Teilmenge der Kugeln, nämlich innen am Kugelkäfig (12') gehaltenen Kugeln, zusammenwirkt.

35. Drehmomentübertragungseinrichtung nach Anspruch 14,
**dadurch gekennzeichnet, dass** der Stator (250) des Aktuators koaxial zu einer Haltehülse (252) eines Körpers (34) der Betätigungseinrichtung angeordnet und vorzugsweise von dieser an deren Innenumfang oder Außenumfang gehalten ist.

36. Drehmomentübertragungseinrichtung nach Anspruch 35,
**dadurch gekennzeichnet, dass** die Haltehülse (252) das Stützglied (12) bildet oder dieses hält.

37. Drehmomentübertragungseinrichtung nach einem der Ansprüche 14, 35 oder 36,
**dadurch gekennzeichnet, dass** der Aktuator einen Rotor (250) mit einer Verzahnung aufweist, welche über wenigstens ein Zwischenrad (246) mit einer Verzahnung des Drehglieds, vorzugsweise einem Zahnradsegment (38) des Drehglieds (22), gekoppelt ist, oder dass der Aktuator einen Rotor (256) aufweist, der unmittelbar mit dem Drehglied (22) verbunden oder gekoppelt ist, vorzugsweise durch gegenseitigen Eingriff einer Verzahnung des Rotors und einer Verzahnung des Drehglieds, gewünschtenfalls einem Zahnradsegment des Drehglieds.

38. Verfahren zur Montage einer
Drehmomentübertragungseinrichtung zur Drehmomentübertragung in einem Antriebsstrang eines Kraftfahrzeugs zwischen einer Antriebseinheit und einem Getriebe, umfassend:
- eine Reibungskupplungseinrichtung (120; 120'), umfassend wenigstens eine wahlweise zum Einrücken und Ausrücken betätigbare Reibungskupplungsanordnung (122, 124; 122', 124');
- eine Betätigungseinrichtung (10; 10'), zum Einleiten von Betätigungskräften, insbesondere Einrück- oder Ausrückkräften, in die Reibungskupplungseinrichtung, um wenigstens eine Reibungskupplungsanordnung der Reibungskupplungseinrichtung im Einrück- oder Ausrücksinn zu betätigen, wobei die Betätigungseinrichtung umfasst:
-- wenigstens ein der oder einer Reibungskupplungsanordnung zugeordnetes, axial verstellbares Betätigungsglied (14, 22; 14; 22) und wenigstens ein dem Betätigungsglied zugeordnetes, im Wesentlichen axial feststehendes Stützglied (12), wobei zur Betätigung der zugeordneten Reibungskupplungsanordnung das Betätigungsglied auf Basis einer einem Drehglied (12; 14; 22) der Betätigungseinrichtung erteilten Drehbewegung in eine axiale Translationsbewegung versetzbar ist oder/und vermittels auf das Drehglied (12; 14; 22) ausgeübter Drehkräfte auf das Betätigungsglied axiale Kräfte ausübbar sind, wobei als Drehglied das Betätigungsglied oder das Stützglied dient oder ein gegenüber dem Betätigungsglied und dem Stützglied gesondertes, mit diesen zusammenwirkendes Drehglied vorgesehen ist,
-- wenigstens einen dem Drehglied und der Reibungskupplungsanordnung zugeordneten Aktuator (44, 45; 44; 45), mittels dem erste Drehkräfte auf das Drehglied ausübbar sind, um die Reibungskupplungsanordnung zu betätigen,
-- gewünschtenfalls wenigstens eine Kompensationsfeder (60, 62; 60; 62), die einerseits an dem Drehglied und andererseits an einem Ausleger eines Körpers der Betätigungseinrichtung derart angelenkt ist, dass auf einer Spannung der Kompensationsfeder beruhende zweite Drehkräfte auf das Drehglied ausübbar sind;
zu einer Baueinheit,
umfassend die Schritte:
A) Bereitstellen der Reibungskupplungseinrichtung (100; 120') und der Betätigungseinrichtung (10; 10') als gesonderte, zumindest teilweise vormontierte Baueinheiten;
B) Verbinden einer mit einem Abtrieb der Antriebseinheit koppelbaren Eingangsseite der Kupplungseinrichtung mittels einer Stützdrehlageranordnung (32) mit dem Körper (34) oder/und dem Stützglied (12) oder/und mit einem Stator des der Reibungskupplungsanordnung zugeordneten Aktuators oder einer diesen haltenden Aktuatorhalterung unter Herstellung einer axialen Abstützbeziehung;
C) unter Verdrehen des Drehglieds (12; 14; 22) bzw. der Drehglieder Anlegen des Betätigungsglieds bzw. der Betätigungsglieder an wenigstens ein mit der Eingangsseite der Reibungskupplungseinrichtung sich mitdrehendes Krafteinleitungsglied (134; 136; 134', 136) der zugeordneten Reibungskupplungsanordnung,
i) unter Einstellung einer auf ein Ausrücklager (18; 30) oder Einrücklager des Betätigungsglieds wirkenden definierten Vorlast, die auf einer auf das Drehglied bzw. das jeweilige Drehglied ausgeübten zweiten Drehkraft der Kompensationsfeder bzw. Kompensationsfedern oder/und auf einer auf das Drehglied bzw. das jeweilige Drehglied oder das Betätigungsglied bzw. das jeweilige Betätigungsglied von wenigstens einer Vorspannfeder ausgeübten Kraft beruht oder/und auf einer von dem Krafteinleitungsglied ausgeübten Kraft beruht,
oder/und
ii) unter Ausgleich einer axialen Positionstoleranz des Krafteinleitungsglieds der zugeordneten Reibungskupplungsanordnung relativ zur Eingangsseite.

39. Verfahren nach Anspruch 38, ferner umfassend den Schritt:
D) Einstellen wenigstens eines von i) einer definierten Übertotpunktkonfiguration für die Kompensationsfeder (60; 62) bzw. die Kompensationsfedern (60, 62) und ii) eines axialen Bewegungsbereichs des Betätigungsglieds bzw. eines jeweiligen axialen Bewegungsbereichs der Betätigungsglieder durch Einstellen wenigstens eines den axialen Bewegungsbereich direkt oder indirekt zumindest einseitig begrenzenden Bewegungsanschlags.

40. Verfahren nach Anspruch 38 oder 39,
**dadurch gekennzeichnet, dass** in Schritt C) ein definiertes Drehmoment auf das Drehglied (14; 22) ausgeübt wird, um das Betätigungsglied (14; 22) an dem Krafteinleitungsglied definiert anzulegen.

41. Verfahren nach einem der Ansprüche 38 bis 40,
**dadurch gekennzeichnet, dass** die Vorlast auf einer von dem Krafteinleitungsglied ausgeübten Kraft beruht und durch Einstellen, insbesondere Positionieren und ggf. Festlegen, eines axialen Endanschlags für das Betätigungsglied oder eines Dreh-Endanschlags für das Drehglied (14; 22) eingestellt wird.

42. Verfahren nach einem der Ansprüche 38 bis 41,
**dadurch gekennzeichnet, dass** eine relative Drehstellung zwischen wenigstens einem Körperteil (34) und wenigstens einem daran festlegbaren Zusatzteil (46; 48) eingestellt wird, von denen das Zusatzteil (46; 48) einen Drehverstellbereich des bzw. des jeweiligen Drehteils mittels wenigstens eines Anschlags zumindest einseitig begrenzt oder/und den bzw. den jeweiligen Aktuator hält oder/und einen Anlenkpunkt für die bzw. die jeweilige Kompensationsfeder aufweist und das Körperteil (34) über das daran drehfest angeordnete Stützglied (12) eine einer Anschlag-Drehstellung des Drehglieds (14; 22) entsprechende axiale Stellung des Betätigungsglieds (14; 22) definiert.

43. Verfahren nach einem der Ansprüche 39 bis 42,
**dadurch gekennzeichnet, dass** die Übertotpunktkonfiguration auf Basis der zuvor erfolgten Einstellung der Vorlast bzw. des zuvor erfolgten Ausgleichs der axialen Positionstoleranz eingestellt wird durch Festlegen eines äußeren Anlenkpunkts der Kompensationsfeder an dem Ausleger oder eines inneren Anlenkpunkts der Kompensationsfeder am oder in Bezug auf das Drehglied.

44. Verfahren nach einem der Ansprüche 39 bis 43,
**dadurch gekennzeichnet, dass** die Übertotpunktkonfiguration durch axiale Verstellung eines am Drehglied (12; 22) angeordneten Drehteils (38; 39) in Drehmitnahmeeingriff mit dem Drehglied in einer definierten relativen Drehstellung zwischen dem Drehglied und dem Drehteil hergestellt wird.

45. Verfahren nach Anspruch 44,
**dadurch gekennzeichnet, dass** die dem Drehglied (12; 22) zugeordnete Kompensationsfeder (60; 62) am Drehteil (38; 39) angelenkt ist und damit nur nach Herstellung des Drehmitnahmeeingriffs unter Vermittlung des Drehteils am Drehglied (12; 22) angelenkt ist, so dass durch Herstellung des Drehmitnahmeeingriffs der innere Anlenkpunkt in Bezug auf das Drehglied (12; 22) festgelegt wird.

46. Verfahren nach einem der Ansprüche 38 bis 45,
**dadurch gekennzeichnet, dass** ein Drehverstellungsbereich des Drehglieds (12; 14; 22) oder/und ein Axialverstellungsbereich des Betätigungsglieds (14; 22) eingestellt wird.

47. Verfahren nach Anspruch 46,
**dadurch gekennzeichnet, dass** der Drehverstellungsbereich durch axiale Verstellung eines am Drehglied (12; 14) angeordneten, gegen wenigstens einen stationären Anschlag (210, 212) drehbaren Drehteils (202) in Drehmitnahmeeingriff mit dem Drehglied (12; 22) eingestellt wird.

48. Verfahren nach einem der Ansprüche 38 bis 47,
**dadurch gekennzeichnet, dass** die Drehantriebsverbindung durch axiale Verstellung eines am Drehglied (12; 14) angeordneten, durch den Aktuator drehantreibbaren Drehteils (38, 39) in Drehmitnahmeeingriff mit dem Drehglied hergestellt wird.

49. Verfahren nach einem der Ansprüche 38 bis 48,
**dadurch gekennzeichnet, dass** es im Zuge des Einbaus der Drehmomentübertragungseinrichtung zwischen einer Antriebseinheit und einem Getriebe durchgeführt wird, vorzugsweise unter Montage des Körpers oder wenigstens eines Körperteils der Betätigungseinheit am Getriebegehäuse.

50. Verfahren nach einem der Ansprüche 38 bis 49,
**dadurch gekennzeichnet, dass** die Drehmomentübertragungseinrichtung zu einer Einbau-Baueinheit montiert wird, die als Einheit ohne Notwendigkeit einer zumindest teilweisen erneuten Demontage zwischen einer Antriebseinheit und einem Getriebe in einem Antriebsstrang einbaubar ist.

## Claims

1. Torque transmission device for the transmission of torque in a drivetrain of a motor vehicle between a drive unit and a transmission, comprising:
- a friction clutch device (120; 120'), comprising at least one friction clutch assembly (122, 124; 122', 124') which can optionally be actuated for engagement and disengagement;
- an actuating device (10; 10'), for the introduction of actuating forces, in particular engagement or disengagement forces, into the friction clutch device, in order to actuate at least one friction clutch assembly of the friction clutch device in the engagement or disengagement direction, the actuating device comprising:
-- at least one axially adjustable actuating element (14, 22) assigned to the or a friction clutch assembly and at least one substantially axially fixed support element (12) assigned to the actuating element, wherein, for actuation of the assigned friction clutch assembly, an axial translational movement of the actuating element can be brought about on the basis of a rotational movement output to a rotary element (12; 14; 22) of the actuating device or/and axial forces can be exerted on the actuating element by means of rotational forces exerted on the rotary element (12; 14; 22), with the actuating element or the support element serving as a rotary element or a rotary element which is separate from the actuating element and the support element and interacts with these being provided,
-- at least one actuator (44, 45; 44'; 45') assigned to the rotary element and the friction clutch assembly, by means of which actuator first rotational forces can be exerted on the rotary element in order to actuate the friction clutch assembly,
-- at least one compensation spring (60, 62) which is linked on one hand to the rotary element and on the other hand to an extension arm of a body of the actuating device in such a manner that two rotational forces based on a tensioning of the compensation spring can be exerted on the rotary element,
**characterized in that**
a) the friction clutch assembly is of the normally-open type (NO) and, on the basis of the tensioning of the compensation spring, such a second rotational force can be exerted on the rotary element, that an actuation force which results without the action of a first rotational force and is introduced by means of the actuating element into the friction clutch device holds the friction clutch in the engaged state (NC),
or
b) the friction clutch assembly (122; 124; 122', 124') is of the normally-closed type (NC) and, on the basis of the tensioning of the compensation spring (60; 62), such a second rotational force can be exerted on the rotary element, that an actuation force which results without the action of a first rotational force and is introduced by means of the actuating element into the friction clutch device holds the friction clutch in the disengaged state (NO).

2. Torque transmission device according to Claim 1, **characterized in that** the compensation spring (60; 62) is linked in such a manner in a top dead centre configuration on one hand to the rotary element (12; 14; 22) and on the other hand to the extension arm, that, in a first rotational position range of the rotary element, the second rotational forces act in a first rotational direction and, in a second rotational position range of the rotary element, in a second rotational direction opposite to the first rotational direction on the rotary element, with the first rotational position range preferably comprising an engagement rotational position of the rotary element in which the assigned friction clutch assembly (122; 124; 122', 124') is engaged, and the second rotational position range comprises a disengagement rotational position of the rotary element in which the assigned friction clutch assembly (122; 124; 122', 124') is disengaged, and wherein preferably in the first rotational speed range the second rotational force acts in the direction of the engagement rotational position and in the second rotational position range the second rotational force acts in the direction of the disengagement rotational position.

3. Torque transmission device according to one of Claims 1 or 2, **characterized in that** the friction clutch device is embodied as a single friction clutch device and has precisely one friction clutch assembly to which at least one actuating element and at least one actuator and optionally at least one compensation spring of the actuating device are assigned, or that the friction clutch device is embodied as a dual friction clutch device (120; 120') or a multiple friction clutch device and has a first friction clutch assembly which is assigned at least one first actuating element (14) of the actuating device, and has a second friction clutch assembly to which is assigned at least a second actuating element (22) of the actuating device, wherein preferably the first friction clutch device is assigned at least a first actuator (44) and at least a first rotary element (14) and optionally at least a first compensation spring (60) of the actuating device and preferably the second friction clutch device is assigned at least a second actuator (45) and at least a second rotary element (27) and optionally at least a second compensation spring (62) of the actuating device.

4. Torque transmission device according to one of Claims 1 to 3, **characterized in that** the actuating element (14; 22) assigned to the friction clutch assembly or to the respective friction clutch assembly or the support element (12) assigned thereto serves as the rotary element.

5. Torque transmission device according to Claim 4, **characterized in that** the actuating element (14; 22) mounted rotatably relative to the preferably stationary support element (12) serves as the rotary element.

6. Torque transmission device according to Claim 4, **characterized in that** the support element (12) mounted rotatably relative to the actuating element (14) serves as the rotary element.

7. Torque transmission device according to Claim 6, **characterized in that** the support element (12) is connected via a pivot bearing assembly (200) in an axially fixed manner to the body (34) or/and a stator of the actuator assigned to the friction clutch assembly or an actuator holder which holds said actuator and, where applicable, belongs to the body.

8. Torque transmission device according to one of Claims 1 to 7, **characterized in that** the rotary element (12) or the respective rotary element (14; 22) is embodied with a toothing or a first or second toothing which is or can be brought directly or indirectly in or into rotational drive connection with an output (40; 42; 40') of the assigned actuator or the assigned first or second actuator, the toothing preferably being provided on a gearwheel segment or on a first or second gearwheel segment.

9. Torque transmission device according to Claim 8, **characterized in that** a rotary part (38; 39) which is separate from the rotary element and arranged thereon comprises the toothing or the gearwheel segment, the rotary part, in a first relative position, being uncoupled from the rotary element (12; 22) for a rotation, which is independent of the rotary part, of the rotary element and, in a second relative position, is coupled to the rotary element for joint rotation, wherein - if provided - the compensation spring (60; 62) assigned to the rotary element is linked preferably to the rotary part (38; 39) and thus only in the second relative position by means of the rotary part on the rotary element.

10. Torque transmission device according to one of the preceding claims, in particular according to Claim 9,
**characterized by** at least one pretensioning spring (220; 220') which exerts axial pretensioning forces on the or at least one actuating element or on an actuating bearing, in particular disengagement bearing or engagement bearing, of the actuating element, on the basis of which pretensioning spring (220; 220') a defined pretensioning force on the or an actuating bearing, in particular disengagement bearing (18; 30) or engagement bearing, of the actuating element (12; 14) can be set, in the case of a compensation spring (60; 62) preferably at least in at least one setting operational mode independently of a direct or indirect action of the compensation spring on the actuating element.

11. Torque transmission device according to Claim 10, **characterized in that** the actuating element (14) comprises a first sub-element (14a), the axial translational movement of which can be brought about by means of the rotational movement output to the rotary element, and a second sub-element (14b) which has the actuating bearing (18), between which sub-elements a wear-equalizing mechanism (220; 232, 234, 236) acts by means of which a relative axial position of the subelements can be set.

12. Torque transmission device according to Claim 11, **characterized in that** the pretensioning spring (220') is part of the wear-equalizing mechanism, wherein the pretensioning spring, in a first operational state, locks a current relative axial position of the sub-elements and on the basis of the pretensioning spring, in a second operational state, which in the case of a compensation spring (60) preferably corresponds to the setting operational mode, a defined pretensioning force on the actuating bearing, in particular disengagement bearing (18) or engagement bearing, of the actuating element (14) can be set.

13. Torque transmission device according to one of Claims 1 to 12, **characterized in that** a relative rotational position between at least one body part (34) and at least one additional part (46; 48) which can be fixed thereon can be set, of which the additional part (46; 48) restricts at least on one side a rotational adjustment range of the or the respective rotary element by means of at least one stop or/and holds the or the respective actuator (44; 45) or/and has a linking point for the or the respective compensation spring (60; 62) and the body part (34), via the support element (12) arranged in a rotationally conjoint manner thereon, defines an axial position of the actuating element (14; 22) which corresponds to a stop rotational position of the rotary element (14; 22).

14. Torque transmission device according to one of Claims 1 to 13, **characterized in that** a stator (250) and a rotor (256) of the actuator (44') or of the respective actuator are arranged coaxially with respect to the rotary element (22) or/and coaxially with respect to the actuating element (22) and the support element (12).

15. Torque transmission device according to one of Claims 1 to 14, **characterized in that** the support element (12) and the actuating element (14; 22) form a spindle-threaded nut assembly, preferably a spherical spindle-spherical threaded nut assembly or comprise such an assembly.

16. Torque transmission device according to one of Claims 1 to 15, **characterized in that** the support element (12') and the actuating element (14; 22) form a ball retainer ring-threaded nut assembly, or comprise such an assembly in the case of which balls retained by a ball retainer ring at defined positions engage in an internal thread or external thread of a threaded nut guided axially and radially and in a relative rotational direction by means of the ball retainer ring and the balls.

17. Torque transmission device according to one of Claims 1 to 16, **characterized in that** at least one stop spring (80, 82; 86, 88; 208) is provided which restricts a rotational movement range of the rotary element or/and an axial adjustment range of the actuating element on one side or both sides or is involved in this restriction.

18. Torque transmission device according to Claim 17, **characterized in that** the rotary element or its gearwheel segment (38; 39) is coupled or can be coupled via a stop spring to a rotary part (202) which is rotatable coaxially with respect to the rotary element for joint rotation, wherein the rotary part is rotatable in one or in both rotational directions counter to a stationary stop (210, 222).

19. Torque transmission device according to Claim 18, **characterized in that** the stop spring (208) engages both in a spring window of the rotary element or its gearwheel segment (38; 39) and in a spring window of the rotary part (202).

20. Torque transmission device according to one of Claims 1 to 19, **characterized in that** the friction clutch device (120; 120') has an input side (144) which is coupled or can be coupled to an output of the drive unit and at least one output side (148, 150; 180; 182), which is coupled or can be coupled to an input element, or transmission input shaft, of the transmission, of the friction clutch assembly, optionally a first output side which belongs to the first friction clutch assembly and a second output side which belongs to the second friction clutch assembly, wherein the input side is connected or can be connected via a support pivot bearing assembly (32) to the body (34) or/and the support element or/and to a stator of the actuator assigned to the friction clutch assembly or an actuator holder which holds said actuator while producing an axial support relationship, and that it is or can be premounted as an installation structural unit which comprises the friction clutch assembly and the actuating device, which structural unit can be installed without the need for an at least partial renewed disassembly between a drive unit and a transmission in a drivetrain.

21. Torque transmission device according to Claim 20, **characterized in that** at least one, preferably at least two, most preferably all of the following conditions is/are satisfied for the premounted installation structural unit:
a) in the premounted installation structural unit, a defined axial preload which acts on an engagement bearing or a disengagement bearing (18; 30) of the assigned actuating element is set, which axial preload is based on a second rotational force exerted on the rotary element or the respective rotary element or/and on a force exerted by a force introduction element (134; 136; 134'; 136') of the assigned friction clutch assembly or/and on an axial force at least of a pretensioning spring (220; 220');
b) in the premounted installation structural unit, a defined top dead centre configuration is set in relation to the compensation spring (60; 62) or the compensation springs (60; 62);
c) in the premounted installation structural unit, the actuating element (14; 22) or the respective actuating element (14; 22) is axially positioned in a defined manner for equalization of an axial position tolerance of the force introduction element of the assigned friction clutch assembly relative to the input side and the body.

22. Torque transmission device according to one of the preceding claims, **characterized in that** the rotary element is embodied with a toothing, desirably on a gearwheel segment (38; 39), which toothing is or can be brought directly or indirectly in or into rotational drive connection with an output of an assigned actuator (44), wherein a rotary part (38; 39) which is separate from the rotary element and arranged thereon comprises the toothing, wherein the rotary part, in a first relative position, is uncoupled from the rotary element (12; 22) for a rotation of the rotary element which is independent of the rotary part and, in a second relative position, is coupled to the rotary element for joint rotation.

23. Torque transmission device according to Claim 22, **characterized in that** driving formations of the rotary part (38; 39) and of the rotary element (12; 22) can be brought into rotational driving engagement by an axial movement of the rotary part relative to the rotary element from the first to the second relative position.

24. Torque transmission device according to Claim 22 or 23, **characterized in that** a compensation spring (60; 62) assigned to the rotary element is linked to the rotary part (38; 39) and thus only in the second relative position by means of the rotary part on the rotary element.

25. Torque transmission device according to Claim 24 and according to Claim 23,
**characterized in that** axial adjustment forces can be exerted by the compensation spring (62) on the rotary part (38), for transfer of the rotary part from the first into the second relative position.

26. Torque transmission device according to one of Claims 22 to 25,
**characterized by** at least one pretensioning spring (220; 220') which exerts axial pretensioning forces on the or at least one actuating element or on an actuating bearing, in particular disengagement bearing or engagement bearing, of the actuating element, on the basis of which pretensioning spring (220; 220') a defined pretensioning force on the or an actuating bearing, in particular disengagement bearing (18; 30) or engagement bearing, of the actuating element can be set, in the case of a compensation spring preferably at least in at least one setting operational mode independently of a direct or indirect action of the compensation spring on the actuating element.

27. Torque transmission device according to Claim 26, **characterized in that** the pretensioning spring (220) acts between the body (34) or support element (12) on one hand and the actuating element on the other hand.

28. Torque transmission device according to Claim 26, **characterized in that** the actuating element (14) comprises a first sub-element (14a), the axial translational movement of which can be brought about by means of the rotational movement output to the rotary element, and a second sub-element (14b) which has the actuating bearing (18), between which sub-elements a wear-equalizing mechanism (220', 232, 234, 236) acts by means of which a relative axial position of the subelements can be set.

29. Torque transmission device according to Claim 12, **characterized in that** the pretensioning spring (220') acts between a sleeve part which is part of the second sub-element (14b) and a ball retainer ring (232) which has clamping balls (234) and which surrounds a coupling portion (230) of the first sub-element (14a) tapering in an axial direction.

30. Torque transmission device according to Claim 29, **characterized in that** the ball retainer ring (232) strikes against an unlocking stop (236) in the case of an axial movement of the actuating element in a specified axial direction which exceeds a specified or specifiable dimension and, in the case of further axial movement of the actuating element (14) in the specified axial direction, axial co-movement is prevented, corresponding to a relative movement of the ball retainer ring (232) in the tapering direction of the coupling portion (230), for unlocking of the current axial position of the sub-elements and setting of a new current axial position of the sub-elements (14a, 14b) with the assistance of the pretensioning spring (220').

31. Torque transmission device according to Claim 13, **characterized by** connection means (50, 52; 54, 56), which acts between the body part and the additional part and can preferably be used as a rotational guide, for fixing of a set setpoint rotational position.

32. Torque transmission device according to Claim 13 or 31, **characterized in that**, of the body part and the additional part, at least one has at least one elongated hole (52; 56) which extends in one rotational direction and at least the other has at least one bolt (50; 54) which engages in the elongated hole.

33. Torque transmission device according to Claim 16 **characterized in that** a sleeve-type ball retainer ring (12') as a joint support element is assigned a first and a second friction clutch assembly, and that an external threaded nut which interacts at least with some of the balls retained by the ball retainer ring and an internal threaded nut which interacts at least with some of the balls retained by the ball retainer ring serve as the first actuating element (14) assigned to the first friction clutch assembly and a second actuating element (22) assigned to the second friction clutch assembly.

34. Torque transmission device according to Claim 33, **characterized in that** the external threaded nut interacts with an external number of the balls, namely with balls retained on the outside on the ball retainer ring (12'), and the inner threaded nut interacts with an internal number of the balls, namely balls retained internally on the ball retainer ring (12').

35. Torque transmission device according to Claim 14, **characterized in that** the stator (250) of the actuator is arranged coaxially with respect to a holding sleeve (252) of a body (34) of the actuating device and is preferably held by the holding sleeve (252) on its inner circumference or outer circumference.

36. Torque transmission device according to Claim 35, **characterized in that** the holding sleeve (252) forms the support element (12) or holds said support element (12).

37. Torque transmission device according to one of Claims 14, 35 or 36,
**characterized in that** the actuator has a rotor (250) with a toothing which is coupled via at least one intermediate wheel (246) to a toothing of the rotary element, preferably a gearwheel segment (38) of the rotary element (22), or that the actuator has a rotor (256) which is connected or coupled directly to the rotary element (22), preferably by mutual engagement of a toothing of the rotor and a toothing of the rotary element, desirably a gearwheel segment of the rotary element.

38. Method for mounting a torque transmission device for the transmission of torque in a drivetrain of a motor vehicle between a drive unit and a transmission, comprising:
- a friction clutch device (120; 120'), comprising at least one friction clutch assembly (122, 124; 122', 124') which can optionally be actuated for engagement and disengagement;
- an actuating device (10; 10'), for the introduction of actuating forces, in particular engagement or disengagement forces, into the friction clutch device, in order to actuate at least one friction clutch assembly of the friction clutch device in the engagement or disengagement direction, the actuating device comprising:
-- at least one axially adjustable actuating element (14, 22; 14; 22) assigned to the or a friction clutch assembly and at least one substantially axially fixed support element (12) assigned to the actuating element, wherein, for actuation of the assigned friction clutch assembly, an axial translational movement of the actuating element can be brought about on the basis of a rotational movement output to a rotary element (12; 14; 22) of the actuating device or/and axial forces can be exerted on the actuating element by means of rotational forces exerted on the rotary element (12; 14; 22), with the actuating element or the support element serving as a rotary element or a rotary element which is separate from the actuating element and the support element and interacts with these being provided,
-- at least one actuator (44, 45; 44; 45) assigned to the rotary element and the friction clutch assembly, by means of which actuator first rotational forces can be exerted on the rotary element in order to actuate the friction clutch assembly,
-- desirably at least one compensation spring (60, 62; 60; 62) which is linked on one hand to the rotary element and on the other hand on an extension arm of a body of the actuating device in such a manner that two rotational forces based on a tensioning of the compensation spring can be exerted on the rotary element;
to form a structural unit,
comprising the steps:
A) providing the friction clutch device (100; 120') and the actuating device (10; 10') as separate, at least partially premounted structural units;
B) connecting an input side, which can be coupled to an output of the drive unit, of the clutch device by means of a support pivot bearing assembly (32) to the body (34) or/and the support element (12) or/and to a stator of the actuator assigned to the friction clutch assembly or an actuator holder which holds said actuator while producing an axial support relationship.
C) with rotation of the rotary element (12; 14; 22) or of the rotary elements, placing the actuating element or actuating elements on at least one force introduction element (134; 136; 134', 136), which co-rotates with the input side of the friction clutch device, of the assigned friction clutch assembly,
i) with setting of a defined preload which acts on a disengagement bearing (18; 30) or engagement bearing of the actuating element and is based on a second rotational force of the compensation spring or compensation springs exerted on the rotary element or the respective rotary element or/and on a force exerted on the rotary element or the respective rotary element or the actuating element or the respective actuating element by at least one pretensioning force or/and on a force exerted by the force introduction element,
or/and
ii) with equalization of an axial position tolerance of the force introduction element of the assigned friction clutch assembly relative to the input side.

39. Method according to Claim 38, furthermore comprising the step:
D) setting at least one of i) a defined top dead centre configuration for the compensation spring (60; 62) or the compensation springs (60, 62) and ii) an axial range of movement of the actuating element or of a respective axial range of movement of the actuating elements by setting at least one movement stop which restricts the axial range of movement directly or indirectly at least on one side.

40. Method according to Claim 38 or 39,
**characterized in that** in step C) a defined torque is exerted on the rotary element (14; 22) in order to place the actuating element (14; 22) on the force introduction element in a defined manner.

41. Method according to one of Claims 38 to 40,
**characterized in that** the preload is based on a force exerted by the force introduction element and is set by setting, in particular positioning and, where applicable, fixing, of an axial end stop for the actuating element or of a rotational end stop for the rotary element (14; 22).

42. Method according to one of Claims 38 to 41,
**characterized in that** a relative rotational position between at least one body part (34) and at least one additional part (46; 48) which can be fixed thereon is set, of which the additional part (46; 48) restricts at least on one side a rotational adjustment range of the or the respective rotary part by means of at least one stop or/and holds the or the respective actuator or/and has a linking point for the or the respective compensation spring and the body part (34) defines via the support element (12) arranged in a rotationally fixed manner thereon an axial position of the actuating element (14; 22) which corresponds to a stop rotational position of the rotary element (14; 22).

43. Method according to one of Claims 39 to 42,
**characterized in that** the top dead centre configuration is set on the basis of the previously carried out setting of the preload or of the previously performed equalization of the axial positional tolerance by fixing an outer linking point of the compensation spring to the extension arm or of an inner linking point of the compensation spring to or in relation to the rotary element.

44. Method according to one of Claims 39 to 43,
**characterized in that** the top dead centre configuration is produced by axial adjustment of a rotary part (38; 39) arranged on the rotary element (12; 22) in rotational driving engagement with the rotary element at a defined relative rotational position between the rotary element and the rotary part.

45. Method according to Claim 44,
**characterized in that** the compensation spring (60; 62) assigned to the rotary element (12; 22) is linked to the rotary part (38; 39) and thus is linked to the rotary element (12; 22) only after production of the rotational driving engagement by means of the rotary part so that the inner linking point is fixed relative to the rotary element (12; 22) by producing the rotational driving engagement.

46. Method according to one of Claims 38 to 45,
**characterized in that** a rotational adjustment range of the rotary element (12; 14; 22) or/and an axial adjustment range of the actuating element (14; 22) is set.

47. Method according to Claim 46,
**characterized in that** the rotational adjustment range is set by axial adjustment of a rotary part (202), which is arranged on the rotary element (12; 14) and can be rotated against at least one stationary stop (210, 212), in rotational driving engagement with the rotary element (12; 22).

48. Method according to one of Claims 38 to 47,
**characterized in that** the rotational drive connection is produced by axial adjustment of a rotary part (38, 39), which is arranged on the rotary element (12; 14) and can be rotationally driven by the actuator, in rotational driving engagement with the rotary element.

49. Method according to one of Claims 38 to 48,
**characterized in that** it is carried out in the course of the installation of the torque transmission device between a drive unit and a transmission, preferably with mounting of the body or at least a body part of the actuating unit on the transmission housing.

50. Method according to one of Claims 38 to 49,
**characterized in that** the torque transmission device is mounted to form an installation structural unit which can be installed as a unit without the need for at least partial renewed disassembly between a drive unit and a transmission in a drivetrain.

## Revendications

1. Dispositif de transfert de couple pour le transfert de couple dans une chaîne cinématique d'un véhicule automobile entre une unité d'entraînement et une transmission, comprenant .
- un dispositif d'embrayage à friction (120 ; 120'), comprenant au moins un agencement d'embrayage à friction (122, 124 ; 122', 124') pouvant être actionné de manière sélective pour l'embrayage et le débrayage ;
- un dispositif d'actionnement (10 ; 10'), pour introduire des forces d'actionnement, en particulier des forces d'embrayage ou de débrayage, dans le dispositif d'embrayage à friction, afin d'actionner au moins un agencement d'embrayage à friction du dispositif d'embrayage à friction dans le sens d'un embrayage ou d'un débrayage, le dispositif d'actionnement comprenant :
- au moins un organe d'actionnement (14, 22) réglable axialement, associé à l'agencement d'embrayage à friction ou à un agencement d'embrayage à friction et au moins un organe de support (12) fixé essentiellement axialement, associé à l'organe d'actionnement, l'organe d'actionnement, pour l'actionnement de l'agencement d'embrayage à friction associé, sur la base d'un mouvement de rotation créé par un organe rotatif (12 ; 14 ; 22) du dispositif d'actionnement, pouvant être animé d'un mouvement de translation axial et/ou par le biais de forces de rotation exercées sur l'organe rotatif (12 ; 14 ; 22), des forces axiales pouvant être exercées sur l'organe d'actionnement, l'organe d'actionnement ou l'organe de support servant d'organe rotatif ou un organe rotatif séparé par rapport à l'organe d'actionnement et à l'organe de support, coopérant avec ceux-ci, étant prévu,
- au moins un actionneur (44, 45 ; 44' ; 45') associé à l'organe rotatif et à l'agencement d'embrayage à friction, au moyen duquel actionneur des premières forces de rotation peuvent être exercées sur l'organe rotatif, afin d'actionner l'agencement d'embrayage à friction,
- au moins un ressort de compensation (60, 62), qui est articulé d'une part à l'organe rotatif et d'autre part à un bras d'un corps du dispositif d'actionnement, de telle sorte que des deuxièmes forces de rotation provenant d'une tension du ressort de compensation puissent être exercées sur l'organe rotatif ;
**caractérisé en ce que**
a) l'agencement d'embrayage à friction est du type normalement ouvert (NO) et sur la base de la tension du ressort de compensation, une deuxième force de rotation peut être exercée sur l'organe rotatif, de telle sorte qu'une force d'actionnement produite sans l'action d'une première force de rotation, introduite par le biais de l'organe d'actionnement dans le dispositif d'embrayage à friction, retienne l'embrayage à friction dans l'état embrayé (NC), ou
b) l'agencement d'embrayage à friction (122 ; 124 ; 122', 124') est du type normalement fermé (NC) et sur la base de la tension du ressort de compensation (60 ; 62), une deuxième force de rotation peut être exercée sur l'organe rotatif, de telle sorte qu'une force d'actionnement produite sans l'action d'une première force de rotation, introduite par le biais de l'organe d'actionnement dans le dispositif d'embrayage à friction, retienne l'embrayage à friction dans l'état débrayé (NO) .

2. Dispositif de transfert de couple selon la revendication 1, **caractérisé en ce que** le ressort de compensation (60 ; 62) est articulé dans une configuration de point mort haut d'une part à l'organe rotatif (12 ; 14 ; 22) et d'autre part au bras, de telle sorte que dans une première plage de positions de rotation de l'organe rotatif, les deuxièmes forces de rotation agissent dans un premier sens de rotation et que dans une deuxième plage de positions de rotation de l'organe rotatif, elles agissent dans un deuxième sens de rotation opposé au premier sens de rotation sur l'organe rotatif, la première plage de positions de rotation comprenant de préférence une position de rotation d'embrayage de l'organe rotatif dans laquelle l'agencement d'embrayage à friction associé (122 ; 124 ; 122' ; 124') est embrayé, et la deuxième plage de positions de rotation comprenant une position de rotation de débrayage de l'organe rotatif, dans laquelle l'agencement d'embrayage à friction associé (122 ; 124 ; 122' ; 124') est débrayé, et la deuxième force de rotation agissant de préférence dans la première plage de positions de rotation dans la direction de la position de rotation d'embrayage et la deuxième force de rotation agissant dans la deuxième plage de positions de rotation dans la direction de la position de rotation de débrayage.

3. Dispositif de transfert de couple selon l'une quelconque des revendications 1 ou 2, **caractérisé en ce que** le dispositif d'embrayage à friction est réalisé sous forme de dispositif d'embrayage à friction simple et présente exactement un agencement d'embrayage à friction, auquel est associé au moins un organe d'actionnement et au moins un actionneur et éventuellement au moins un ressort de compensation du dispositif d'actionnement, ou **en ce que** le dispositif d'embrayage à friction est réalisé sous forme de dispositif d'embrayage à friction double (120 ; 120') ou sous forme de dispositif d'embrayage à friction multiple et présente un premier agencement d'embrayage à friction auquel est associé au moins un premier organe d'actionnement (14) du dispositif d'actionnement et présente un deuxième agencement d'embrayage à friction auquel est associé au moins un deuxième organe d'actionnement (22) du dispositif d'actionnement, au premier dispositif d'embrayage à friction étant de préférence associé au moins un premier actionneur (44) et au moins un premier organe rotatif (14) et éventuellement au moins un premier ressort de compensation (60) du dispositif d'actionnement et au deuxième dispositif d'embrayage à friction étant de préférence associé au moins un deuxième actionneur (45) et au moins un deuxième organe rotatif (27) et éventuellement au moins un deuxième ressort de compensation (62) du dispositif d'actionnement.

4. Dispositif de transfert de couple selon l'une quelconque des revendications 1 à 3, **caractérisé en ce que** l'agencement d'embrayage à friction ou l'organe d'actionnement (14 ; 22) associé à l'agencement d'embrayage à friction respectif ou l'organe de support (12) associé à celui-ci sert d'organe rotatif.

5. Dispositif de transfert de couple selon la revendication 4, **caractérisé en ce que** l'organe d'actionnement (14 ; 22) monté à rotation par rapport à l'organe de support (12) de préférence stationnaire sert d'organe rotatif.

6. Dispositif de transfert de couple selon la revendication 4, **caractérisé en ce que** l'organe de support (12) monté à rotation par rapport à l'organe d'actionnement (14) sert d'organe de rotation.

7. Dispositif de transfert de couple selon la revendication 6, **caractérisé en ce que** l'organe de support (12) est connecté fixement axialement par le biais d'un agencement de palier rotatif (200) au corps (34) et/ou à un stator de l'actionneur associé à l'agencement d'embrayage à friction ou à une fixation d'actionneur retenant ce dernier, appartenant éventuellement au corps.

8. Dispositif de transfert de couple selon l'une quelconque des revendications 1 à 7, **caractérisé en ce que** l'organe rotatif (12) ou l'organe rotatif respectif (14 ; 22) est réalisé avec une denture, ou une première ou une deuxième denture respective, qui est en liaison d'entraînement en rotation ou qui peut être amenée en liaison d'entraînement en rotation directement ou indirectement par une prise de force (40 ; 42 ; 40') de l'actionneur associé ou du premier ou du deuxième actionneur associé, la denture étant de préférence prévue sur un segment de pignon ou sur un premier ou un deuxième segment de pignon.

9. Dispositif de transfert de couple selon la revendication 8, **caractérisé en ce qu'**une partie rotative (38 ; 39) séparée de l'organe rotatif et disposée sur celui-ci comprend la denture ou le segment de pignon, la partie rotative, dans une première position relative, étant désaccouplée de l'organe rotatif (12 ; 22) pour une rotation de l'organe rotatif indépendante de la partie rotative, et dans une deuxième position relative, étant accouplée à l'organe rotatif en vue d'une rotation commune, le ressort de compensation (60 ; 62) - s'il est prévu - associé à l'organe rotatif étant de préférence articulé à la partie rotative (38 ; 39) et donc à l'organe rotatif uniquement dans la deuxième position relative par l'intermédiaire de la partie rotative.

10. Dispositif de transfert de couple selon l'une quelconque des revendications précédentes, en particulier selon la revendication 9, **caractérisé par** au moins un ressort de précontrainte (220 ; 220') exerçant des forces de précontrainte axiales sur l'organe d'actionnement ou sur au moins un organe d'actionnement ou sur un palier d'actionnement, en particulier un palier de débrayage ou un palier d'embrayage, de l'organe d'actionnement, par le biais duquel ressort de précontrainte une force de précontrainte définie peut être ajustée sur le palier d'actionnement ou sur un palier d'actionnement, en particulier le palier de débrayage (18 ; 30) ou le palier d'embrayage, de l'organe d'actionnement (12 ; 14), dans le cas d'un ressort de compensation (60 ; 62) de préférence dans au moins un mode de fonctionnement d'ajustement, indépendamment d'un effet direct ou indirect du ressort de compensation sur l'organe d'actionnement.

11. Dispositif de transfert de couple selon la revendication 10, **caractérisé en ce que** l'organe d'actionnement (14) comprend un premier organe partiel (14a) qui peut être animé d'un mouvement de translation axial au moyen du mouvement de rotation produit par l'organe rotatif et un deuxième organe partiel (14b) présentant le palier d'actionnement (18), entre lesquels organes partiels agit un mécanisme de compensation de l'usure (220 ; 232, 234, 236), au moyen duquel une position axiale relative des organes partiels peut être ajustée.

12. Dispositif de transfert de couple selon la revendication 11, **caractérisé en ce que** le ressort de précontrainte (220') appartient au mécanisme de compensation de l'usure, le ressort de précontrainte, dans un premier état de fonctionnement, verrouillant une position axiale relative instantanée des organes partiels et, par le biais du ressort de précontrainte dans un deuxième état de fonctionnement, qui, dans le cas d'un ressort de compensation (60), correspond de préférence au mode de fonctionnement d'ajustement, une force de précontrainte définie pouvant être ajustée sur le palier d'actionnement, en particulier le palier de débrayage (18) ou le palier d'embrayage de l'organe d'actionnement (14).

13. Dispositif de transfert de couple selon l'une quelconque des revendications 1 à 12, **caractérisé en ce qu'**une position de rotation relative peut être ajustée entre au moins une partie du corps (34) et au moins une partie supplémentaire (46 ; 48) pouvant être fixée sur celle-ci, la partie supplémentaire (46 ; 48) limitant au moins d'un côté une plage de réglage de rotation de l'organe rotatif ou de l'organe rotatif respectif au moyen d'au moins une butée et/ou retenant l'actionneur ou l'actionneur respectif (44 ; 45) et/ou présentant un point d'articulation pour le ressort de compensation ou le ressort de compensation respectif (60 ; 62) et la partie du corps (34) définissant, par le biais de l'organe de support (12) disposé de manière solidaire en rotation sur celle-ci, une position axiale de l'organe d'actionnement (14 ; 22) correspondant à une position de rotation de butée de l'organe rotatif (14 ; 22).

14. Dispositif de transfert de couple selon l'une quelconque des revendications 1 à 13, **caractérisé en ce qu'**un stator (250) et un rotor (256) de l'actionneur (44') ou de l'actionneur respectif sont disposés coaxialement par rapport à l'organe rotatif (22) et/ou coaxialement par rapport à l'organe d'actionnement (22) et l'organe de support (12).

15. Dispositif de transfert de couple selon l'une quelconque des revendications 1 à 14, **caractérisé en ce que** l'organe de support (12) et l'organe d'actionnement (14 ; 22) forment ou comprennent un agencement de broche et d'écrou fileté, de préférence un agencement de vis à billes et d'écrou fileté à billes.

16. Dispositif de transfert de couple selon l'une quelconque des revendications 1 à 15, **caractérisé en ce que** l'organe de support (12') et l'organe d'actionnement (14 ; 22) forment ou comprennent un agencement de cage à billes et d'écrou fileté, dans lequel des billes retenues dans des positions définies par une cage à billes viennent en prise dans un filetage interne ou un filetage externe d'un écrou fileté guidé au moyen de la cage à billes et des billes axialement et radialement et dans la direction de rotation relative.

17. Dispositif de transfert de couple selon l'une quelconque des revendications 1 à 16, **caractérisé en ce qu'**au moins un ressort de butée (80, 82 ; 86, 88 ; 208) est prévu, lequel limite une plage de mouvement de rotation de l'organe rotatif et/ou une plage de réglage axial de l'organe d'actionnement d'un côté ou des deux côtés ou participe à cette limitation.

18. Dispositif de transfert de couple selon la revendication 17, **caractérisé en ce que** l'organe rotatif ou son segment de pignon (38 ; 39) est accouplé ou peut être accouplé par le biais d'un ressort de butée à une partie rotative (202) pouvant tourner coaxialement par rapport à l'organe rotatif en vue d'une rotation commune, la partie rotative pouvant tourner dans un sens de rotation ou dans les deux sens de rotation contre une butée stationnaire (210, 222).

19. Dispositif de transfert de couple selon la revendication 18, **caractérisé en ce que** le ressort de butée (208) vient en prise à la fois dans une fenêtre de ressort de l'organe rotatif ou de son segment de pignon (38 ; 39) ainsi que dans une fenêtre de ressort de la partie rotative (202).

20. Dispositif de transfert de couple selon l'une quelconque des revendications 1 à 19, **caractérisé en ce que** le dispositif d'embrayage à friction (120 ; 120') présente un côté d'entrée (144) accouplé ou pouvant être accouplé à une prise de force de l'unité d'entraînement et au moins un côté de sortie (148, 150 ; 180 ; 182) de l'agencement d'embrayage à friction accouplé ou pouvant être accouplé à un élément d'entrée, éventuellement un arbre d'entrée de transmission, de la transmission, et présente éventuellement un premier côté de sortie associé au premier agencement d'embrayage à friction et un deuxième côté de sortie associé au deuxième agencement d'embrayage à friction, le côté d'entrée étant connecté ou pouvant être connecté par le biais d'un agencement de palier rotatif de support (32) au corps (34) et/ou à l'organe de support et/ou à un stator de l'actionneur associé à l'agencement d'embrayage à friction ou à une fixation d'actionneur retenant celui-ci en créant une relation de support axial, et **en ce que** le dispositif d'embrayage à friction est prémonté ou peut être prémonté sous forme d'unité structurelle d'installation comprenant l'agencement d'embrayage à friction et le dispositif d'actionnement, laquelle peut être installée sous forme d'unité entre une unité d'entraînement et une transmission dans une chaîne cinématique sans nécessiter un nouveau démontage au moins partiel.

21. Dispositif de transfert de couple selon la revendication 20, **caractérisé en ce que** pour l'unité structurelle d'installation prémontée, au moins une, de préférence au moins deux, le plus préférablement toutes les conditions suivantes sont satisfaites :
a) dans l'unité structurelle d'installation prémontée est ajustée une charge préalable axiale définie agissant sur un palier d'embrayage ou un palier de débrayage (18 ; 30) de l'organe d'actionnement associé, laquelle charge préalable provient d'une deuxième force de rotation exercée sur l'organe rotatif ou sur l'organe rotatif respectif et/ou d'une force exercée par un organe d'introduction de force (134 ; 136 ; 134' ; 136') de l'agencement d'embrayage à friction associé et/ou d'une force axiale d'au moins un ressort de précontrainte (220 ; 220') ;
b) dans l'unité structurelle d'installation prémontée est ajustée une configuration de point mort haut définie par rapport au ressort de compensation (60 ; 62) ou aux ressorts de compensation (60 ; 62) ;
c) dans l'unité structurelle d'installation prémontée, l'organe d'actionnement (14 ; 22) ou l'organe d'actionnement respectif (14 ; 22) est positionné axialement de manière définie en vue de compenser une tolérance de position axiale de l'organe d'introduction de force de l'agencement d'embrayage à friction associé par rapport au côté d'entrée et par rapport au corps.

22. Dispositif de transfert de couple selon l'une quelconque des revendications précédentes, **caractérisé en ce que** l'organe rotatif est réalisé avec une denture, si on le souhaite sur un segment de pignon (38 ; 39), qui est ou peut être amenée en liaison d'entraînement en rotation directement ou indirectement avec une prise de force d'un actionneur associé (44), une partie rotative (38 ; 39) séparée par rapport à l'organe rotatif et disposée sur celui-ci comprenant la denture, la partie rotative, dans une première position relative, étant désaccouplée de l'organe rotatif (12 ; 22) pour une rotation de l'organe rotatif indépendante de la partie rotative, et dans une deuxième position relative, étant accouplée à l'organe rotatif en vue d'une rotation commune.

23. Dispositif de transfert de couple selon la revendication 22, **caractérisé en ce que** des formations d'entraînement de la partie rotative (38 ; 39) et de l'organe rotatif (12 ; 22) peuvent être amenées en engagement d'entraînement en rotation par un déplacement axial de la partie rotative par rapport à l'organe rotatif de la première dans la deuxième position relative.

24. Dispositif de transfert de couple selon la revendication 22 ou 23, **caractérisé en ce qu'**un ressort de compensation (60 ; 62) associé à l'organe rotatif est articulé à la partie rotative (38 ; 39) et de ce fait n'est articulé à l'organe rotatif que dans la deuxième position relative par l'intermédiaire de la partie rotative.

25. Dispositif de transfert de couple selon la revendication 24 et selon la revendication 23, **caractérisé en ce que** des forces de réglage axiales peuvent être exercées par le ressort de compensation (62) sur la partie rotative (38), en vue du transfert de la partie rotative de la première dans la deuxième position relative.

26. Dispositif de transfert de couple selon l'une quelconque des revendications 22 à 25, **caractérisé par** au moins un ressort de précontrainte (220 ; 220') exerçant des forces de précontrainte axiales sur l'organe d'actionnement ou sur au moins un organe d'actionnement ou sur un palier d'actionnement, en particulier le palier de débrayage ou le palier d'embrayage, de l'organe d'actionnement, par le biais duquel ressort de précontrainte une force de précontrainte définie peut être ajustée sur le palier d'actionnement ou sur un palier d'actionnement, en particulier sur le palier de débrayage (18, 30) ou sur le palier d'embrayage, de l'organe d'actionnement, dans le cas d'un ressort de compensation, de préférence au moins dans au moins un mode de fonctionnement d'ajustement indépendamment d'un effet direct ou indirect du ressort de compensation sur l'organe d'actionnement.

27. Dispositif de transfert de couple selon la revendication 26, **caractérisé en ce que** le ressort de précontrainte (220) agit entre le corps (34) ou l'organe de support (12) d'une part et l'organe d'actionnement d'autre part.

28. Dispositif de transfert de couple selon la revendication 26, **caractérisé en ce que** l'organe d'actionnement (14) comprend un premier organe partiel (14a) qui peut être animé d'un mouvement de translation axial au moyen du mouvement de rotation produit par l'organe rotatif et un deuxième organe partiel (14b) présentant le palier d'actionnement (18), entre lesquels organes partiels agit un mécanisme de compensation de l'usure (220' ; 232, 234, 236), au moyen duquel une position axiale relative des organes partiels peut être ajustée.

29. Dispositif de transfert de couple selon la revendication 12, **caractérisé en ce que** le ressort de précontrainte (220') agit entre une partie de douille associée au deuxième organe partiel (14b) et une cage à billes (232) présentant des billes de serrage (234), laquelle cage à billes entoure une portion d'accouplement (230) du premier organe partiel (14a) se rétrécissant dans une direction axiale.

30. Dispositif de transfert de couple selon la revendication 29, **caractérisé en ce que** la cage à billes (232), dans le cas d'un déplacement axial de l'organe d'actionnement dépassant une mesure prédéfinie ou prédéfinissable dans une direction axiale prédéfinie, bute contre une butée de déverrouillage (236) et dans le cas d'un déplacement axial poursuivi de l'organe d'actionnement (14) dans la direction axiale prédéfinie, ne peut pas être entraînée axialement en même temps, de manière correspondant à un déplacement relatif de la cage à billes (232) dans la direction du rétrécissement de la portion d'accouplement (230), en vue de déverrouiller la position axiale instantanée des organes partiels et d'ajuster une nouvelle position axiale instantanée des organes partiels (14a, 14b) sous l'action associée du ressort de précontrainte (220').

31. Dispositif de transfert de couple selon la revendication 13, **caractérisé par** des moyens de liaison (50, 52 ; 54, 56) pour la fixation d'une position rotative de consigne ajustée, agissant entre la partie de corps et la partie supplémentaire, de préférence pouvant être utilisés comme guide pour la rotation.

32. Dispositif de transfert de couple selon la revendication 13 ou 31, **caractérisé en ce que**, parmi la partie de corps et la partie supplémentaire, au moins l'une présente au moins un trou oblong (52 ; 56) s'étendant dans une direction de rotation et au moins l'autre présente au moins un boulon (50 ; 54) venant en prise dans le trou oblong.

33. Dispositif de transfert de couple selon la revendication 16, **caractérisé en ce qu'**une cage à billes en forme de douille (12') en tant qu'organe de support commun est associée à un premier et un deuxième agencement d'embrayage à friction et **en ce qu'**un écrou fileté extérieur coopérant au moins avec une quantité partielle des billes retenues par la cage à billes et un écrou fileté interne coopérant au moins avec une quantité partielle des billes retenues par la cage à billes servent de premier organe d'actionnement (14) associé au premier agencement d'embrayage à friction et de deuxième organe d'actionnement (22) associé au deuxième agencement d'embrayage à friction.

34. Dispositif de transfert de couple selon la revendication 33, **caractérisé en ce que** l'écrou fileté extérieur coopère avec une quantité partielle extérieure des billes, à savoir avec des billes retenues à l'extérieur sur la cage à billes (12') et l'écrou fileté intérieur coopère avec une quantité partielle intérieure des billes, à savoir avec des billes retenues à l'intérieur sur la cage à billes (12').

35. Dispositif de transfert de couple selon la revendication 14, **caractérisé en ce que** le stator (250) de l'actionneur est disposé coaxialement par rapport à une douille de retenue (252) d'un corps (34) du dispositif d'actionnement et est de préférence retenu par celle-ci sur sa périphérie interne ou sur sa périphérie externe.

36. Dispositif de transfert de couple selon la revendication 35, **caractérisé en ce que** la douille de retenue (252) forme ou retient l'organe de support (12).

37. Dispositif de transfert de couple selon l'une quelconque des revendications 14, 35 ou 36, **caractérisé en ce que** l'actionneur présente un rotor (250) avec une denture qui est accouplée par le biais d'au moins une roue intermédiaire (246) avec une denture de l'organe rotatif, de préférence un segment de pignon (38) de l'organe rotatif (22), ou **en ce que** l'actionneur présente un rotor (256) qui est connecté ou accouplé directement à l'organe rotatif (22), de préférence par engagement mutuel d'une denture du rotor et d'une denture de l'organe rotatif, et si on le souhaite à un segment de pignon de l'organe rotatif.

38. Procédé de montage d'un dispositif de transfert de couple pour le transfert de couple dans une chaîne cinématique d'un véhicule automobile entre une unité d'entraînement et une transmission, comprenant :
- un dispositif d'embrayage à friction (120 ; 120'), comprenant au moins un agencement d'embrayage à friction (122, 124 ; 122', 124') pouvant être actionné de manière sélective pour l'embrayage et le débrayage ;
- un dispositif d'actionnement (10 ; 10'), pour introduire des forces d'actionnement, en particulier des forces d'embrayage ou de débrayage, dans le dispositif d'embrayage à friction, afin d'actionner au moins un agencement d'embrayage à friction du dispositif d'embrayage à friction dans le sens d'un embrayage ou d'un débrayage, le dispositif d'actionnement comprenant :
- au moins un organe d'actionnement (14, 22 ; 14 ; 22) réglable axialement, associé à l'agencement d'embrayage à friction ou à un agencement d'embrayage à friction et au moins un organe de support (12) fixé essentiellement axialement, associé à l'organe d'actionnement, l'organe d'actionnement, pour l'actionnement de l'agencement d'embrayage à friction associé, sur la base d'un mouvement de rotation créé par un organe rotatif (12 ; 14 ; 22) du dispositif d'actionnement, pouvant être animé d'un mouvement de translation axial et/ou par le biais de forces de rotation exercées sur l'organe rotatif (12 ; 14 ; 22), des forces axiales pouvant être exercées sur l'organe d'actionnement, l'organe d'actionnement ou l'organe de support servant d'organe rotatif ou un organe rotatif séparé par rapport à l'organe d'actionnement et à l'organe de support, coopérant avec ceux-ci, étant prévu,
- au moins un actionneur (44, 45 ; 44 ; 45) associé à l'organe rotatif et à l'agencement d'embrayage à friction, au moyen duquel actionneur des premières forces de rotation peuvent être exercées sur l'organe rotatif, afin d'actionner l'agencement d'embrayage à friction,
- si on le souhaite au moins un ressort de compensation (60, 62 ; 60 ; 62), qui est articulé d'une part à l'organe rotatif et d'autre part à un bras d'un corps du dispositif d'actionnement, de telle sorte que des deuxièmes forces de rotation provenant d'une tension du ressort de compensation puissent être exercées sur l'organe rotatif ;
pour former une unité structurelle,
comprenant les étapes suivantes :
A) fournir le dispositif d'embrayage à friction (100 ; 120') et le dispositif d'actionnement (10 ; 10') sous forme d'unités structurelles séparées, au moins en partie prémontées ;
B) connecter un côté d'entrée du dispositif d'embrayage pouvant être accouplé à une prise de force de l'unité d'entraînement au moyen d'un agencement de palier rotatif de support (32) au corps (34) et/ou à l'organe de support (12) et/ou à un stator de l'actionneur associé à l'agencement d'embrayage à friction ou à une fixation d'actionneur retenant celui-ci en créant une relation de support axial ;
C) par rotation de l'organe rotatif (12 ; 14 ; 22) ou des organes rotatifs, application de l'organe d'actionnement ou des organes d'actionnement contre au moins un organe d'introduction de force (134, 136 ; 134', 136) de l'agencement d'embrayage à friction associé tournant conjointement avec le côté d'entrée du dispositif d'embrayage à friction,
i) en ajustant une charge préalable définie agissant sur un palier de débrayage (18 ; 30) ou un palier d'embrayage de l'organe d'actionnement, laquelle charge préalable provient d'une deuxième force de rotation du ressort de compensation ou des ressorts de compensation exercée sur l'organe rotatif ou sur l'organe rotatif respectif et/ou d'une force exercée par au moins un ressort de précontrainte sur l'organe rotatif ou l'organe rotatif respectif ou l'organe d'actionnement ou l'organe d'actionnement respectif et/ou d'une force exercée par l'organe d'introduction de force,
et/ou
ii) en compensant une tolérance de position axiale de l'organe d'introduction de force de l'agencement d'embrayage à friction associé par rapport au côté d'entrée.

39. Procédé selon la revendication 38, comprenant en outre l'étape :
D) ajuster au moins l'un parmi i) une configuration de point mort haut définie pour le ressort de compensation (60 ; 62) ou pour les ressorts de compensation (60, 62) et ii) une plage de déplacement axial de l'organe d'actionnement ou une plage de déplacement axial respective des organes d'actionnement par ajustement d'au moins une butée de déplacement limitant au moins d'un côté directement ou indirectement la région de déplacement axial.

40. Procédé selon la revendication 38 ou 39, **caractérisé en ce que** dans l'étape C), un couple défini est exercé sur l'organe rotatif (14 ; 22) afin d'appliquer de manière définie l'organe d'actionnement (14 ; 22) contre l'organe d'introduction de force.

41. Procédé selon l'une quelconque des revendications 38 à 40, **caractérisé en ce que** la charge préalable provient d'une force exercée par l'organe d'introduction de force et est ajustée par ajustement, en particulier positionnement et éventuellement fixation, d'une butée de fin de course axiale pour l'organe d'actionnement ou d'une butée de fin de course rotative pour l'organe rotatif (14 ; 22).

42. Procédé selon l'une quelconque des revendications 38 à 41, **caractérisé en ce qu'**une position de rotation relative est ajustée entre au moins une partie du corps (34) et au moins une partie supplémentaire (46 ; 48) pouvant être fixée sur celle-ci, la partie supplémentaire (46 ; 48) limitant au moins d'un côté une plage de réglage de rotation de la partie rotative ou de la partie rotative respective au moyen d'au moins une butée et/ou retenant l'actionneur ou l'actionneur respectif et/ou présentant un point d'articulation pour le ressort de compensation ou le ressort de compensation respectif et la partie du corps (34) définissant, par le biais de l'organe de support (12) disposé de manière solidaire en rotation sur celle-ci, une position axiale de l'organe d'actionnement (14 ; 22) correspondant à une position de rotation de butée de l'organe rotatif (14 ; 22).

43. Procédé selon l'une quelconque des revendications 39 à 42, **caractérisé en ce que** la configuration de point mort haut est ajustée sur la base de l'ajustement effectué préalablement de la charge préalable ou de la compensation effectuée préalablement de la tolérance de position axiale, par fixation d'un point d'articulation extérieur du ressort de compensation sur le bras ou d'un point d'articulation intérieur du ressort de compensation sur l'organe rotatif ou par rapport à l'organe rotatif.

44. Procédé selon l'une quelconque des revendications 39 à 43, **caractérisé en ce que** la configuration de point mort haut est créée par réglage axial d'une partie rotative (38 ; 39) disposée sur l'organe rotatif (12 ; 22) en engagement d'entraînement en rotation avec l'organe rotatif dans une position de rotation relative définie entre l'organe rotatif et la partie rotative.

45. Procédé selon la revendication 44, **caractérisé en ce que** le ressort de compensation (60 ; 62) associé à l'organe rotatif (12 ; 22) est articulé à la partie rotative (38 ; 39) et n'est donc articulé à l'organe rotatif (12 ; 22) qu'après la création de l'engagement d'entraînement en rotation par l'intermédiaire de la partie rotative, de telle sorte que par la création de l'engagement d'entraînement en rotation, le point d'articulation intérieur est fixé par rapport à l'organe rotatif (12 ; 22).

46. Procédé selon l'une quelconque des revendications 38 à 45, **caractérisé en ce qu'**une plage de réglage en rotation de l'organe rotatif (12 ; 14 ; 22) et/ou une plage de réglage axial de l'organe d'actionnement (14 ; 22) est/sont ajustée(s).

47. Procédé selon la revendication 46, **caractérisé en ce que** la plage de réglage en rotation est ajustée en engagement d'entraînement en rotation avec l'organe rotatif (12 ; 22) par réglage axial d'une partie rotative (202) disposée sur l'organe rotatif (12 ; 14) et pouvant tourner par rapport à au moins une butée stationnaire (210, 212).

48. Procédé selon l'une quelconque des revendications 38 à 47, **caractérisé en ce que** la liaison d'entraînement en rotation en engagement d'entraînement en rotation avec l'organe rotatif est établie par réglage axial d'une partie rotative (38, 39) disposée sur l'organe rotatif (12 ; 14) et pouvant être entraînée en rotation par l'actionneur.

49. Procédé selon l'une quelconque des revendications 38 à 48, **caractérisé en ce qu'**il est mis en oeuvre au cours de l'installation du dispositif de transfert de couple entre une unité d'entraînement et une transmission, de préférence par montage du corps ou d'au moins une partie du corps de l'unité d'actionnement sur le boîtier de transmission.

50. Procédé selon l'une quelconque des revendications 38 à 49, **caractérisé en ce que** le dispositif de transfert de couple est monté pour former une unité structurelle d'installation qui peut être installée sous forme d'unité entre une unité d'entraînement et une transmission dans une chaîne cinématique sans nécessiter un nouveau démontage au moins partiel.
